# EUROPEAN PATENT SPECIFICATION

(11) **EP 3 850 904 B1**
(45) Date of publication and mention of the grant of the patent: **31.01.2024**
(21) Application number: 20816783.3
(22) Date of filing: 06.11.2020
(51) Int. Cl.: H04W 76/15, H04W 36/36, H04W 36/00, H04W 88/08

(54) **ADDING AND MODIFYING CONDITIONAL CONFIGURATIONS AT A USER DEVICE**
HINZUFÜGEN UND MODIFIZIEREN VON BEDINGTEN KONFIGURATIONEN AN EINEM BENUTZERGERÄT
AJOUT ET MODIFICATION DE CONFIGURATIONS CONDITIONNELLES AU NIVEAU D'UN DISPOSITIF UTILISATEUR

(30) Priority: 07.11.2019 US 201962932432 P; 23.12.2019 US 201962953041 P
(43) Date of publication of application: 21.07.2021
(73) Proprietor: Google LLC, Mountain View, CA 94043 (US)
(72) Inventor: WU, Chih-Hsiang, Mountain View CA 94043 (US); HSIEH, Jing, Mountain View CA 94043 (US)
(74) Representative: Cupitt, Philip Leslie
(86) International application number: PCT/US2020/059298
(87) International publication number: WO 2021/092301

(56) References cited:
- WO-A1-2015/115964
- US-A1- 2018 124 612
- US-A1- 2019 098 678
- US-A1- 2019 223 073

## Description

This disclosure relates generally to wireless communications and, more particularly, to conditional procedures such as conditional handover and conditional secondary node addition procedures.

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

In telecommunication systems, the Packet Data Convergence Protocol (PDCP) sublayer of the radio protocol stack provides services such as transfer of user-plane data, ciphering, integrity protection, etc. For example, the PDCP layer defined for the Evolved Universal Terrestrial Radio Access (EUTRA) radio interface (see 3GPP specification TS 36.323) and New Radio (NR) (see 3GPP specification TS 38.323) provides sequencing of protocol data units (PDUs) in the uplink direction (from a user device, also known as a user equipment (UE), to a base station) as well as in the downlink direction (from the base station to the UE). Further, the PDCP sublayer provides signaling radio bearers (SRBs) and data radio bearers (DRBs) to the Radio Resource Control (RRC) sublayer. Generally speaking, the UE and a base station can use SRBs to exchange RRC messages as well as non-access stratum (NAS) messages, and can use DRBs to transport data on a user plane.

UEs can use several types of SRBs and DRBs. When operating in dual connectivity (DC), the cells associated with the base station operating the master node (MN) define a master cell group (MCG), and the cells associated with the base station operating as the secondary node (SN) define the secondary cell group (SCG). So-called SRB1 resources carry RRC messages, which in some cases include NAS messages over the dedicated control channel (DCCH), and SRB2 resources support RRC messages that include logged measurement information or NAS messages, also over the DCCH but with lower priority than SRB1 resources. More generally, SRB1 and SRB2 resources allow the UE and the MN to exchange RRC messages related to the MN and embed RRC messages related to the SN, and also can be referred to as MCG SRBs. SRB3 resources allow the UE and the SN to exchange RRC messages related to the SN, and can be referred to as SCG SRBs. Split SRBs allow the UE to exchange RRC messages directly with the MN via lower layer resources of the MN and the SN. Further, DRBs terminated at the MN and using the lower-layer resources of only the MN can be referred as MCG DRBs, DRBs terminated at the SN and using the lower-layer resources of only the SN can be referred as SCG DRBs, and DRBs terminated at the MCG but using the lower-layer resources of the MN, the SN, or both the MN and the SN can be referred to as split DRBs.

3GPP specification TS 37.340 (v15.7.0) describes procedures for a UE to add or change an SN in DC scenarios. These procedures involve messaging (e.g., RRC signaling and preparation) between radio access network (RAN) nodes. This messaging generally causes latency, which in turn increases the probability that the SN addition or SN change procedure will fail. These procedures, which do not involve conditions that are checked at the UE, can be referred to as "immediate" SN addition and SN change procedures.

UEs can also perform handover procedures to switch from one cell to another, whether in single connectivity (SC) or DC operation. The UE may handover from a cell of a first base station to a cell of a second base station, or from a cell of a first distributed unit (DU) of a base station to a cell of a second DU of the same base station, depending on the scenario. 3GPP specifications 36.300 v15.6.0 and 38.300 v15.6.0 describe a handover procedure that includes several steps (RRC signaling and preparation) between RAN nodes, which causes latency in the handover procedure and therefore increases the risk of handover failure. This procedure, which does not involve conditions that are checked at the UE, can be referred to as an "immediate" handover procedure.

More recently, for both SN addition/change and handover, "conditional" procedures have been considered (i.e., conditional SN addition/change and conditional handover). Unlike the "immediate" procedures discussed above, these procedures do not add or change the SN, or perform the handover, until the UE determines that a condition is satisfied. As used herein, the term "condition" may refer to a single, detectable state or event (e.g., a particular signal quality metric exceeding a threshold), or to a logical combination of such states or events (e.g., "Condition A and Condition B," or "(Condition A or Condition B) and Condition C", etc.). Moreover, the term "condition" may be used herein to refer to the condition in the abstract (e.g., signal quality being in a particular state), or to refer to a condition configuration (e.g., a digital representation/expression of the condition that can be transmitted and stored, etc.).

To configure a conditional procedure, the RAN provides the condition to the UE, along with a configuration (e.g., a set of random-access preambles, etc.) that will enable the UE to communicate with the appropriate base station, or via the appropriate cell, when the condition is satisfied. For a conditional addition of a base station as an SN, for example, the RAN provides the UE with a condition to be satisfied before the UE can add that base station as the SN, and a configuration that enables the UE to communicate with that base station after the condition has been satisfied.

In some scenarios, a UE can store multiple configurations associated with different conditional candidate RAN nodes or different candidate cells. Moreover, the UE can modify or release/remove these stored configurations. Currently, however, when the RAN sends a UE a configuration for a conditional procedure, the UE cannot reliably and consistently determine whether the UE should use the received configuration to modify a current configuration, or should instead add the received configuration as a new configuration. Thus, the UE may be configured improperly (e.g., in a manner that does not accord with the network state intended by the RAN) at any given time. Moreover, base stations are not currently equipped with any suitable way of managing the configurations for conditional procedures. Both of these issues can result in significant network inefficiencies (e.g., lower network capacity or average data rates, more radio link failures, etc.).

US 2019/223073 A1 relates to a method for a conditional handover (CHO). The method comprises receiving and storing, by a UE, one or more CHO commands from a source base station, the one or more CHO commands each having at least one triggering condition for conditional handover to one or more candidate target cells. According to an implementation described by US 2019/223073 A1, a CHO command ID may be used as an identification for a received CHO command.

### SUMMARY

Base stations and UEs of this disclosure implement techniques that enable a UE to determine whether, when the UE receives a conditional configuration from a base station of a RAN, the UE should (1) add the received configuration as a new configuration, or instead (2) use the received configuration to modify an existing configuration (i.e., to modify a configuration that was already stored at the UE and has not yet been released by the UE). As used herein, the term "conditional configuration" refers to a configuration associated with a condition that is to be satisfied before the UE can communicate with a candidate base station, or via a candidate cell, using that configuration. Using these techniques, for example, the UE can determine whether the UE should add a newly received configuration associated with a candidate SN (C-SN) as a new configuration, or instead use the received configuration to modify another conditional configuration that is already stored at the UE. In other implementations and/or scenarios, the UE can determine whether the UE should add a received configuration associated with a candidate handover/target cell as a new configuration, or instead use the received configuration to modify another conditional configuration that is already stored at the UE.

In some implementations, the RAN informs the UE whether a newly transmitted configuration is a new configuration, or a change to an existing configuration, by using a configuration identifier. After the RAN assigns a configuration identifier to a particular configuration, and sends the identifier and the configuration to the UE, the UE can inspect the identifier in order to add or modify a configuration as appropriate. As used herein, and unless a more specific meaning is clear from the context of its use, "assigning" a configuration identifier can refer to the act of initially choosing an identifier (i.e., for an entirely new configuration), or to the subsequent selection of a previously chosen/used identifier (i.e., when the RAN is attempting to modify an existing configuration). In various implementations, the configuration identifier may be an information element that the RAN also uses for other purposes (e.g., a Transaction ID, a Cell ID, or a Measurement identity), or may be an information element that is dedicated to the purpose of identifying/managing conditional configurations. The RAN can also use configuration identifiers to indicate to a UE which configurations should be released.

In other implementations, each time that the RAN decides to transmit a conditional configuration to the UE, and regardless of whether the conditional configuration is a new configuration or a change to an existing configuration, the RAN sends the UE a full set of conditional configurations (e.g., all conditional configurations that the RAN previously sent to the UE, and did not yet instruct the UE to release). Thus, rather than having to determine whether a newly received configuration corresponds to (i.e., is intended to be a change to) a particular existing configuration, the UE can simply replace all existing configurations with all configurations in the received set.

One example implementation of these techniques is a method in a user device communicating with a base station. The method includes receiving, by processing hardware of the user device and from the base station, (i) a configuration associated with a condition to be satisfied before the user device can communicate with a candidate base station, or via a candidate cell, using the configuration, and (ii) a configuration identifier. The method also includes determining, by the processing hardware and based on the configuration identifier, whether the configuration corresponds to any pre-existing configuration stored in the user device. The method also includes either (i) storing, by the processing hardware, the configuration as a new configuration in the user device, or (ii) using, by the processing hardware, the configuration to modify a pre-existing configuration already stored in the user device, based on whether the configuration corresponds to any pre-existing configuration stored in the user device.

Another example implementation of these techniques is a method in a user device configured to store configurations for communicating with candidate base stations or via candidate cells. The method includes receiving, by processing hardware of the user device and from a RAN, a conditional configuration set consisting of one or more configurations. Each of the one or more configurations is associated with (i) a respective candidate base station or a respective candidate cell, and (ii) a respective condition to be satisfied before the user device can communicate with the respective candidate base station, or via the respective candidate cell, in accordance with a first type of conditional procedure. The method also includes, in response to receiving the conditional configuration set, replacing (i) all pre-existing configurations that are stored in the user device and associated with conditions to be satisfied before the user device can communicate with particular candidate base stations, or via particular candidate cells, in accordance with the first type of conditional procedure with (ii) the one or more configurations in the conditional configuration set, irrespective of whether any configurations in the conditional configuration set correspond to any of the pre-existing configurations.

Another example implementation of these techniques is a method, in a RAN, that includes determining, by processing hardware of the RAN, to configure a conditional procedure that enables a user device to conditionally communicate with a candidate base station of the RAN or via a candidate cell of the RAN. The method also includes assigning, by the processing hardware, a configuration identifier to a configuration associated with (i) the candidate base station or the candidate cell and (ii) a condition to be satisfied before the user device can communicate with the candidate base station, or via the candidate cell, using the configuration. The method also includes causing the user device to, based on the configuration identifier, either (i) store the configuration as a new configuration, or (ii) use the configuration to modify a pre-existing configuration already stored at the user device, at least by transmitting the configuration and the configuration identifier to the user device.

Another example implementation of these techniques is a method, in a RAN, that includes maintaining, by processing hardware of the RAN, a conditional configuration set. The set includes all unreleased configurations associated with (i) a user device and (ii) conditions to be satisfied before the user device can communicate with a respective candidate base station, or via a respective candidate cell, in accordance with a first type of conditional procedure. The method also includes determining, by the processing hardware, to configure a first conditional procedure, of the first type, that enables the user device to conditionally communicate with a first candidate base station of the RAN or via a first candidate cell of the RAN. The method also includes adding, by the processing hardware, a first configuration to the conditional configuration set, the first configuration being associated with (i) the first candidate base station or the first candidate cell and (ii) a condition to be satisfied before the user device can communicate with the first candidate base station, or via the first candidate cell, using the first configuration and in accordance with the first type of conditional procedure. The method also includes, after adding the first configuration, causing the user device to replace (i) all pre-existing configurations that are stored in the user device and associated with conditions to be satisfied before the user device can communicate with particular candidate base stations, or via particular candidate cells, in accordance with the first type of conditional procedure with (ii) all configurations in the conditional configuration set, at least by transmitting the conditional configuration set to the user device.

### BRIEF DESCRIPTION OF THE DRAWINGS

Figs. 1A and 1B are block diagrams of example systems in which a radio access network (RAN) and a user device (UE) can implement techniques of this disclosure for managing configurations associated with conditional handover and/or conditional secondary node (SN) addition/change procedures;
Fig. 1C is a block diagram of an example base station in which a centralized unit (CU) and distributed units (DUs) can operate in the system of Fig. 1A or Fig. 1B;
Fig. 2 is a block diagram of an example protocol stack, according to which the UE of Fig. 1A or Fig. 1B may communicate with the base stations of Fig. 1A or Fig. 1B;
Figs. 3A through 3C are example message sequences corresponding to scenarios and/or implementations in which the RAN and UE use a Transaction ID as a configuration identifier for a conditional handover procedure;
Figs. 4A and 4B are example message sequences corresponding to scenarios and/or implementations in which the RAN and UE use a Cell ID as a configuration identifier for a conditional handover procedure;
Figs. 5A through 5D are example message sequences corresponding to scenarios and/or implementations in which the RAN and UE use a dedicated configuration identifier for a conditional handover procedure;
Figs. 6A through 6C are example message sequences corresponding to scenarios and/or implementations in which the RAN and UE use a Transaction ID as a configuration identifier for a conditional SN addition or SN change procedure;
Figs. 7A through 7C are example message sequences corresponding to scenarios and/or implementations in which the RAN and UE use a Cell ID as a configuration identifier for a conditional SN addition or SN change procedure;
Figs. 8A through 8F are example message sequences corresponding to scenarios and/or implementations in which the RAN and UE use a dedicated configuration identifier for a conditional SN addition or SN change procedure;
Figs. 9A through 9C are example message sequences corresponding to scenarios and/or implementations in which the RAN and UE use a configuration identifier to release a conditional configuration;
Figs. 10A and 10B are example message sequences corresponding to scenarios and/or implementations in which the RAN provides a full set of conditional handover configurations to the UE;
Figs. 11A through 11D are example message sequences corresponding to scenarios and/or implementations in which the RAN provides a full set of conditional SN configurations to the UE;
Fig. 12 is a flow diagram depicting an example method, implemented in a user device, of using a configuration identifier to maintain a correct set of conditional configurations;
Fig. 13 is a flow diagram depicting an example method, implemented in a RAN, of using a configuration identifier to facilitate maintenance, at the user device, of a correct set of conditional configurations;
Fig. 14 is a flow diagram depicting an alternative example method, implemented in a user device, of maintaining a correct set of conditional configurations; and
Fig. 15 is a flow diagram depicting an alternative example method, implemented in a RAN, of facilitating maintenance, at the user device, of a correct set of conditional configurations.

### DETAILED DESCRIPTION OF THE DRAWINGS

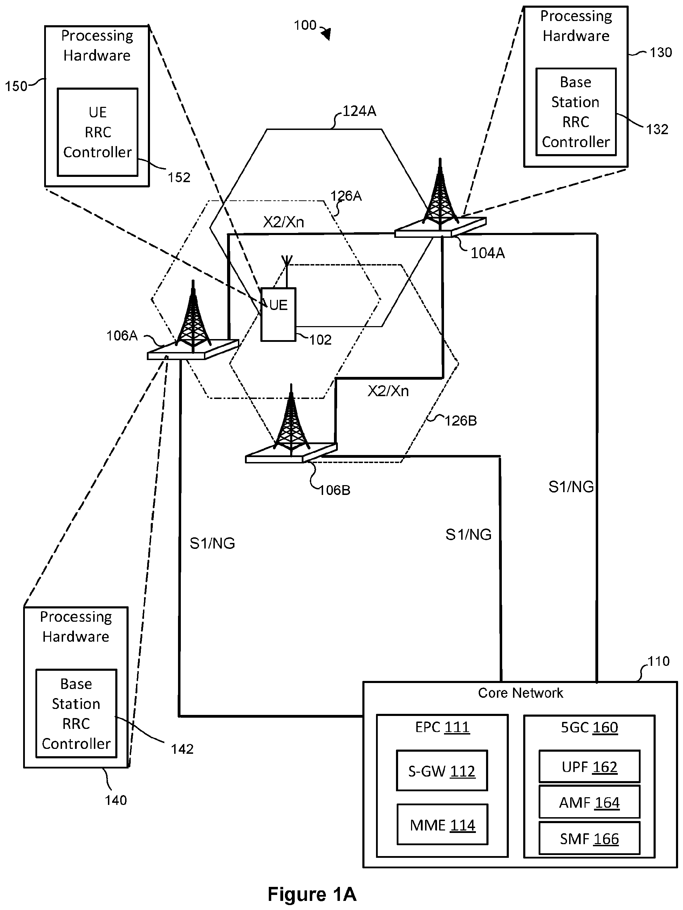

Fig. 1A depicts an example wireless communication system 100 that can implement conditional configuration management techniques of this disclosure. The wireless communication system 100 includes a UE 102, as well as base stations 104A, 106A, 106B that are connected to a core network (CN) 110. The base stations 104A, 106A, 106B can be any suitable type, or types, of base stations, such as an evolved node B (eNB), a next-generation eNB (ng-eNB), or a 5G Node B (gNB), for example. As just one more specific example, the base station 104A may be an eNB or a gNB, and the base station 106A and 106B may be gNBs.

The base station 104A supports a cell 124A, the base station 106A supports a cell 126A, and the base station 106B supports a cell 126B. The cell 124A partially overlaps with both of cells 126A, 126B, such that the UE 102 can be in range to communicate with base station 106A while simultaneously being in range to communicate with base station 106A or 106B (or in range to detect or measure the signal from both base stations 104A, 106A, etc.). The overlap makes it possible for the UE 102 to hand over between cells (e.g., from cell 124A to cell 126A or 126B) before the UE 102 experiences radio link failure. Moreover, the overlap allows the various dual connectivity (DC) scenarios discussed below. For example, the UE 102 can communicate in DC with the base station 104A (operating as an MN) and the base station 106A (operating as an SN) and, upon completing an SN change, can communicate with the base station 104A (operating as an MN) and the base station 106B (operating as an SN). More particularly, when the UE 102 is in DC with the base station 104A and the base station 106A, the base station 104A operates as an MeNB, an Mng-eNB or an MgNB, and the base station 106A operates as an SgNB or an Sng-eNB. In implementations and scenarios where the UE 102 is in SC with the base station 104A but is capable of operating in DC, the base station 104A operates as an MeNB, an Mng-eNB or an MgNB, and the base station 106A operates as a candidate SgNB (C-SgNB) or a candidate Sng-eNB (C-Sng-eNB). Although various scenarios are described below in which the base station 104A operates as an MN and the base station 106A (or 106B) operates as an SN or C-SN, any of the base stations 104A, 106A, 106B generally can operate as an MN, an SN or a C-SN in different scenarios. Thus, in some implementations, the base station 104A, the base station 106A, and the base station 106B can implement similar sets of functions and each support MN, SN and C-SN operations.

In operation, the UE 102 can use a radio bearer (e.g., a DRB or an SRB) that at different times terminates at an MN (e.g., the base station 104A) or an SN (e.g., the base station 106A). The UE 102 can apply one or more security keys when communicating on the radio bearer, in the uplink (from the UE 102 to a base station) and/or downlink (from a base station to the UE 102) direction.

The base station 104A includes processing hardware 130, which may include one or more general-purpose processors (e.g., central processing units (CPUs)) and a computer-readable memory storing machine-readable instructions executable on the general-purpose processor(s), and/or special-purpose processing units. The processing hardware 130 in the example implementation of Fig. 1A includes a base station RRC controller 132 that is configured to manage or control RRC procedures and RRC configurations. For example, the base station RRC controller 132 may be configured to support RRC messaging associated with immediate and conditional handover procedures, and/or to support the necessary operations when the base station 104A operates as an MN, as discussed below. Moreover, in some implementations and/or scenarios, the base station RRC controller 132 may be responsible for maintaining (for the UE 102 and a number of other UEs not shown in Fig. 1A) current sets of conditional configurations in accordance with various implementations discussed below.

The base station 106A includes processing hardware 140, which may include one or more general-purpose processors (e.g., CPUs) and a computer-readable memory storing machine-readable instructions executable on the general-purpose processor(s), and/or special-purpose processing units. The processing hardware 140 in the example implementation of Fig. 1A includes a base station RRC controller 142 that is configured to manage or control RRC procedures and RRC configurations. For example, the base station RRC controller 142 may be configured to support RRC messaging associated with immediate and conditional handover procedures, and/or to support the necessary operations when the base station 106A operates as an SN or candidate SN (C-SN), as discussed below. Moreover, in some implementations and/or scenarios, the base station RRC controller 142 may be responsible for maintaining (for the UE 102 and a number of other UEs not shown in Fig. 1A) current sets of conditional configurations in accordance with various implementations discussed below. While not shown in Fig. 1A, the base station 106B may include processing hardware similar to the processing hardware 140 of the base station 106A.

The UE 102 includes processing hardware 150, which may include one or more general-purpose processors (e.g., CPUs) and a computer-readable memory storing machine-readable instructions executable on the general-purpose processor(s), and/or special-purpose processing units. The processing hardware 150 in the example implementation of Fig. 1A includes a UE RRC controller 152 that is configured to manage or control RRC procedures and RRC configurations. For example, the UE RRC controller 152 may be configured to support RRC messaging associated with immediate and conditional handover and/or secondary node addition/modification procedures, and may also be responsible for maintaining a current set of conditional configurations for the UE 102 (e.g., adding, releasing or modifying conditional configurations as needed) in accordance with any of the implementations discussed below.

The CN 110 may be an evolved packet core (EPC) 111 or a fifth-generation core (5GC) 160, both of which are depicted in Fig. 1A. The base station 104A may be an eNB supporting an S1 interface for communicating with the EPC 111, an ng-eNB supporting an NG interface for communicating with the 5GC 160, or as a base station that supports the NR radio interface as well as an NG interface for communicating with the 5GC 160. The base station 106A may be an EN-DC gNB (en-gNB) with an S1 interface to the EPC 111, an en-gNB that does not connect to the EPC 111, a gNB that supports the NR radio interface as well as an NG interface to the 5GC 160, or an ng-eNB that supports an EUTRA radio interface as well as an NG interface to the 5GC 160. To directly exchange messages with each other during the various scenarios discussed below, the base stations 104A, 106A, 106B may support an X2 or Xn interface.

Among other components, the EPC 111 can include a Serving Gateway (S-GW) 112 and a Mobility Management Entity (MME) 114. The S-GW 112 is generally configured to transfer user-plane packets related to audio calls, video calls, Internet traffic, etc., and the MME 114 is generally configured to manage authentication, registration, paging, and other related functions. The 5GC 160 includes a User Plane Function (UPF) 162 and an Access and Mobility Management Function (AMF) 164, and/or a Session Management Function (SMF) 166. The UPF 162 is generally configured to transfer user-plane packets related to audio calls, video calls, Internet traffic, etc., the AMF 164 is generally configured to manage authentication, registration, paging, and other related functions, and the SMF 166 is generally configured to manage PDU sessions.

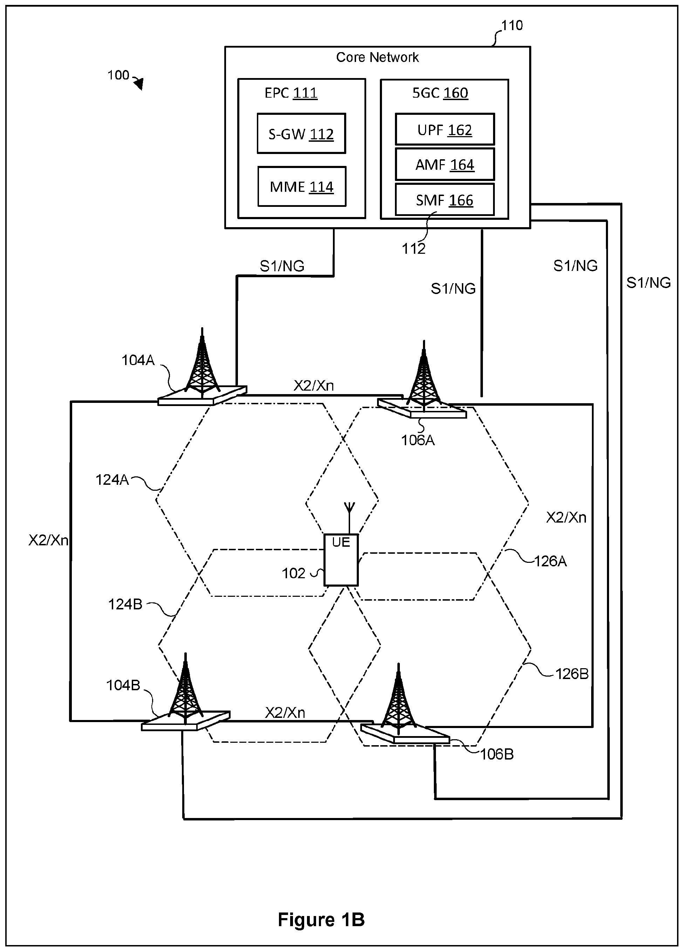

Generally, the wireless communication system 100 may include any suitable number of base stations supporting NR cells and/or EUTRA cells. More particularly, the EPC 111 or the 5GC 160 can be connected to any suitable number of base stations supporting NR cells and/or EUTRA cells. For example, an additional base station is considered in immediate and conditional handover scenarios that are discussed below with reference to Fig. 1B. Although the examples below refer specifically to specific CN types (EPC, 5GC) and RAT types (5G NR and EUTRA), in general the techniques of this disclosure can also apply to other suitable radio access and/or core network technologies, such as sixth generation (6G) radio access and/or 6G core network or 5G NR-6G DC, for example.

As indicated above, the wireless communication system 100 may support various procedures (e.g., handover, SN addition, etc.) and modes of operation (e.g., SC or DC). Example operation of various procedures that may be implemented in the wireless communication system 100 will now be described.

In some implementations, the wireless communication system 100 supports immediate handovers between cells. In one scenario, for example, the UE 102 initially connects to the base station 104A, and the base station 104A later performs preparation for an immediate handover with the base station 106A via an interface (e.g., X2 or Xn). In this scenario, the base stations 104A and 106A operate as a source base station and a target base station, respectively. In the handover preparation, the source base station 104A sends a *Handover Request* message to the target base station 106A. In response, the target base station 106A includes an immediate handover command message in a *Handover Request Acknowledge* message, and sends the *Handover Request Acknowledge* message to the source base station 104A. The source base station 104A then transmits the handover command message to the UE 102 in response to receiving the *Handover Request Acknowledge* message.

Upon receiving the immediate handover command message, the UE 102 immediately reacts to the immediate handover command, by attempting to connect to the target base station 106A. To connect to the target base station 106A, the UE 102 may perform a random access procedure with the target base station 106A, and then (after gaining access to a control channel) transmit a handover complete message to the target base station 106A via a cell of the base station 106A (i.e., in response to the immediate handover command).

In some implementations, the wireless communication system 100 also supports conditional handovers. In one scenario, for example, the UE 102 initially connects to the base station 104A, and the base station 104A later performs a first conditional handover preparation procedure with the base station 106A via an interface (e.g., X2 or Xn) to prepare for a potential handover of the UE 102 to the base station 106A. In this scenario, the base stations 104A and 106A operate a source base station and a candidate base station, respectively. In the first conditional handover preparation procedure, the source base station 104A sends a *Handover Request* message to the candidate base station 106A. In response, the candidate base station 106A includes a first conditional handover command message in a *Handover Request Acknowledge* message, and sends the *Handover Request Acknowledge* message to the source base station 104A. The source base station 104A then transmits the first conditional handover command message to the UE 102, in response to receiving the *Handover Request Acknowledge* message.

Upon receiving the first conditional handover command message, the UE 102 does not immediately react to the first conditional handover command message by attempting to connect to the candidate base station 106A. Instead, the UE 102 connects to the candidate base station 106A according to the first conditional handover command message only if the UE 102 determines that a first condition is satisfied for handing over to a candidate cell 126A of the candidate base station 106A. The base station 106A provides a configuration for the candidate cell 126A (i.e., a configuration that the UE 102 can use to connect with the base station 106A via the candidate cell 126A) in the first conditional handover command message.

Before the first condition is met, the UE 102 has not yet connected to the candidate base station 106A. In other words, the candidate base station 106A has not yet connected and served the UE 102. In some implementations, the first condition can be that a signal strength/quality, as measured by the UE 102 on the candidate cell 126A of the candidate base station 106A, is "good" enough. For example, the first condition may be satisfied if one or more measurement results obtained by the UE 102 (when performing measurements on the candidate cell 126A) are above a threshold that is configured by the source base station 104A, or above a pre-determined or pre-configured threshold. If the UE 102 determines that the first condition is satisfied, the candidate base station 106A becomes the target base station 106A for the UE 102, and the UE 102 attempts to connect to the target base station 106A. To connect to the target base station 106A, the UE 102 may perform a random access procedure with the target base station 106A, and then (after gaining access to a control channel) transmit a first handover complete message via the candidate cell 126A to the target base station 106A. After the UE 102 successfully completes the random access procedure and/or transmits the first handover complete message, the target base station 106A becomes the source base station 106A for the UE 102, and the UE 102 starts communicating data with the source base station 106A.

In some implementations and/or scenarios, conditional handovers can occur with more than one candidate cell supported by the candidate base station 106A (e.g., cell 126A and another cell of base station 106A not shown in Fig. 1A). In one such scenario, the base station 106A may provide a configuration of an additional candidate cell of the base station 106A, in addition to a configuration of the candidate cell 126A, in the first conditional handover command message. The UE 102 may then monitor whether a second condition is met for the additional candidate cell of the candidate base station 106A, while also monitoring whether the first condition is met for the candidate cell 126A. The second condition can be the same as or different from the first condition.

In another scenario, the base station 104A also performs a second conditional handover preparation procedure with the base station 106A via the interface (e.g., X2 or Xn), to prepare a potential handover of the UE 102 to the base station 106A, in a procedure similar to that described above. In this scenario, however, the base station 104A also transmits to the UE 102 a second conditional handover command message that the base station 104A received from the candidate base station 106A, for the potential handover in the second conditional handover preparation. The base station 106A may provide a configuration of an additional candidate cell (not shown in Fig. 1A) in the second handover command message. The UE 102 may monitor whether a second condition is met for the additional candidate cell of the candidate base station 106A. The second condition can be the same as or different from the first condition.

The base station 104A may also perform a third conditional handover preparation procedure with the base station 106B via an interface (e.g., X2 or Xn), to prepare a potential handover of the UE 102 to the base station 106B, in a procedure similar to that described above. In this scenario, the base station 104A transmits to the UE 102 a third conditional handover command message, which the base station 104A received from the candidate base station 106B for the potential handover in the third conditional handover preparation. The base station 106A may provide a configuration of a candidate cell 126B in the third handover command message. The UE 102 may monitor whether a third condition is met for the candidate cell 126B of the candidate base station 106B. The third condition can be the same as or different from the first and/or second conditions. The conditional handover command messages above can be RRC reconfiguration messages, or may be replaced by conditional handover configurations that are information elements (IEs).

In some implementations, the wireless communication system 100 supports DC operation, including SN addition and SN change procedures. In one scenario, for example, after the UE 102 connects to the base station 104A, the base station 104A can perform an immediate SN addition procedure to add the base station 106A as a secondary node, thereby configuring the UE 102 to operate in DC with the base stations 104A and 106A. At this point, the base stations 104A and 106A operate as an MN and an SN, respectively. Later, while the UE 102 is still in DC with the MN 104A and the SN 106A, the MN 104A may perform an immediate SN change procedure to change the SN of the UE 102 from the base station 106A (which may be referred to as the source SN or S-SN) to the base station 106B (which may be referred to as the target SN or T-SN).

In other scenarios, the base station 104A may perform a conditional SN addition procedure to configure the base station 106A as a candidate SN (C-SN) for the UE 102, while the UE 102 is in single connectivity (SC) with the base station 104A, or while the UE 102 is in DC with the base stations 104A and 106B, and before the UE 102 has connected to the C-SN 106A. In this case, the base stations 104A and 106A operate as an MN and a C-SN, respectively, for the UE 102. When the UE 102 receives the configuration for the C-SN 106A, the UE 102 does not connect to the C-SN 106A unless and until the UE 102 detects that the corresponding condition is satisfied. If the UE 102 determines that the condition is satisfied, the UE 102 connects to the C-SN 106A, such that the C-SN 106A becomes the SN 106A for the UE 102.

In some implementations, the condition can be that a signal strength/quality, as measured by the UE 102 on a candidate primary secondary cell (C-PSCell) of the C-SN 106A, is "good" enough. For example, the first condition may be satisfied if one or more measurement results obtained by the UE 102 (when performing measurements on the C-PSCell) are above a threshold that is configured by the MN 104A, or above a pre-determined or pre-configured threshold. If the UE 102 determines that first condition is satisfied, the UE 102 may perform a random access procedure with the C-SN 106A to connect to the C-SN 106A. Once the UE 102 successfully completes the random access procedure, the base station 106A becomes an SN for the UE 102, and the C-PSCell (e.g., cell 126A) becomes a PSCell for the UE 102. The SN 106A may then start communicating data with the UE 102.

Yet another scenario relates to a conditional PSCell change. In this scenario, the UE 102 is initially in DC with the MN 104 (via a primary cell (PCell)) and the SN 106A (via a PSCell, not shown in Fig. 1A, that is different than cell 126A). The SN 106A can provide a configuration for the C-PSCell 126A, for the UE 102. If the UE 102 is configured to a signaling radio bearer (SRB) that permits the exchange of RRC messages with the SN 106A (e.g., SRB3), the SN 106A may transmit the configuration for the C-PSCell 126A to the UE 102 directly via the SRB, or via the MN 104. The SN 106A may transmit the configuration in response to one or more measurement results received from the UE 102 via the SRB, or in response to one or more measurement results obtained by the SN 106A from measurements on signals received from the UE 102, for example.

In contrast to the immediate PSCell change case discussed above, the UE 102 does not immediately disconnect from the PSCell and attempt to connect to the C-PSCell 126A after receiving the configuration for the C-PSCell 126A. Instead, the UE 102 does not connect to the C-PSCell 126A until the UE 102 determines that a certain condition is satisfied. When the UE 102 determines that the condition has been satisfied, the UE 102 connects to the C-PSCell 126A, such that the C-PSCell 126A begins to operate as the PSCell 126A for the UE 102. In some implementations, the UE 102 disconnects from the PSCell in order to connect to the C-PSCell 126A.

In some scenarios, the condition associated with conditional SN addition or conditional PSCell change can be that signal strength/quality, as measured by the UE 102 on a C-PSCell of the C-SN 106A, exceeds a certain threshold or otherwise corresponds to an acceptable measurement. For example, when the one or more measurement results that the UE 102 obtains on the C-PSCell 126A are above a threshold configured by the MN 104 or the C-SN 106A, or above a pre-determined or pre-configured threshold, the UE 102 may determine that the condition is satisfied. When the UE 102 determines that such a condition is satisfied, the UE 102 can perform a random access procedure on the C-PSCell 126A and with the C-SN 106A to connect to the C-SN 106A. Once the UE 102 successfully completes the random access procedure on the C-PSCell 126A, the C-PSCell 126A becomes a PSCell 126A for the UE 102. The C-SN 106A can then start communicating data (user-plane data and/or control-plane data) with the UE 102 through the PSCell 126A.

In different configurations or scenarios of the wireless communication system 100, the base station 104A may operate as a master eNB (MeNB) or a master gNB (MgNB), and the base station 106A or 106B can be implemented as a secondary gNB (SgNB) or a candidate SgNB (C-SgNB). The UE 102 may communicate with the base station 104A and the base station 106A or 106B via the same radio access technology (RAT), such as EUTRA or NR, or via different RATs. If the base station 104A is an MeNB and the base station 106A is an SgNB, the UE 102 may be in EUTRA-NR DC (EN-DC) with the MeNB and the SgNB. In this scenario, the MeNB 104A may or may not configure the base station 106B as a C-SgNB to the UE 102. When the base station 104A is an MeNB and the base station 106A is a C-SgNB for the UE 102, the UE 102 may be in SC with the MeNB. In this scenario, the MeNB 104 may or may not configure the base station 106B as another C-SgNB to the UE 102.

In some cases, an MeNB, an SeNB or a C-SgNB may be implemented as an ng-eNB rather than an eNB. When the base station 104A is a master ng-eNB (Mng-eNB) and the base station 106A is a SgNB, the UE 102 may be in next generation (NG) EUTRA-NR DC (NGEN-DC) with the Mng-eNB and the SgNB. In this scenario, the MeNB 104A may or may not configure the base station 106B as a C-SgNB to the UE 102. When the base station 104A is an Mng-NB and the base station 106A is a C-SgNB for the UE 102, the UE 102 may be in SC with the Mng-NB. In this scenario, the Mng-eNB 104A may or may not configure the base station 106B as another C-SgNB to the UE 102.

When the base station 104A is an MgNB and the base station 106A is an SgNB, the UE 102 may be in NR-NR DC (NR-DC) with the MgNB and the SgNB. In this scenario, the MeNB 104A may or may not configure the base station 106B as a C-SgNB to the UE 102. When the base station 104A is an MgNB and the base station 106A is a C-SgNB for the UE 102, the UE 102 may be in SC with the MgNB. In this scenario, the MgNB 104A may or may not configure the base station 106B as another C-SgNB to the UE 102.

When the base station 104A is an MgNB and the base station 106A is a secondary ng-eNB (Sng-eNB), the UE 102 may be in NR-EUTRA DC (NE-DC) with the MgNB and the Sng-eNB. In this scenario, the MgNB 104A may or may not configure the base station 106B as a C-Sng-eNB to the UE 102. When the base station 104A is an MgNB and the base station 106A is a candidate Sng-eNB (C-Sng-eNB) for the UE 102, the UE 102 may be in SC with the MgNB. In this scenario, the MgNB 104A may or may not configure the base station 106B as another C-Sng-eNB to the UE 102.

Fig. 1B illustrates another implementation of the wireless communication system 100, where the CN 110 is connected to the base station 104B in addition to the base stations 104A, 106A, 106B. The base station 104B may be similar to the base station 104A as discussed above with reference to Fig. 1A, and possibly also similar to the base stations 106A and/or 106B. The base station 104B supports a cell 124B. The cells 124B and 124A may partially overlap, such that the UE 102 can detect or measure the signal from both the base station 104B and the base station 104A while in a fixed location. In some implementations, the base stations 104A, 104B, 106A and/or 106B support one or more additional cells not shown in Fig. 1B. The base stations 104A, 104B, 106A, 106B may support immediate handover, conditional handover, immediate SN addition/change procedures, and/or conditional SN addition/change procedures, such as those discussed above and as discussed in further detail below.

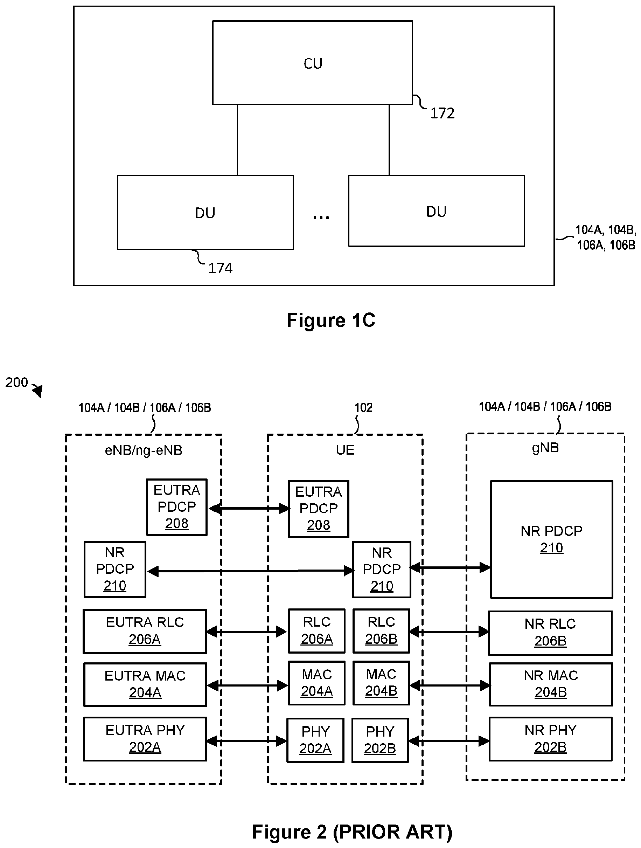

Fig. 1C depicts an example, distributed implementation of any one or more of the base stations 104A, 104B, 106A, 106B. In this implementation, the base station 104A, 104B, 106A or 106B includes a centralized unit (CU) 172 and one or more distributed units (DUs) 174. The CU 172 includes processing hardware, such as one or more general-purpose processors (e.g., CPUs) and a computer-readable memory storing machine-readable instructions executable on the general-purpose processor(s), and/or special-purpose processing units. For example, the CU 172 may include the processing hardware 130 or 140 of Fig. 1A. The processing hardware may include a base station RRC controller (e.g., controller 142) configured to manage or control one or more RRC configurations and/or RRC procedures when the base station (e.g., base station 106A) operates as an SN or a candidate SN (C-SN).

Each of the DUs 174 also includes processing hardware that can include one or more general-purpose processors (e.g., CPUs) and computer-readable memory storing machine-readable instructions executable on the one or more general-purpose processors, and/or special-purpose processing units. For example, the processing hardware may include a medium access control (MAC) controller configured to manage or control one or more MAC operations or procedures (e.g., a random access procedure), and a radio link control (RLC) controller configured to manage or control one or more RLC operations or procedures when the base station (e.g., base station 106A) operates as an MN, an SN, or a C-SN. The processing hardware may also include a physical layer controller configured to manage or control one or more physical layer operations or procedures.

Fig. 2 illustrates, in a simplified manner, an example radio protocol stack 200 according to which the UE 102 may communicate with an eNB/ng-eNB or a gNB (e.g., one or more of the base stations 104A, 104B, 106A, 106B). In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to the EUTRA PDCP sublayer 208 and, in some cases, to the NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides RLC channels to the NR PDCP sublayer 210. The UE 102, in some implementations, supports both the EUTRA and the NR stack as shown in Fig. 2, to support handover between EUTRA and NR base stations and/or to support DC over EUTRA and NR interfaces. Further, as illustrated in Fig. 2, the UE 102 can support layering of NR PDCP sublayer 210 over the EUTRA RLC sublayer 206A.

The EUTRA PDCP sublayer 208 and the NR PDCP sublayer 210 receive packets (e.g., from an Internet Protocol (IP) layer, layered directly or indirectly over the PDCP layer 208 or 210) that can be referred to as service data units (SDUs), and output packets (e.g., to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide SRBs to exchange RRC messages, for example. On a user plane, the EUTRA PDCP sublayer 208 and the NR PDCP sublayer 210 can provide DRBs to support data exchange.

In scenarios where the UE 102 operates in EUTRA/NR DC (EN-DC), with the base station 104A operating as an MeNB and the base station 106A operating as an SgNB, the wireless communication system 100 can provide the UE 102 with an MN-terminated bearer that uses the EUTRA PDCP sublayer 208, or an MN-terminated bearer that uses the NR PDCP sublayer 210. The wireless communication system 100 in various scenarios can also provide the UE 102 with an SN-terminated bearer, which uses only the NR PDCP sublayer 210. The MN-terminated bearer can be an MCG bearer or a split bearer. The SN-terminated bearer can be an SCG bearer or a split bearer. The MN-terminated bearer can be an SRB (e.g., SRB1 or SRB2) or a DRB. The SN-terminated bearer can an SRB or a DRB.

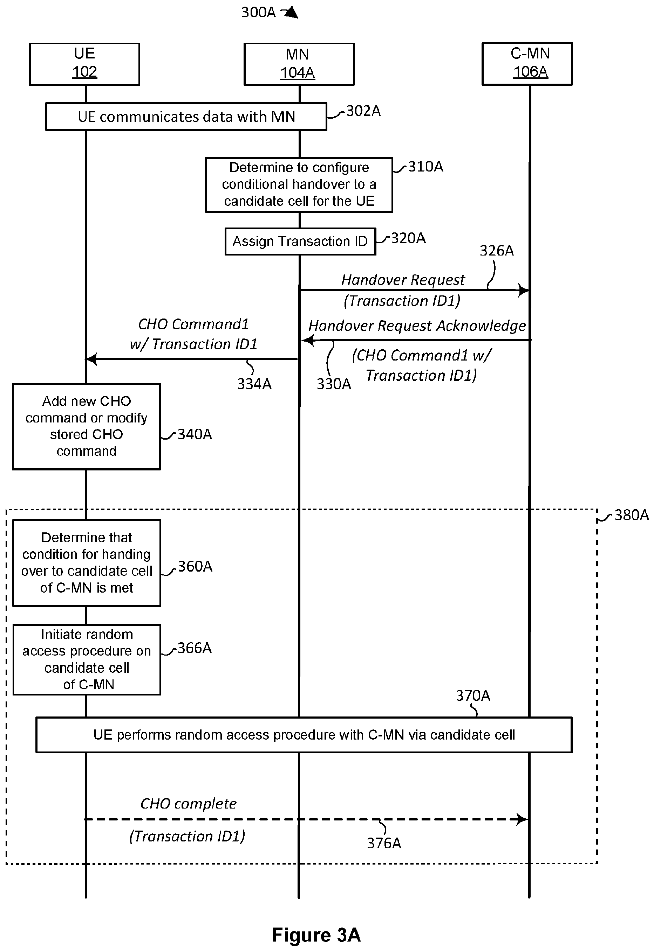

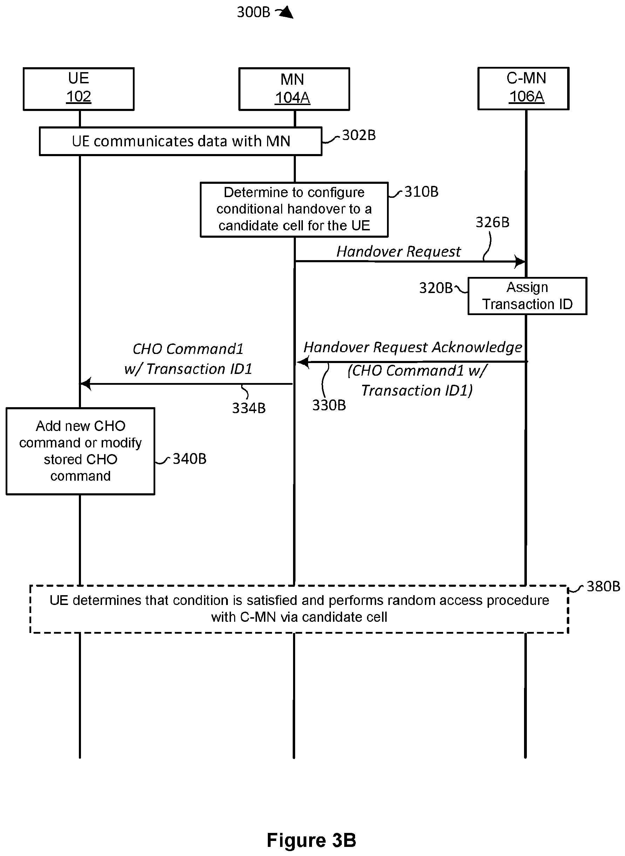

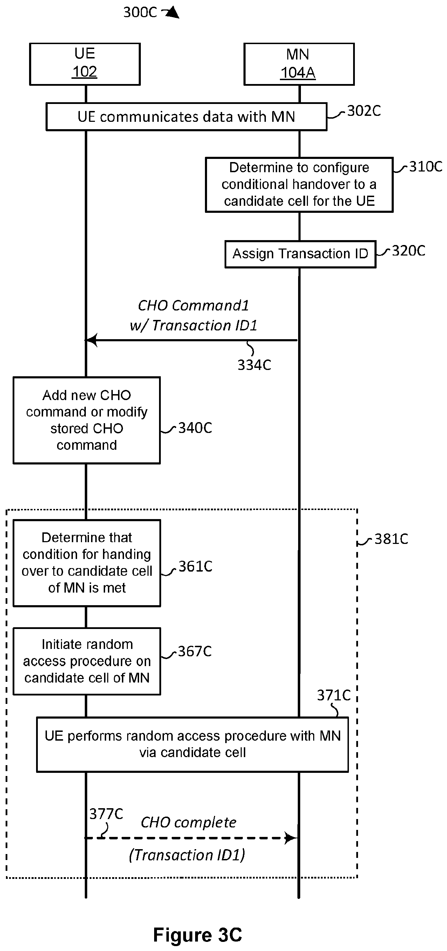

Figs. 3 through 11 are illustrate message sequences between the UE 102 and various base stations of the RAN (including base stations 104A, 106A and/or 106B), for a number of scenarios and implementations relating to conditional configuration management.

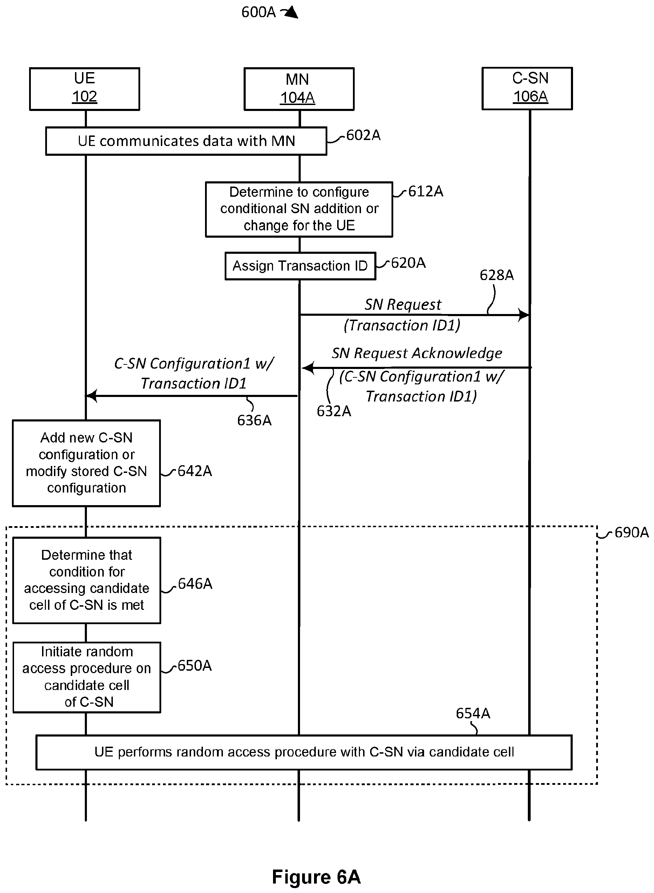

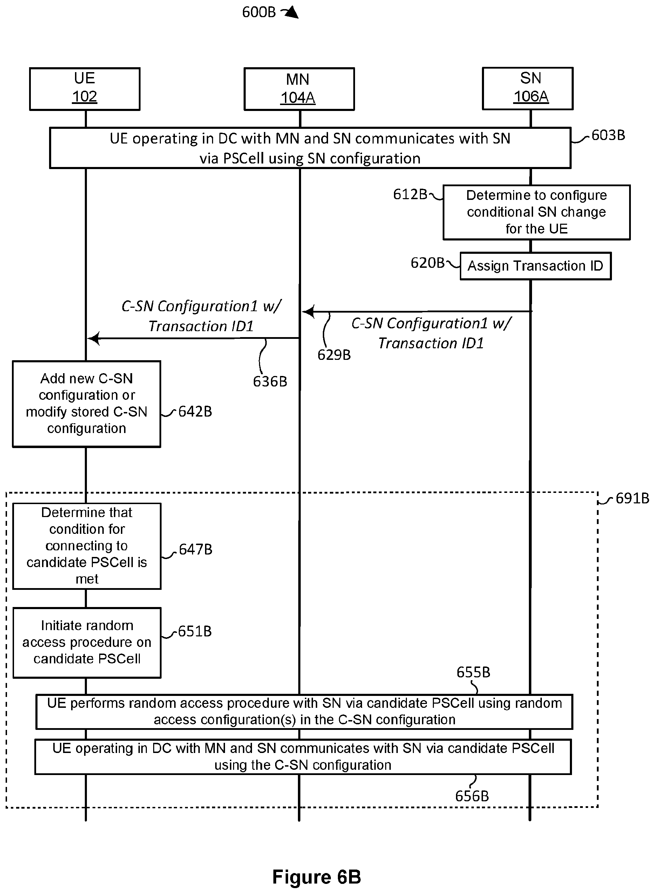

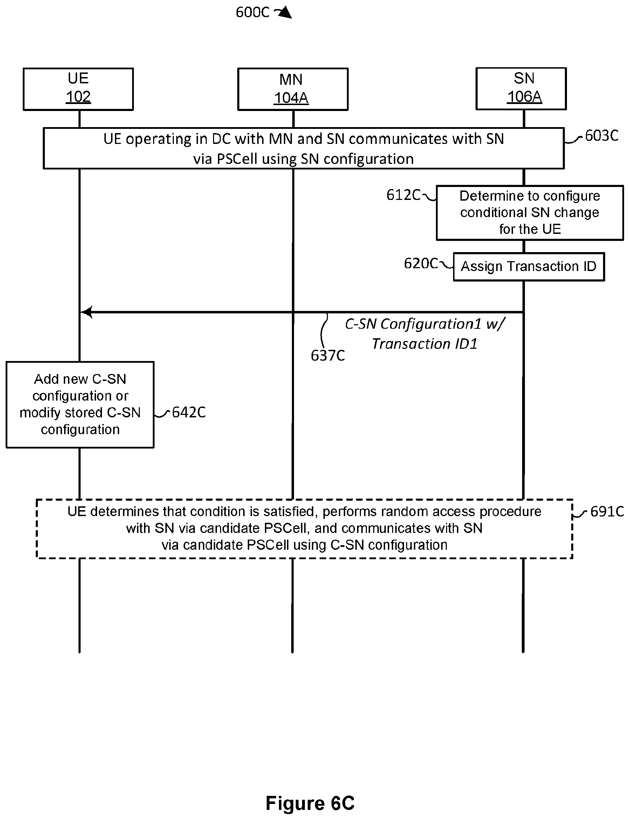

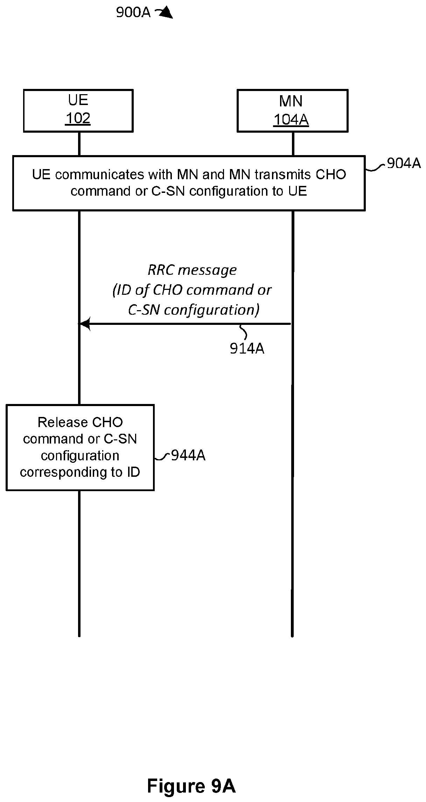

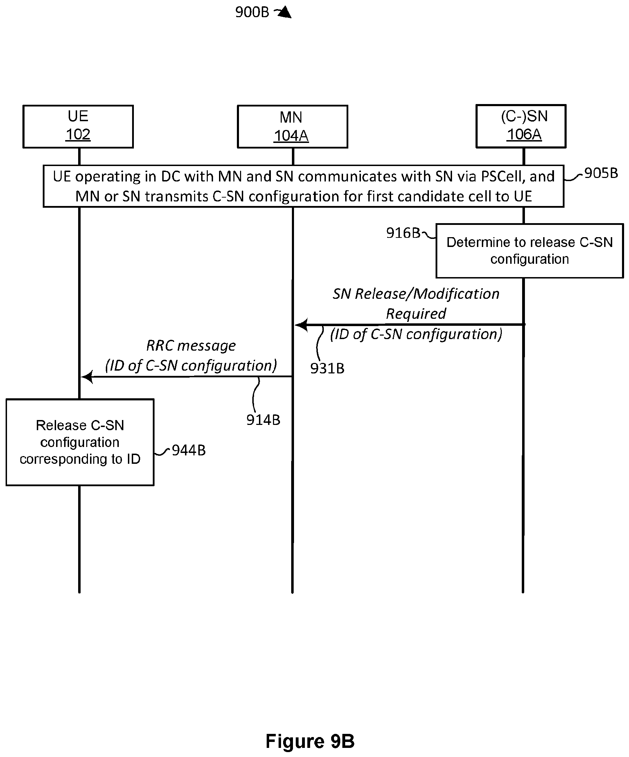

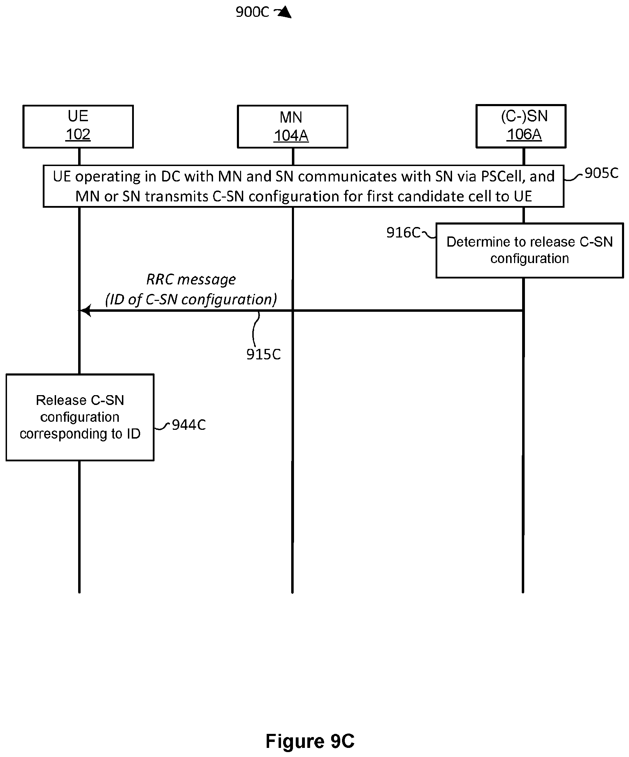

In particular, Figs. 3 through 5 correspond to conditional handover (CHO) scenarios in which the wireless communication system 100 uses configuration identifiers to track candidate cell configurations, Figs. 6 through 8 correspond to conditional SN addition/change scenarios in which the wireless communication system 100 uses configuration identifiers to track candidate SN configurations, and Fig. 9 (i.e., 9A through 9C) corresponds to a scenario in which the wireless communication system 100 uses a configuration identifier to release a conditional configuration (for CHO or SN addition/change) at the UE 102.

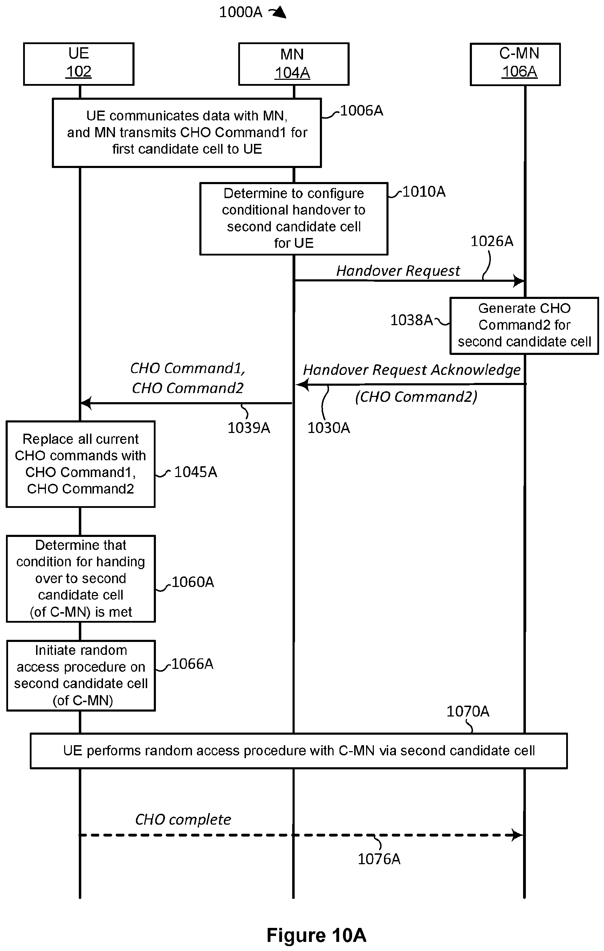

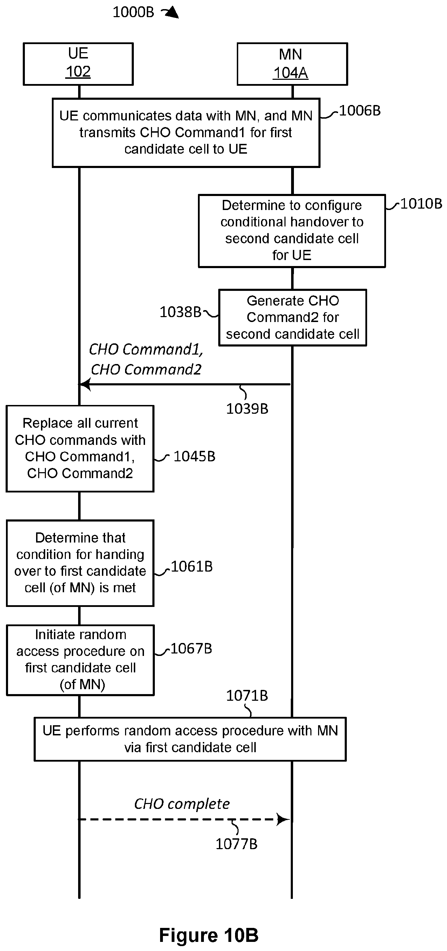

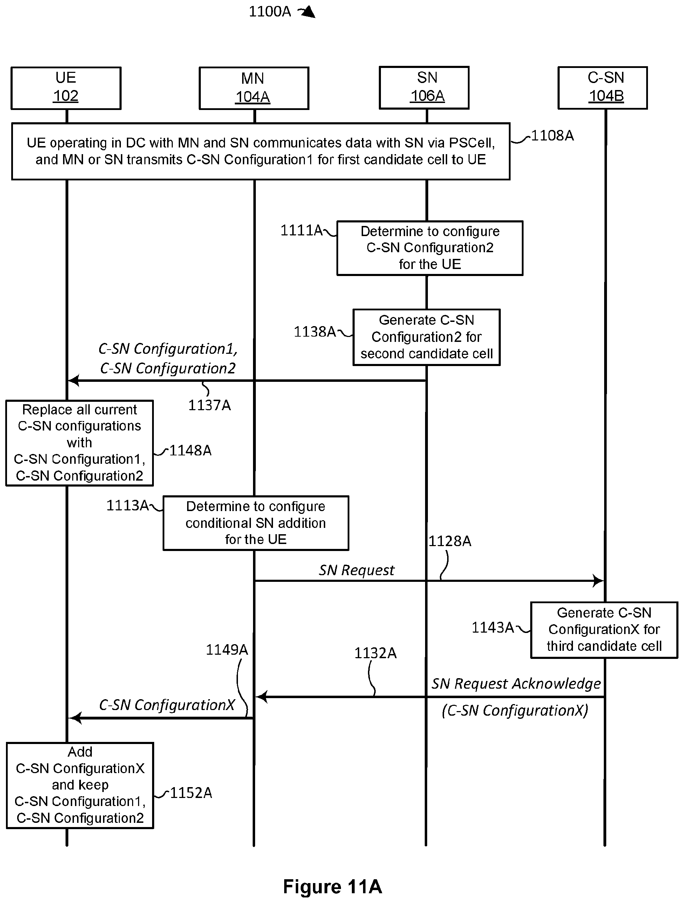

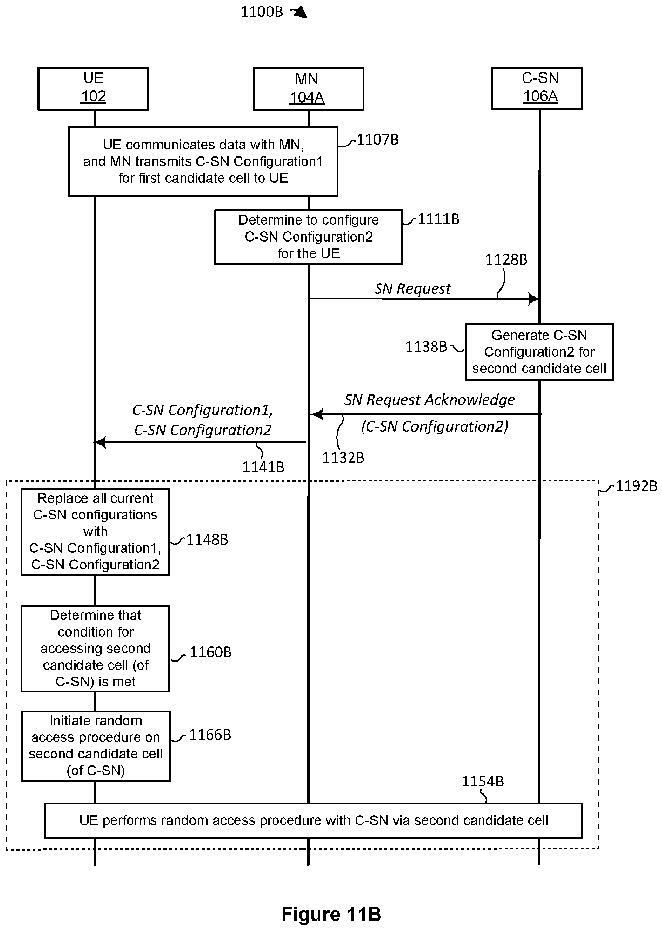

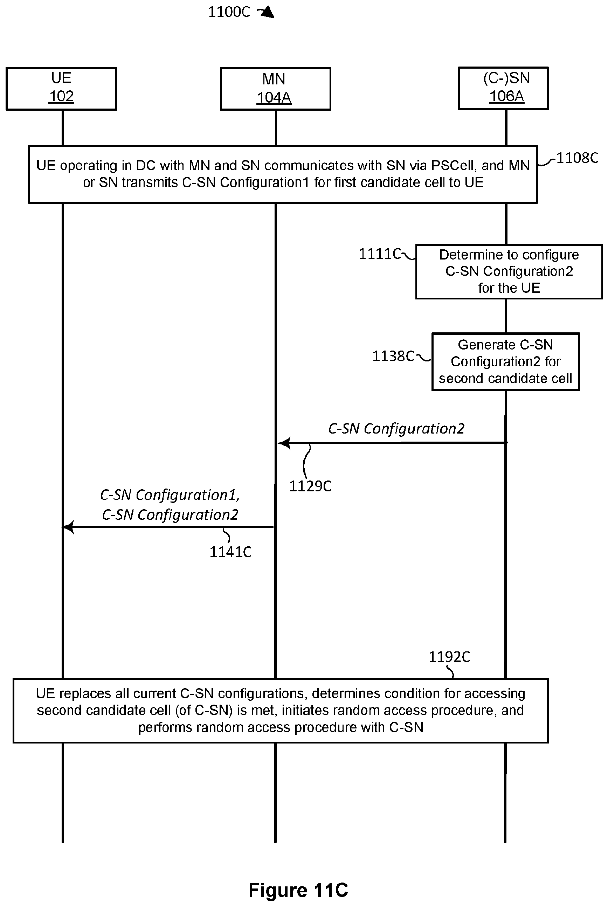

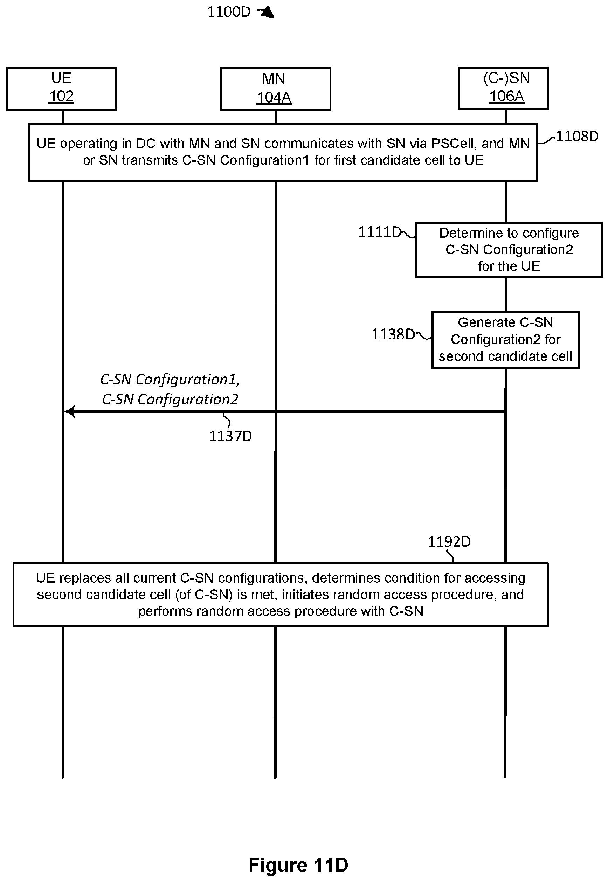

Figs. 10 and 11 correspond to an alternative implementation in which the RAN of the wireless communication system 100 provides a full set of conditional handover configurations to the UE 102 to avoid any uncertainty (at the UE 102) regarding the current, full configuration list, with Fig. 10 corresponding to a CHO scenario and Fig. 11 corresponding to a conditional SN addition or change scenario.

Referring first to Figs. 3A through 3C, conditional handover scenarios are shown in which the configuration identifier used to manage/track configurations is a Transaction ID.

In Fig. 3A, in a conditional handover scenario 300A, the base station 104A operates as an MN for the UE 102, and the base station 106A operates as a candidate MN (C-MN) for the UE 102. While various conditional handover scenarios discussed herein (with respect to Figs. 3A through 3C, as well as other figures) refer to the source base station as the MN and the candidate or target base station as the candidate or target MN, it is understood that, in other scenarios, the base station 104A may instead be a base station operating in SC with the UE 102, and the base station 106A may instead be a candidate base station that, if a handover to the base station 106A should occur, would itself operate in SC with the UE 102.

Initially, the UE 102 communicates 302A data (e.g., uplink (UL) data PDUs and/or downlink (DL) data PDUs) with the MN 104A. The MN 104A then at some point determines 310A to configure a conditional handover to a candidate cell (e.g., a candidate PCell) for the UE 102, e.g., blindly or in response to detecting a suitable event. For example, the determination 310A may occur in response to the MN 104A receiving one or more measurement results from the UE 102 that are above (or below) one or more predetermined thresholds, or calculating a filtered result (from the measurement result(s)) that is above (or below) a predetermined threshold. In another example, the suitable event can be that the UE 102 is moving toward the C-MN 106A. In yet another example, the suitable event can be one or more measurement results, generated/obtained by the MN 104A based on measurements of signals received from the UE 102, being above (or below) one or more thresholds predetermined thresholds.

After determining 310A to configure the conditional handover, the MN 104A assigns 320A a specific Transaction identifier or identity (Transaction ID) to the conditional handover or, equivalently, to the configuration (in the CHO command) associated with the conditional handover. In the depicted scenario, the assigned identifier is "Transaction ID1." As noted above, as used herein (and unless a more specific meaning is clear from the context of its use), "assigning" a configuration identifier can refer to the act of initially choosing the identifier (i.e., for an entirely new configuration), or to the subsequent selection of a previously chosen/used identifier (i.e., when attempting to modify an existing configuration). Thus, depending on the scenario, the MN 104A may select the Transaction ID1 because the MN 104A intends to introduce a new configuration and Transaction ID1 has not been used for any conditional configuration currently allocated to the UE 102, or because the MN 104A intends to modify an existing configuration to which the MN 104A (or possibly another network node) had previously assigned the identifier Transaction ID1.

In response to the determination 310A, and after assigning 320A Transaction ID1, the MN 104A transmits 326A a *Handover Request* message that includes Transaction ID1 to the C-MN 106A. The Transaction ID may be an integer or other value that is generally used to identify a specific RRC procedure (transaction), e.g., as specified in 3GPP TS 36.331 or 38.331. In response to the *Handover Request* message, the C-MN 106A includes the assigned Transaction ID (Transaction ID1) in a CHO command, and includes the CHO command in a *Handover Request Acknowledge* message for the UE 102. The C-MN 106A transmits 330A the *Handover Request Acknowledge* message to the MN 104A in response to the *Handover Request* message. The CHO command includes one or more configurations for a first candidate cell (which may be called a candidate PCell (C-PCell)) of the C-MN 106A. The configuration(s) include information that would enable the UE 102 to communicate with the first candidate cell, if a corresponding condition is satisfied. The CHO command that includes the candidate cell configuration and Transaction ID1 is shown in Fig. 3A as "CHO Command 1."

The MN 104A transmits 334A CHO Command1 (including Transaction ID1) to the UE 102. The UE 102 identifies the Transaction ID and, based on its value (Transaction ID1), adds or modifies 340A a configuration. That is, the UE 102 either adds 340A CHO Command1 as a new CHO command, or uses CHO Command 1 to modify 340A an existing CHO command already stored at the UE 102 (i.e., modifies at least a portion of a configuration in a CHO command already stored in a memory of the UE 102). In details, with the received CHO Command1 334A, the UE 102 identifies the Transaction ID to add the CHO command or modify a CHO command stored in the UE 102. If the UE 102 determines that Transaction ID1 has been used previously for a stored CHO command (i.e., Transaction ID1 is associated with that stored CHO command), the UE 102 modifies that stored CHO command with the configuration of CHO Command1. In some cases, the UE 102 replaces the stored CHO command with CHO Command1. In other cases, the UE 102 replaces only a subset of the configuration parameters in the stored CHO command with one or more configuration parameters in CHO Command1. As used herein, "modifying" a configuration can refer to replacing an entire pre-existing configuration, or replacing only a subset of the pre-existing configuration. If the UE 102 instead determines that Transaction ID1 is a new Transaction ID, the UE 102 stores CHO Command1 as a new CHO command.

In some scenarios, 310A through 340A may be repeated for additional conditional handovers and CHO commands. For example, the MN 104A may later assign "Transaction ID2" to a "CHO Command2" that is received by the UE 102 (e.g., after another transmission similar to the transmission 334A). The UE 102 may then either store CHO Command2 as a new configuration (if Transaction ID2 is different from Transaction ID1 and was not used for any other CHO commands already stored at the UE 102 and not yet released), or use CHO Command2 to replace a portion or all of a pre-existing (i.e., already stored and not released) CHO command that also includes (or is otherwise associated with) Transaction ID2.

In one implementation and scenario, after the UE 102 adds 340A CHO Command 1 or modifies 340A a CHO command using CHO Command1, and before the UE 102 releases the corresponding configuration, the UE 102 determines 360A that a condition for handing over to a particular candidate cell of C-MN 106A is satisfied, and in response initiates 366A a random access procedure on the particular candidate cell. In the depicted scenario, the particular candidate cell is the cell for which the MN 104A determined 310A to configure the conditional handover.

The UE 102 then performs 370A the random access procedure with the C-MN 106A via the candidate cell, in accordance with the configuration (e.g., random access preambles, etc.) of CHO Command1, and transmits 376A a CHO complete message including Transaction ID1 to the C-MN 106A, via the candidate cell, during or after the random access procedure. If the UE 102 instead determines 360A that a condition for a different candidate cell is satisfied, the UE 102 performs 370A the random access procedure with the C-MN 106A (or possibly, another base station) via that other candidate cell according to the corresponding CHO command/configuration. The operations 360A, 366A and 370A and the transmission 376A are collectively referred to in Fig. 3A as the procedure 380A.

In some implementations, the MN 104A may indicate to the C-MN 106A in the *Handover Request* message that the base station 106A is being requested for purposes of a conditional handover of the UE 102 (i.e., is requested to be a C-MN for the UE 102).

In one implementation, the CHO command (e.g., CHO Command1) contains information specifying the condition for the conditional handover (i.e., a condition configuration for the condition). The MN 104A may generate an RRC container message including the CHO command (without a separate condition configuration), and transmit the RRC container message to the UE 102 at event 334A. Alternatively, the *Handover Request Acknowledge* message and CHO command may not contain the condition configuration, and the MN 104A generates/configures the condition configuration. In this implementation, the MN 104A generates an RRC container message including the CHO command and the condition configuration, and transmits the RRC container message to the UE 102 at event 334A. In some implementations, the UE 102 transmits an RRC container response message to the MN 104A, in response to the RRC container message.

In some implementations, the CHO command can include one or more cell group configuration (*CellGroupConfig*) information elements (IEs) that configure one or more candidate cells. For example, the CHO command can include a *CellGroupConfig* configuring a particular candidate cell. In another example, the CHO command can include more than one *CellGroupConfig* IEs configuring one or more candidate cells. The *CellGroupConfig* IE may be defined in 3GPP TS 38.331, for example. In other implementations, the CHO command is an *RRCReconfiguration* message and the CHO complete messages is an *RRCReconfigurationComplete* message, as defined in 3GPP TS 38.331.

In some implementations, the CHO command can include one or more *RRCConnectionReconfiguration-r8-IEs* configuring one or more candidate cells. For example, the CHO command can include an *RRCConnectionReconfiguration-r8-IEs* configuring a particular candidate cell. In another example, the CHO command can include more than one *RRCConnectionReconfiguration-r8-IEs* configuring one or more candidate cells. The *RRCConnectionReconfiguration-r8-IEs* may be defined in 3GPP TS 36.331, for example. In other implementations, the CHO command is an *RRCConnectionReconfiguration* message, as defined in 3GPP TS 36.331. In other implementations, the CHO command can include one or more groups of IEs configuring one or more candidate cells. Each of the groups can include a *MobilityControlInfo* IE, a *RadioResourceConfigDedicated* IE and a *SecurityConfigHO* IE, for example.

In Fig. 3B, in a conditional handover scenario 300B, the base station 104A again operates as an MN for the UE 102, and the base station 106A again operates as a C-MN for the UE 102. Initially, the UE 102 communicates 302B data (e.g., UL data PDUs and/or DL data PDUs) with the MN 104A. The MN 104A then at some point determines 310B to configure a conditional handover to a candidate cell (e.g., a candidate PCell) for the UE 102, e.g., blindly or in response to detecting a suitable event (as discussed above with reference to Fig. 3A).

In response to the determination 310B, the MN 104A transmits 326B a *Handover Request* message to the C-MN 106A. Whereas in Fig. 3A the MN 104A assigns 320A a Transaction ID, in Fig. 3B the C-MN 106A assigns 320B a Transaction ID, after receiving the *Handover Request* message. The assignment 320B may otherwise be similar to the assignment 320A, and the assigned Transaction ID may be any of the Transaction IDs discussed above with reference to Fig. 3A, for example.

In response to the *Handover Request* message, and after assigning 320B the identifier "Transaction ID1," the C-MN 106A includes Transaction ID1 in a CHO command ("CHO Command1"), and includes the CHO command in a *Handover Request Acknowledge* message for the UE 102. The C-MN 106A transmits 330B the *Handover Request Acknowledge* message to the MN 104A in response to the *Handover Request* message. CHO Command1 may be similar to the CHO Command1 discussed above with reference to Fig. 3A.

The MN 104A transmits 334B CHO Command1 (including Transaction ID1) to the UE 102. The UE 102 identifies the Transaction ID and, based on its value (Transaction ID1), adds or modifies 340B a configuration, e.g., as discussed above with reference to Fig. 3A. In some scenarios, 310B through 340B may be repeated for additional conditional handovers and CHO commands, as discussed above.

In one implementation and scenario, after the UE 102 adds 340B CHO Command1 or modifies 340B a CHO command using CHO Command1, and before the UE 102 releases the corresponding configuration, the UE 102 determines that a condition for handing over to a particular candidate cell of C-MN 106A is satisfied, and in response initiates and performs a random access procedure on the particular candidate cell, in a procedure 380B. The procedure 380B may be similar to the procedure 380A of Fig. 3A, for example.

As discussed above with reference to Fig. 3A, in one implementation, the CHO command (e.g., CHO Command1) contains information specifying the condition for the conditional handover (i.e., a condition configuration for the condition). The MN 104A may generate an RRC container message including the CHO command, and transmit the CHO command to the UE 102 at event 334B. Alternatively, the *Handover Request Acknowledge* message and CHO command may not contain the condition configuration, and the MN 104A generates/configures the condition configuration. In this implementation, the MN 104A generates an RRC container message including the CHO command and the condition configuration, and transmits the RRC container message to the UE 102 at event 334B. In some implementations, the UE 102 transmits an RRC container response message to the MN 104A, in response to the RRC container message.

In Fig. 3C, in a conditional handover scenario 300C, the base station 104A again operates as an MN for the UE 102. Initially, the UE 102 communicates 302C data (e.g., UL data PDUs and/or DL data PDUs) with the MN 104A. The MN 104A then at some point determines 310C to configure a conditional handover to a candidate cell (e.g., a candidate PCell) for the UE 102, e.g., blindly or in response to detecting a suitable event (as discussed above with reference to Fig. 3A).

In the scenario 300C, and unlike the scenarios 300A and 300B, the candidate cell is another cell of the same MN 104A, and inter-base station messaging may not be required for the conditional handover. Thus, after the MN 104A assigns 320C the configuration identifier "Transaction ID1" (e.g., in a manner similar to assigning 320A of Fig. 3A), the MN 104A generates a CHO command that includes Transaction ID1 ("CHO Command1"), and transmits 334C that CHO command to the UE 102. CHO Command1 and Transaction ID1 may be similar to the CHO Command1 and Transaction ID1 discussed above with reference to Fig. 3A.

After receiving CHO Command1, the UE 102 identifies the Transaction ID and, based on its value (Transaction ID1), adds or modifies 340C a configuration, e.g., as discussed above with reference to Fig. 3A. In some scenarios, 310C through 340C may be repeated for additional conditional handovers and CHO commands, as discussed above.

In one implementation and scenario, after the UE 102 adds 340C CHO Command1 or modifies 340C a CHO command using CHO Command1, and before the UE 102 releases the corresponding configuration, the UE 102 determines 361C that a condition for handing over to a particular candidate cell of the MN 104A is satisfied, and in response initiates 367C a random access procedure on the particular candidate cell. In the depicted scenario, the particular candidate cell is the cell for which the MN 104A determined 310C to configure the conditional handover.

The UE 102 then performs 371C the random access procedure with the MN 104A via the candidate cell, in accordance with the configuration (e.g., random access preambles, etc.) of CHO Command1, and transmits 377C a CHO complete message including Transaction ID1 to the MN 104A, via the candidate cell, during or after the random access procedure. If the UE 102 instead determines 361C that a condition for a different candidate cell (of the MN 104A or another base station) is satisfied, the UE 102 performs 371C the random access procedure with the MN 104A or other base station via that other candidate cell, according to the corresponding CHO command/configuration. The operations 361C, 367C and 371C and the transmission 377C are collectively referred to in Fig. 3C as the procedure 381C.

As discussed above with reference to Fig. 3A, in one implementation, the CHO command (e.g., CHO Command1) contains information specifying the condition for the conditional handover (i.e., a condition configuration for the condition). The MN 104A may generate an RRC container message including the CHO command, and transmit the CHO command to the UE 102 at event 334C. In this implementation, the MN 104A generates an RRC container message including the CHO command and the condition configuration, and transmits the RRC container message to the UE 102 at event 334C. In some implementations, the UE 102 transmits an RRC container response message to the MN 104A, in response to the RRC container message.

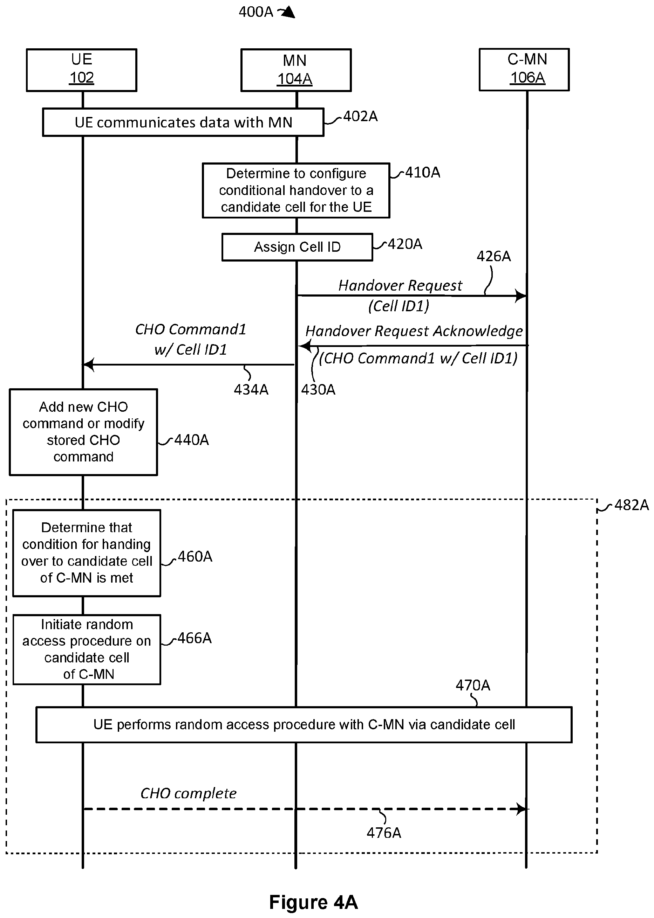

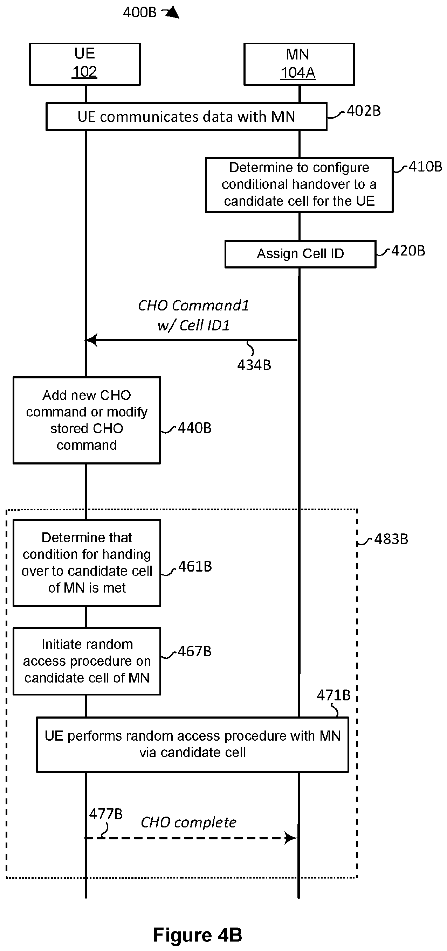

Referring next to Figs. 4A and 4B, conditional handover scenarios are shown in which the configuration identifier used to manage/track configurations is a Cell ID.

In Fig. 4A, in a conditional handover scenario 400A, the base station 104A operates as an MN for the UE 102, and the base station 106A operates as a C-MN for the UE 102. Initially, the UE 102 communicates 402A data (e.g., UL data PDUs and/or DL data PDUs) with the MN 104A. The MN 104A then at some point determines 410A to configure a conditional handover to a candidate cell (e.g., a candidate PCell) for the UE 102, e.g., blindly or in response to detecting a suitable event (as discussed above with reference to Fig. 3A).

After the determination 410A, the MN 104A assigns 420A a Cell ID to the conditional configuration. The assignment 420A may be similar to the assignment 320A of Fig. 3A, except that the MN 104A assigns a Cell ID rather than a Transaction ID. In the example scenario 400A, the MN 104A assigns 420A the identifier "Cell ID1" to the conditional handover configuration, where Cell ID1 identifies the candidate cell (e.g., C-PCell) for which the MN 104A is configuring the conditional handover. In various implementations, the Cell ID may be a physical cell ID (PCI, e.g., as specified in 3GPP TS 36.323 or 38.423), a cell global ID (CGI), or another suitable identifier of a particular cell in the wireless communication system 100. In some implementations, as discussed further below, the MN 104A does not assign 420A Cell ID1, but rather includes a cell identifier from which Cell ID1 may later be derived (e.g., by the C-MN 106A).

After assigning 420A Cell ID1 (or including a corresponding cell identifier from which Cell ID1 can be derived), the MN 104A transmits 426A a *Handover Request* message that includes Cell ID1 (or the corresponding cell identifier) to the C-MN 106A. In response to the *Handover Request* message, the C-MN 106A includes Cell ID1 in a CHO command ("CHO Command1"), includes the CHO command within a *Handover Request Acknowledge* message, and transmits 430A the *Handover Request Acknowledge* message to the MN 104A. In some implementations, Cell ID1 is a particular PCI value that the C-MN 106A derives from a CGI value that the MN 104A included in the *Handover Request* message. In such an implementation, the "assigning" at event 420A may be considered to be the combination of (1) determining the CGI at the MN 104A, and (2) deriving the PCI from the CGI at the C-MN 106A. In other implementations, the same cell identifier (e.g., CGI or PCI) is included in both the *Handover Request* message and the *Handover Request Acknowledge* message. Apart from the use of Cell ID as a configuration identifier, CHO Command1 may be similar to the CHO Command1 discussed above with reference to Fig. 3A, and the *Handover Request* and *Handover Request Acknowledge* messages may be similar to the *Handover Request* and *Handover Request Acknowledge* messages discussed above with reference to Fig. 3A, for example.

The MN 104A transmits 434A CHO Command1 (including Cell ID1) to the UE 102. The UE 102 identifies the Cell ID and, based on its value (Cell ID1), adds or modifies 440A a configuration, e.g., as discussed above with reference to Fig. 3A but based on Cell ID rather than Transaction ID.

In some scenarios, 410A through 440A may be repeated for additional conditional handovers and CHO commands. For example, the MN 104A may later assign "Cell ID2" to a "CHO Command2" that is received by the UE 102 (e.g., after another transmission similar to the transmission 434A). The UE 102 may then either store CHO Command2 as a new configuration (if Cell ID2 is different from Cell ID1 and was not used for any other CHO commands already stored at the UE 102 and not yet released), or use CHO Command2 to replace a portion or all of a pre-existing (i.e., already stored and not released) CHO command that also includes (or is otherwise associated with) Cell ID2.

In one implementation and scenario, after the UE 102 adds 440A CHO Command1 or modifies 440A a CHO command using CHO Command1, and before the UE 102 releases the corresponding configuration, the UE 102 determines 460A that a condition for handing over to a particular candidate cell of C-MN 106A is satisfied, and in response initiates 466A a random access procedure on the particular candidate cell. In the depicted scenario, the particular candidate cell is the cell for which the MN 104A determined 410A to configure the conditional handover.

The UE 102 then performs 470A the random access procedure with the C-MN 106A via the candidate cell, in accordance with the configuration (e.g., random access preambles, etc.) of CHO Command1, and transmits 476A a CHO complete message to the C-MN 106A, via the candidate cell, during or after the random access procedure. If the UE 102 instead determines 460A that a condition for a different candidate cell is satisfied, the UE 102 performs 470A the random access procedure with the C-MN 106A (or possibly, another base station) via that other candidate cell according to the corresponding CHO command/configuration. The operations 460A, 466A and 470A and the transmission 476A are collectively referred to in Fig. 4A as the procedure 482A.

As discussed above with reference to Fig. 3A, in one implementation, the CHO command (e.g., CHO Command1) contains information specifying the condition for the conditional handover (i.e., a condition configuration for the condition). The MN 104A may generate an RRC container message including the CHO command, and transmit the CHO command to the UE 102 at event 434A. Alternatively, the *Handover Request Acknowledge* message and CHO command may not contain the condition configuration, and the MN 104A generates/configures the condition configuration. In this implementation, the MN 104A generates an RRC container message including the CHO command and the condition configuration, and transmits the RRC container message to the UE 102 at event 434A. In some implementations, the UE 102 transmits an RRC container response message to the MN 104A, in response to the RRC container message.

In Fig. 4B, in a conditional handover scenario 400B, the base station 104A again operates as an MN for the UE 102. Initially, the UE 102 communicates 402B data (e.g., UL data PDUs and/or DL data PDUs) with the MN 104A. The MN 104A then at some point determines 410B to configure a conditional handover to a candidate cell (e.g., a candidate PCell) for the UE 102, e.g., blindly or in response to detecting a suitable event (as discussed above with reference to Fig. 3A).

In the scenario 400B, and unlike the scenario 400B, the candidate cell is another cell of the same MN 104A, and inter-base station messaging may not be required for the conditional handover. Thus, after the MN 104A assigns 420B the configuration identifier "Cell ID1" (e.g., in a manner similar to assigning 420A of Fig. 4A), the MN 104A generates a CHO command that includes Cell ID1 ("CHO Command1"), and transmits 434B that CHO command to the UE 102. CHO Command1 may be similar to the CHO Command1 discussed above with reference to Fig. 3A, and Cell ID1 may be similar to the Cell ID1 discussed above with reference to Fig. 4A (e.g., a PCI derived from a CGI).

After receiving CHO Command1, the UE 102 identifies the Cell ID and, based on its value (Cell ID1), adds or modifies 440B a configuration, e.g., as discussed above with reference to Fig. 3A. In some scenarios, 410B through 440B may be repeated for additional conditional handovers and CHO commands, as discussed above.

In one implementation and scenario, after the UE 102 adds 440B CHO Command1 or modifies 440B a CHO command using CHO Command1, and before the UE 102 releases the corresponding configuration, the UE 102 determines 461B that a condition for handing over to a particular candidate cell of the MN 104A is satisfied, and in response initiates 467B a random access procedure on the particular candidate cell. In the depicted scenario, the particular candidate cell is the cell for which the MN 104A determined 410B to configure the conditional handover.

The UE 102 then performs 471B the random access procedure with the MN 104A via the candidate cell, in accordance with the configuration (e.g., random access preambles, etc.) of CHO Command1, and transmits 477B a CHO complete message to the MN 104A, via the candidate cell, during or after the random access procedure. If the UE 102 instead determines 461B that a condition for a different candidate cell (of the MN 104A or another base station) is satisfied, the UE 102 performs 471B the random access procedure with the MN 104A or other base station via that other candidate cell, according to the corresponding CHO command/configuration. The operations 461B, 467B and 471B and the transmission 477B are collectively referred to in Fig. 4B as the procedure 483B.

As discussed above with reference to Fig. 3A, in one implementation, the CHO command (e.g., CHO Command1) contains information specifying the condition for the conditional handover (i.e., a condition configuration for the condition). The MN 104A may generate an RRC container message including the CHO command, and transmit the CHO command to the UE 102 at event 434B. In this implementation, the MN 104A generates an RRC container message including the CHO command and the condition configuration, and transmits the RRC container message to the UE 102 at event 434B. In some implementations, the UE 102 transmits an RRC container response message to the MN 104A, in response to the RRC container message.

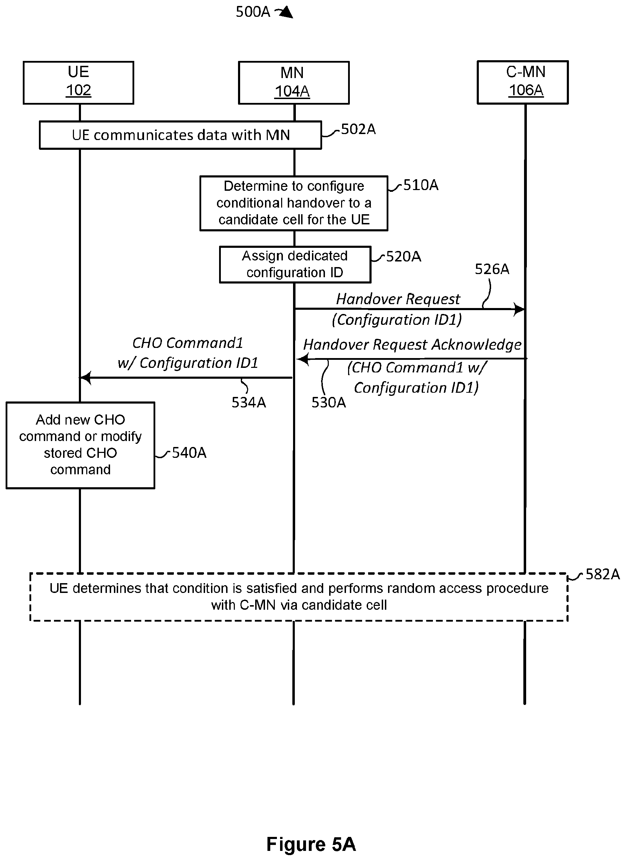

Referring next to Figs. 5A through 5D, conditional handover scenarios are shown in which the configuration identifier used to manage/track configurations is a dedicated configuration identifier (i.e., an information element dedicated to identifying conditional handover configurations).

In Fig. 5A, in a conditional handover scenario 500A, the base station 104A operates as an MN for the UE 102, and the base station 106A operates as a C-MN for the UE 102. Initially, the UE 102 communicates 502A data (e.g., UL data PDUs and/or DL data PDUs) with the MN 104A. The MN 104A then at some point determines 510A to configure a conditional handover to a candidate cell (e.g., a candidate PCell) for the UE 102, e.g., blindly or in response to detecting a suitable event (as discussed above with reference to Fig. 3A).

After the determination 510A, the MN 104A assigns 520A a Configuration ID to the conditional configuration. The assignment 520A may be similar to the assignment 320A of Fig. 3A or the assignment 420A of Fig. 4A, except that the MN 104A assigns a dedicated configuration identifier rather than a Transaction ID or Cell ID. In the example scenario 500A, the MN 104A assigns 520A the identifier "Configuration ID1" to the conditional handover configuration. The dedicated configuration identifier may be an integer or other value used to identify a specific CHO command, for example.

After assigning 520A Configuration ID1, the MN 104A transmits 526A a *Handover Request* message that includes Configuration ID1 to the C-MN 106A. In response to the *Handover Request* message, the C-MN 106A includes Configuration ID1 in a CHO command ("CHO Command1"), includes the CHO command within a *Handover Request Acknowledge* message, and transmits 530A the *Handover Request Acknowledge* message to the MN 104A. Apart from the use of a dedicated configuration identifier, CHO Command1 may be similar to the CHO Command1 discussed above with reference to Fig. 3A, and the *Handover Request* and *Handover Request Acknowledge* messages may be similar to the *Handover Request* and *Handover Request Acknowledge* messages discussed above with reference to Fig. 3A, for example.

The MN 104A transmits 534A CHO Command1 (including Configuration ID1) to the UE 102. The UE 102 identifies the Configuration ID and, based on its value (Configuration ID1), adds or modifies 540A a configuration, e.g., as discussed above with reference to Fig. 3A but based on a dedicated configuration identifier rather than Transaction ID.

In some scenarios, 510A through 540A may be repeated for additional conditional handovers and CHO commands. For example, the MN 104A may later assign "Configuration ID2" to a "CHO Command2" that is received by the UE 102 (e.g., after another transmission similar to the transmission 534A). The UE 102 may then either store CHO Command2 as a new configuration (if Configuration ID2 is different from Configuration ID1 and was not used for any other CHO commands already stored at the UE 102 and not yet released), or use CHO Command2 to replace a portion or all of a pre-existing (i.e., already stored and not released) CHO command that also includes (or is otherwise associated with) Configuration ID2.

In one implementation and scenario, after the UE 102 adds 540A CHO Command1 or modifies 540A a CHO command using CHO Command1, and before the UE 102 releases the corresponding configuration, the UE 102 determines that a condition for handing over to the candidate cell of C-MN 106A is satisfied, and in response initiates and performs a random access procedure on the candidate cell, in a procedure 582A. The procedure 582A may be similar to the procedure 482A of Fig. 4A, for example.

As discussed above with reference to Fig. 3A, in one implementation, the CHO command (e.g., CHO Command1) contains information specifying the condition for the conditional handover (i.e., a condition configuration for the condition). The MN 104A may generate an RRC container message including the CHO command, and transmit the CHO command to the UE 102 at event 534A. Alternatively, the *Handover Request Acknowledge* message and CHO command may not contain the condition configuration, and the MN 104A generates/configures the condition configuration. In this implementation, the MN 104A generates an RRC container message including the CHO command and the condition configuration, and transmits the RRC container message to the UE 102 at event 534A. In some implementations, the UE 102 transmits an RRC container response message to the MN 104A, in response to the RRC container message.

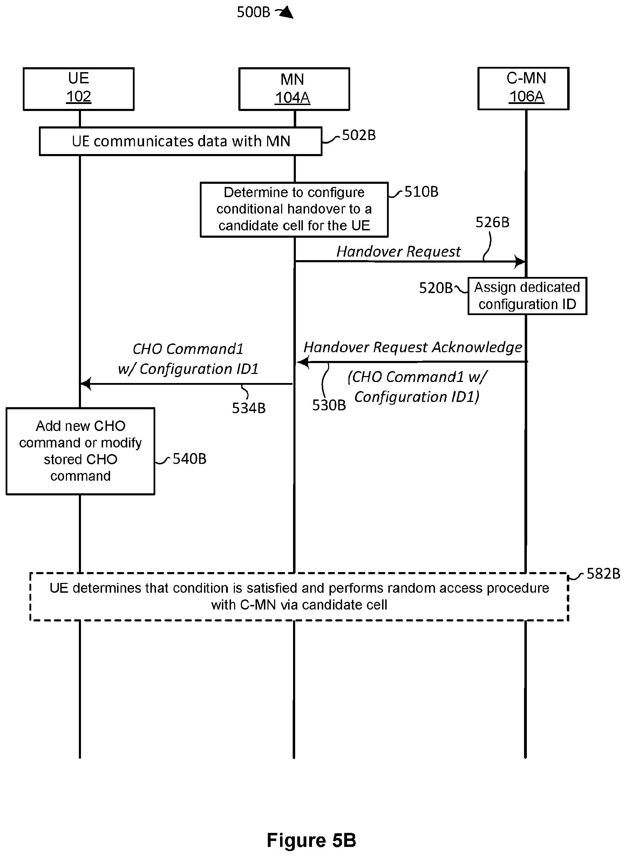

In Fig. 5B, in a conditional handover scenario 500B, the base station 104A again operates as an MN for the UE 102, and the base station 106A again operates as a C-MN for the UE 102. Initially, the UE 102 communicates 502B data (e.g., UL data PDUs and/or DL data PDUs) with the MN 104A. The MN 104A then at some point determines 510B to configure a conditional handover to a candidate cell (e.g., a candidate PCell) for the UE 102, e.g., blindly or in response to detecting a suitable event (as discussed above with reference to Fig. 3A).

In response to the determination 510B, the MN 104A transmits 526B a *Handover Request* message to the C-MN 106A. Whereas in Fig. 5A the MN 104A assigns 520A a dedicated configuration identifier, in Fig. 5B the C-MN 106A assigns 520B a dedicated configuration identifier, after receiving the *Handover Request* message. The assignment 520B may otherwise be similar to the assignment 520A, and the assigned configuration identifier may be any of the configuration identifiers discussed above with reference to Fig. 5A, for example.

In response to the *Handover Request* message, and after assigning 520B the identifier "Configuration ID1," the C-MN 106A includes Configuration ID1 in a CHO command ("CHO Command1"), and includes the CHO command in a *Handover Request Acknowledge* message for the UE 102. The C-MN 106A transmits 530B the *Handover Request Acknowledge* message to the MN 104A in response to the *Handover Request* message. Apart from the use of a dedicated configuration identifier, CHO Command1 may be similar to the CHO Command1 discussed above with reference to Fig. 3A, and the *Handover Request* and *Handover Request Acknowledge* messages may be similar to the *Handover Request* and *Handover Request Acknowledge* messages discussed above with reference to Fig. 3B, for example.

The MN 104A transmits 534B CHO Command1 (including Configuration ID1) to the UE 102. The UE 102 identifies the configuration identifier and, based on its value (Configuration ID1), adds or modifies 540B a configuration, e.g., as discussed above with reference to Fig. 3A. In some scenarios, 510B through 540B may be repeated for additional conditional handovers and CHO commands, as discussed above.

In one implementation and scenario, after the UE 102 adds 540B CHO Command1 or modifies 540B a CHO command using CHO Command1, and before the UE 102 releases the corresponding configuration, the UE 102 determines that a condition for handing over to a particular candidate cell of C-MN 106A is satisfied, and in response initiates and performs a random access procedure on the particular candidate cell, in a procedure 582B. The procedure 582B may be similar to the procedure 482A of Fig. 4A, for example.

As discussed above with reference to Fig. 3A, in one implementation, the CHO command (e.g., CHO Command1) contains information specifying the condition for the conditional handover (i.e., a condition configuration for the condition). The MN 104A may generate an RRC container message including the CHO command, and transmit the CHO command to the UE 102 at event 534B. Alternatively, the *Handover Request Acknowledge* message and CHO command may not contain the condition configuration, and the MN 104A generates/configures the condition configuration. In this implementation, the MN 104A generates an RRC container message including the CHO command and the condition configuration, and transmits the RRC container message to the UE 102 at event 534B. In some implementations, the UE 102 transmits an RRC container response message to the MN 104A, in response to the RRC container message.

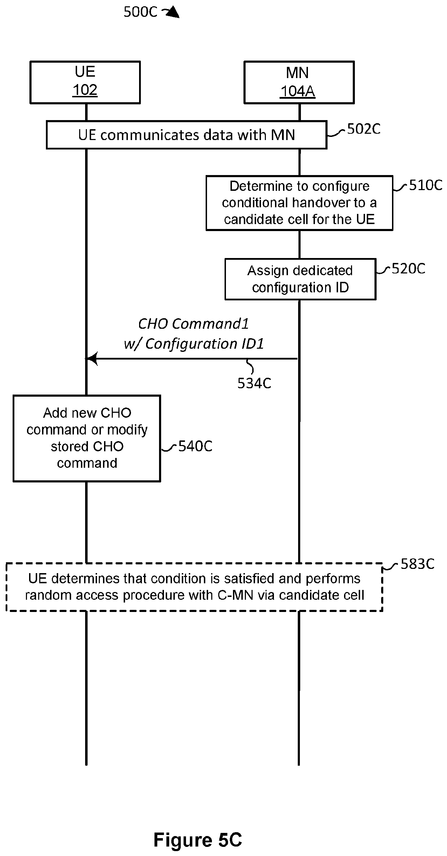

In Fig. 5C, in a conditional handover scenario 500C, the base station 104A again operates as an MN for the UE 102. Initially, the UE 102 communicates 502C data (e.g., UL data PDUs and/or DL data PDUs) with the MN 104A. The MN 104A then at some point determines 510C to configure a conditional handover to a candidate cell (e.g., a candidate PCell) for the UE 102, e.g., blindly or in response to detecting a suitable event (as discussed above with reference to Fig. 3A).

In the scenario 500C, and unlike the scenarios 500A and 500B, the candidate cell is another cell of the same MN 104A, and inter-base station messaging may not be required for the conditional handover. Thus, after the MN 104A assigns 520C the configuration identifier "Configuration ID1" (e.g., in a manner similar to assigning 520A of Fig. 5A), the MN 104A generates a CHO command that includes Configuration ID1 ("CHO Command1"), and transmits 334C that CHO command to the UE 102. CHO Command1 and Configuration ID1 may be similar to the CHO Command1 and Configuration ID1 discussed above with reference to Fig. 5A.

After receiving CHO Command1, the UE 102 identifies the configuration identifier and, based on its value (Configuration ID1), adds or modifies 540C a configuration, e.g., as discussed above with reference to Fig. 3A. In some scenarios, 510C through 540C may be repeated for additional conditional handovers and CHO commands, as discussed above.

In one implementation and scenario, after the UE 102 adds 540C CHO Command1 or modifies 540C a CHO command using CHO Command1, and before the UE 102 releases the corresponding configuration, the UE 102 determines that a condition for handing over to the candidate cell of the MN 104A is satisfied, and initiates and performs a random access procedure on the candidate cell, in a procedure 583C. The procedure 583C may be similar to the procedure 483B of Fig. 4B, for example.

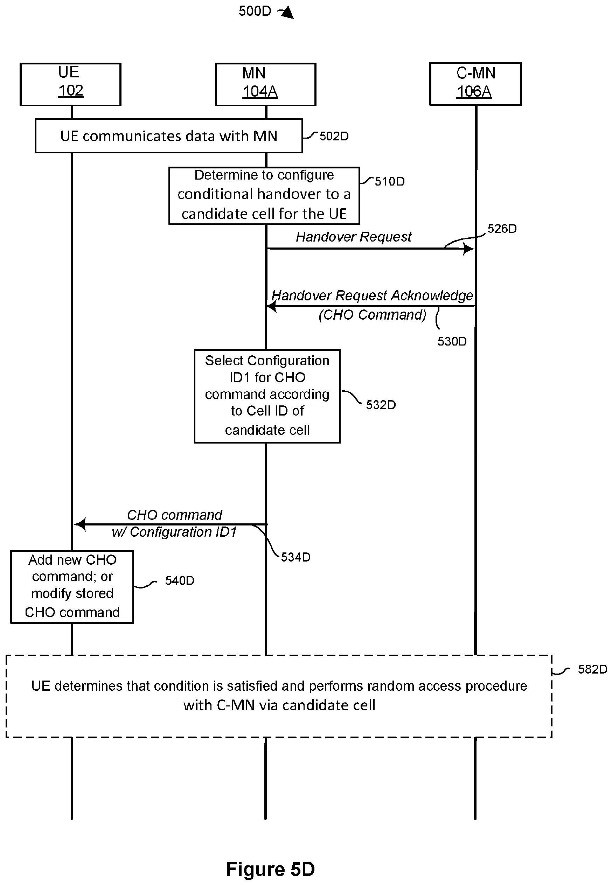

In Fig. 5D, in a conditional handover scenario 500D, the base station 104A again operates as an MN for the UE 102. Initially, the UE 102 communicates 502D data (e.g., UL data PDUs and/or DL data PDUs) with the MN 104A. The MN 104A then at some point determines 510D to configure or reconfigure a conditional handover to a candidate cell (e.g., a candidate PCell) for the UE 102, e.g., blindly or in response to detecting a suitable event (as discussed above with reference to Fig. 3A).

In response to the determination 510D, the MN 104A transmits 526D a *Handover Request* message that includes a Cell ID corresponding to the determination to the C-MN 106A. In response to the *Handover Request* message, the C-MN 106A includes a CHO command ("CHO Command1") along with the Cell ID1 within a *Handover Request Acknowledge* message, and transmits 530D the *Handover Request Acknowledge* message to the MN 104A. Apart from not including a dedicated transaction identifier, CHO Command1 may be similar to the CHO Command1 discussed above with reference to Fig. 3A, and the *Handover Request* and *Handover Request Acknowledge* messages may be similar to the *Handover Request* and *Handover Request Acknowledge* messages discussed above with reference to Fig. 3A, for example.

The MN 104A selects 532D a dedicated configuration identifier (Configuration ID1) for the CHO Command. "Selecting" Configuration ID1 can be assigning a new configuration ID, or selecting an existing configuration ID (detailed example implementations are described below). The MN 104A transmits 534D a CHO Command (e.g., CHO Command1) and the Configuration ID1 to the UE 102. The UE 102 adds or modifies (e.g., replaces) 540D a CHO command, e.g., as discussed above with reference to Fig. 3A.

In some scenarios, 510D through 540D may be repeated for additional conditional handovers and CHO commands. For example, the MN 104A may later assign "Configuration ID2" to a "CHO Command2" that is received by the UE 102 (e.g., after another transmission similar to the transmission 534D). The UE 102 may then either store CHO Command2 as a new configuration (if Configuration ID2 is different from Configuration ID1 and was not used for any other CHO commands already stored at the UE 102 and not yet released), or use CHO Command2 to replace a portion or all of a pre-existing (i.e., already stored and not released) CHO command that also includes (or is otherwise associated with) Configuration ID2.

In one implementation and scenario, after the UE 102 adds 540D CHO Command1 or modifies (e.g., replaces) 540D a CHO command using CHO Command1, and before the UE 102 releases the corresponding configuration, the UE 102 determines that a condition for handing over to the candidate cell of C-MN 106A is satisfied, and in response initiates and performs a random access procedure on the candidate cell, in a procedure 582D. The procedure 582D may be similar to the procedure 482A of Fig. 4A, for example.

In some implementations, the MN 104A has (i.e. stores) a table (e.g., Table 1-1) to select a configuration ID for a CHO command for the UE 102. The table includes entries of cell ID(s), configuration ID(s), and configuration status (e.g., whether a cell has been configured to a UE 102 for a CHO). In some implementations, the MN 104A may be configured with the table by an operation and maintenance (O&M) node. The O&M node may reconfigure (e.g., update) the table. For example, the O&M node may reconfigure the table by adding a new entry including a new cell ID and a new configuration ID with configuration status "Not configured." In other implementations, the MN 104A may be configured with the table by default, or manually.

**Table 1-1**

| **Cell ID** | **Configuration ID** | **Configuration status (i.e., "Configured" or "Not configured")** |
|---|---|---|
| Cell ID1 | Configuration ID1 (e.g., 1) | |
| Cell ID2 | Configuration ID2 (e.g., 2) | |
| ··· | ··· | ··· |
| Cell ID"M" | Configuration ID"M" (e.g., M) | |

**Table 1-2**

| **Cell ID** | **Configuration ID** | **Configuration status (i.e., "Configured" or "Not configured")** |
|---|---|---|
| Cell ID1 | Configuration ID1 (e.g., 1) | Not configured |
| Cell ID2 | Configuration ID2 (e.g., 2) | Not configured |
| ··· | ··· | ··· |
| Cell ID"M" | Configuration ID"M" (e.g., M) | Not configured |

In one example, the MN 104A can initialize the table as Table 1-2 before or when the MN 104A receives a CHO Command. If a cell ID of the candidate cell 510D is Cell ID1, the MN 104A sets the configuration status for the Cell ID1 to "Configured" in response to the determination 510D or reception 530D of the CHO command (e.g., CHO Command1), as in Table 1-3. The MN 104A uses the Configuration ID1 for the CHO Command1 according to the table (because the CHO Command1 is for the Cell ID1), and in turn the MN 104A transmits the Configuration ID1 and CHO Command1 at event 534D. That is, the MN 104A uses a particular cell ID (e.g., the Cell ID1) as an index to look up the table if the MN 104A determines to configure conditional handover to a cell identified by the particular cell ID, or if the MN 104A receives a CHO command for the particular cell ID.

**Table 1-3**

| **Cell ID** | **Configuration ID** | **Configuration status (i.e., "Configured" or "Not configured")** |
|---|---|---|
| Cell ID1 | Configuration ID1 (e.g., 1) | Configured |
| Cell ID2 | Configuration ID2 (e.g., 2) | Not configured |
| ··· | ··· | ··· |
| Cell ID"M" | Configuration ID"M" (e.g., M) | Not configured |

In another example, the MN 104A has/stores the table as Table 1-3 before the MN 104A receives the CHO command 530D. If a cell ID of the candidate cell 510D is Cell ID1, the MN 104A may or may not set the configuration status for the Cell ID1 to "Configured" in response to the determination 510D or reception 530D of the CHO Command (e.g., CHO Command1), as in Table 1-3. The MN 104A uses the Configuration ID1 for the CHO Command1 according to the table (because the CHO Command1 is for the Cell ID1), and transmits the Configuration ID1 and CHO Command1 at event 534D. If a cell ID of the candidate cell 510D is Cell ID2, the MN 104A sets the configuration status for the Cell ID2 to "Configured" in response to the determination 510D or reception 530D of the CHO Command (e.g., CHO Command2), as in Table 1-4. The MN 104A uses the Configuration ID2 for the CHO Command2 according to the table (because the CHO Command2 is for the Cell ID2), and transmits the Configuration ID2 and CHO Command2 at event 534D. That is, the MN 104A uses a particular cell ID (e.g., the Cell ID1) as an index to look up the table if the MN 104A determines to configure conditional handover to the particular cell ID, or if the MN 104A receives a CHO command for the particular cell ID.

**Table 1-4**

| **Cell ID** | **Configuration ID** | **Configuration status (i.e., "Configured" or "Not configured")** |
|---|---|---|
| Cell ID1 | Configuration ID1 (e.g., 1) | Configured |
| Cell ID2 | Configuration ID2 (e.g., 2) | Configured |
| ··· | ··· | Not configured |
| Cell ID"M" | Configuration ID"M" (e.g., M) | Not configured |

If the MN 104A determines to release a CHO command for a cell ID which has configuration status "Configured," the MN 104A looks up the table to find a configuration ID for the cell ID by using the cell ID as an index, and may transmit a CHO release configuration including the configuration ID. The UE 102 releases the CHO command according to the configuration ID in the CHO release configuration. For example, the MN 104A can determine to release a CHO Command for the Cell ID1. In response to the determination, the MN 104A looks up the table (e.g., Table 1-3 or Table 1-4) and identifies that the configuration ID for the cell ID1 is the Configuration ID1. The MN 104A then includes the Configuration ID1 in the CHO release configuration, and transmits the CHO release configuration to the UE 102. The UE 102 releases the CHO Command1 according to the Configuration ID1 in the CHO release configuration. If the cell ID has configuration status "Not configured," or is not found in the table, the MN 104A may not transmit any CHO release configuration to the UE 102 to release a CHO Command for the cell ID.

In other implementations, the MN 104A has/stores a table (e.g., Table 2-1) for the UE 102 to select a configuration ID for a CHO command (i.e., assign a new configuration ID or identify an existing configuration ID). The table includes entries of cell ID(s) and configuration ID(s).

**Table 2-1**

| **Cell ID** | **Configuration ID** |
|---|---|
| | |
| | |
| | |
| | |

In one example, the MN 104A can initialize the table as Table 2-1 (i.e., empty) before the MN 104A receives a CHO Command (e.g., CHO Command1 530D). If a cell ID of the candidate cell 510D is Cell ID1 and the Cell ID1 is not in the table, the MN 104A assigns a new Configuration ID (e.g., Configuration ID1) for the Cell ID1 or the CHO Command1 in response to the determination 510D or reception of the CHO Command1, as Table 2-2.

**Table 2-2**

| **Cell ID** | **Configuration ID** |
|---|---|
| Cell ID1 | Configuration ID1 |
| | |
| | |
| | |

In another example, the MN 104A has the table as Table 2-2 before the MN 104A receives the CHO Command 530D (e.g., CHO Command2). If a cell ID of the candidate cell 510D is Cell ID1, the MN 104A uses the Configuration ID1 for the CHO Command2 according to the table and transmits the Configuration ID1 and CHO Command2 at event 534D. If a cell ID of the candidate cell 510D is Cell ID2 and the Cell ID2 is not in the table, the MN 104A assigns a new configuration ID (e.g., Configuration ID2) for the Cell ID2 or the CHO Command2 in response to the determination 510D or reception 530D of the CHO Command2, as in Table 2-3, and transmits the Configuration ID2 and CHO Command2 at event 534D. That is, the MN 104A uses a particular cell ID (e.g., the Cell ID1) as an index to look up the table if the MN 104A determines to configure conditional handover to the particular cell ID or if the MN 104A receives a CHO command for the particular cell ID.

**Table 2-3**

| **Cell ID** | **Configuration ID** |
|---|---|
| Cell ID1 | Configuration ID1 |
| Cell ID2 | Configuration ID2 |
| | |
| | |

If the MN 104A determines to release a CHO command for a cell ID, or receives a request from the C-MN 106A to release a CHO command for a cell ID, the MN 104A looks up the table to find a configuration ID for the cell ID by using the cell ID as an index, and may transmit a CHO release configuration including the configuration ID. The UE 102 releases the CHO command according to the configuration ID in the CHO release configuration. For example, the MN 104A can determine to release a CHO command for the Cell ID1. In response to the determination, the MN 104A looks up the table (e.g., Table 1-3 or Table 1-4) and identifies that the configuration ID for the Cell ID1 is the Configuration ID1. The MN 104A then includes the Configuration ID1 in the CHO release configuration and transmits the CHO release configuration to the UE 102. The UE 102 releases the CHO Command1 according to the Configuration ID1 in the CHO release configuration. If the cell ID is not found in the table, the MN 104A may not transmit any CHO release configuration to the UE 102 to release a CHO command for the cell ID.

As discussed above with reference to Fig. 3A, in one implementation, the CHO command (e.g., CHO Command1) contains information specifying the condition for the conditional handover (i.e., a condition configuration for the condition). The MN 104A may generate an RRC container message including the CHO command, and transmit the CHO command to the UE 102 at event 534D. In this implementation, the MN 104A generates an RRC container message including the CHO command and the condition configuration, and transmits the RRC container message to the UE 102 at event 534D. In some implementations, the UE 102 transmits an RRC container response message to the MN 104A, in response to the RRC container message.

As noted above, Figs. 6 through 8 correspond to conditional SN addition/change scenarios in which the wireless communication system 100 uses configuration identifiers to track candidate SN configurations. Referring first to Figs. 6A through 6C, conditional SN addition or change scenarios are shown in which the configuration identifier used to manage/track configurations is a Transaction ID.

In Fig. 6A, in a conditional SN addition or SN change scenario 600A, the base station 104A operates as an MN for the UE 102, and the base station 106A operates as a candidate SN (C-SN) for the UE 102. Initially, the UE 102 communicates 602A data (e.g., UL data PDUs and/or DL data PDUs) with the MN 104A, in single connectivity (SC) operation, or in dual connectivity with SN 104B not shown in the Fig. 6A. The MN 104A then at some point determines 612A to configure a conditional SN addition or change for the UE 102, e.g., blindly or in response to detecting a suitable event (e.g., as discussed above with reference to Fig. 3A).

After determining 612A to configure the conditional SN addition or change, the MN 104A assigns 620A a specific Transaction ID to the conditional SN addition/change or, equivalently, to the C-SN configuration associated with the conditional SN addition/change. In the depicted scenario, the assigned identifier is "Transaction ID1." As noted above, as used herein (and unless a more specific meaning is clear from the context of its use), "assigning" a configuration identifier can refer to the act of initially choosing the identifier (i.e., for an entirely new configuration), or to the subsequent selection of a previously chosen/used identifier (i.e., when attempting to modify an existing configuration). The Transaction ID may be similar to the Transaction IDs discussed above with reference to Fig. 3A (e.g., the Transaction ID specified in 3GPP TS 36.331 or 38.331), for example.

In response to the determination 612A, and after assigning 620A Transaction ID1, the MN 104A transmits 628A an *SN Request* message (e.g., a *SN Addition Request* or *SN Modification Request* message) that includes Transaction ID1 to the C-SN 106A. In response to the *SN Request* message, the C-SN 106A includes the assigned Transaction ID (Transaction ID1) in or with a C-SN configuration ("C-SN Configuration1"). That is, C-SN Configuration1 is identified by the Transaction ID1 or is associated to the Transaction ID1. The C-SN 106A includes the C-SN Configuration1 in an *SN Request Acknowledge* message (e.g., *SN Addition Request Acknowledge* or *SN Modification Request Acknowledge* message), and transmits 632A the *SN Request Acknowledge* message to the MN 104A in response to the *SN Request* message. The C-SN Configuration1 includes one or more configurations for a candidate cell (e.g., candidate PSCell (C-PSCell)) of the C-MN 106A.

The MN 104A then transmits 636A C-SN Configuration1 (including Transaction ID1) to the UE 102. The UE 102 identifies the Transaction ID and, based on its value (Transaction ID1), adds or modifies 642A a configuration. In details, with the received C-SN configuration, the UE 102 identifies the Transaction ID to add the C-SN configuration or modify a C-SN configuration stored in the UE 102. If the UE 102 identifies the Transaction ID has been used previously for a stored C-SN configuration (i.e., Transaction ID1 is associated with that stored C-SN configuration), the UE 102 modifies that stored C-SN configuration with C-SN Configuration1. In some cases, the UE 102 replaces the stored C-SN configuration with C-SN Configuration1. In other cases, the UE 102 replaces only a subset of the configuration parameters in the stored C-SN configuration with one or more configuration parameters in C-SN Configuration!. If the UE 102 instead determines that Transaction ID1 is a new Transaction ID, the UE 102 stores C-SN Configuration1 as a new C-SN configuration.

In some scenarios, 612A through 642A may be repeated for one or more conditional SN additions and/or changes. For example, the MN 104A may later assign "Transaction ID2" to a "C-SN Configuration2" that is received by the UE 102 (e.g., after another transmission similar to the transmission 636A). The UE 102 may then either store C-SN Configuration2 as a new configuration (if Transaction ID2 is different from Transaction ID1 and was not used for any other C-SN configurations already stored at the UE 102 and not yet released), or use C-SN Configuration! to replace a portion or all of a pre-existing (i.e., already stored and not released) C-SN configuration that also includes (or is otherwise associated with) Transaction ID2.

In one implementation and scenario, after the UE 102 adds 642A C-SN Configuration1 or modifies 642A a C-SN configuration using C-SN Configuration1, and before the UE 102 releases C-SN Configuration1, the UE 102 determines 646A that a condition for accessing a candidate cell of the C-SN 106A is satisfied, and in response initiates 650A a random access procedure on the candidate cell. In the depicted scenario, the candidate cell is the cell for which the MN 104A determined 612A to configure the conditional SN addition or change.

The UE 102 then performs 654A the random access procedure with the C-SN 106A via the candidate cell, in accordance with the configuration (e.g., random access preambles, etc.) of C-SN Configuration1. If the UE 102 instead determines 646A that a condition for a different candidate cell is satisfied, the UE 102 performs 654A the random access procedure with the C-SN 106A (or possibly, another base station) via that other candidate cell according to the corresponding C-SN configuration. The operations 646A, 650A and 654A are collectively referred to in Fig. 6A as the procedure 690A.

In some implementations, the MN 104A indicates to the C-SN 106A in the *SN Request* message that the base station 106A is being requested for purposes of a conditional PSCell addition/change of the UE 102 (i.e., is requested to be a C-SN for the UE 102).

In one implementation, the C-SN configuration contains information specifying the condition for the conditional SN addition or change (i.e., a condition configuration for the condition). The MN 104A may generate an RRC container message including the C-SN configuration, and transmit the RRC container message (without a separate condition configuration) to the UE 102 at event 636A. Alternatively, the C-SN configuration may not contain the condition configuration, and the MN 104A includes the condition configuration along with the C-SN configuration in the *SN Request Acknowledge* message. In this implementation, the MN 104A generates an RRC container message including the C-SN configuration and the condition configuration, and transmits the RRC container message to the UE 102 at event 636A. In yet another implementation, the *SN Request Acknowledge* message and C-SN configuration do not contain the condition configuration, and the MN 104A configures the condition. In such implementations, too, the MN 104A generates an RRC container message including the C-SN configuration and the condition configuration, and transmits the RRC container message to the UE 102 at event 636A. In any of these implementations, the UE 102 may transmit an RRC container response message to the MN 104A, in response to receiving the RRC container message. Moreover, the MN 104A may transmit an *SN Reconfiguration Complete* message to the C-SN 106A, in response to receiving the RRC container message.

In some implementations (e.g., for (NG)EN-DC and NR-NR DC operation), the C-SN configuration includes one or more cell group configuration (*CellGroupConfig*) information elements (IEs). In one implementation, the C-SN 106A includes an *RRCReconfiguration* message including the *CellGroupConfig* IE in the *SN Request Acknowledge* message, and the transmit the *RRCReconfiguration* message to the UE 102 at event 636A. In other implementations, the C-SN configuration is an *RRCReconfiguration* message including a *CellGroupConfig* IE. The *RRCReconfiguration* message and *CellGroupConfig* IE may be as defined in 3GPP TS 38.331, for example.

In some implementations (e.g., for NE-DC operation), the C-SN configuration is an *SCG-ConfigPartSCG-r12* IE. In one implementation, the C-SN 106A includes an *RRCConnectionReconfiguration* message including the *ConfigPartSCG-r12* IE in the *SN Addition Request Acknowledge* message. In other implementations, the C-SN configuration is an *RRCConnectionReconfiguration* message including a *ConfigPartSCG-r12* IE. The *RRCConnectionReconfiguration* message and *SCG-ConfigPartSCG-r12* IE may be as defined in 3GPP TS 36.331, for example.

Whereas Fig. 6A begins with the UE 102 communicating in SC operation, Fig. 6B depicts a conditional SN change scenario 600B in which the UE 102 is initially communicating in DC operation. Specifically, in Fig. 6B, the base station 104A serves as an MN for the UE 102 and the base station 106A serves as an SN (supporting a PSCell) for the UE 102, with the UE 102 communicating 603B with the MN 104A and SN 106A while operating in DC. The SN 106A then at some point determines 612B to configure a conditional SN change for the UE 102, e.g., blindly or in response to detecting a suitable event (e.g., as discussed above with reference to Fig. 3A). In the depicted scenario, the SN change is a change to a different PSCell that is also supported by the SN 106A.

After determining 612B to configure the conditional SN change, the SN 106A assigns 620B a specific Transaction ID to the conditional SN change or, equivalently, to the C-SN configuration associated with the conditional SN change. In the depicted scenario, the assigned identifier is "Transaction ID1." The Transaction ID may be similar to the Transaction IDs discussed above with reference to Fig. 3A (e.g., the Transaction ID specified in 3GPP TS 36.331 or 38.331), for example. It is understood that, in other scenarios, the MN 104A may instead perform 612B and 620B (e.g., as in Fig. 6A), even if the UE 102 is operating in DC with the MN 104A and an SN (e.g., base station 106B).

In response to the determination 612B, and after assigning 620B Transaction ID1, the SN 106A transmits 629A a C-SN configuration that includes Transaction ID1 ("C-SN Configuration1") to the MN 104A. The C-SN configuration may be similar to the C-SN configuration described above with reference to Fig. 6A, for example. After receiving C-SN Configuration1, the MN 104A transmits C-SN Configuration1 (including Transaction ID1) to the UE 102. The UE 102 then identifies the Transaction ID and, based on its value (Transaction ID1), adds or modifies 642B a configuration (e.g., as discussed above with reference to Fig. 6A). In some scenarios, 612B through 642B may be repeated for one or more conditional SN changes, as discussed above.

In one implementation and scenario, after the UE 102 adds 642B C-SN Configuration1 or modifies 642B a C-SN configuration using C-SN Configuration1, and before the UE 102 releases C-SN Configuration1, the UE 102 determines 647B that a condition for connecting to the candidate PSCell is satisfied, and in response initiates 651B a random access procedure on the candidate PSCell. In the depicted scenario, the candidate PSCell is the cell for which the SN 106A determined 612B to configure the conditional SN change.

The UE 102 then performs 655B the random access procedure with the SN 106A via the candidate PSCell, in accordance with the configuration (e.g., random access preambles, etc.) of C-SN Configuration1, and thereafter communicates 656B with the MN 104A, and with the SN 106A via the PSCell using C-SN Configuration!, in DC operation. If the UE 102 instead determines 647B that a condition for a different candidate PSCell is satisfied, the UE 102 performs 655B the random access procedure via that other PSCell, and thereafter communicates 656B with the MN 104A, and with the SN 106A via the other PSCell using the corresponding C-SN configuration, in DC operation. The operations 647B, 651B, 655B and 656B are collectively referred to in Fig. 6B as the procedure 691B.

In one implementation, the C-SN configuration generated by the SN 106A contains information specifying the condition for the conditional SN change (i.e., a condition configuration for the condition). The MN 104A may generate an RRC container message including the C-SN configuration, and transmit the RRC container message (without a separate condition configuration) to the UE 102 at event 636B. Alternatively, the C-SN configuration provided by the SN 106A may not contain the condition configuration, and the MN 104A includes the condition configuration along with the C-SN configuration in an RRC container message that the MN 104A transmits to the UE 102 at event 636B. In any of these implementations, the UE 102 may transmit an RRC container response message to the MN 104A, in response to receiving the RRC container message.

Fig. 6C depicts a conditional SN change scenario 600C similar to the scenario 600B, but in which the UE 102 is configured to an SRB with the SN, and therefore can receive the C-SN configuration directly from the SN. In the scenario 600C, the UE 102 is initially communicating in DC operation. Specifically, in Fig. 6C, the base station 104A serves as an MN for the UE 102 and the base station 106A serves as an SN (supporting a PSCell) for the UE 102, with the UE 102 communicating 603B with the MN 104A and SN 106A while operating in DC. The SN 106A then at some point determines 612C to configure a conditional SN change for the UE 102, e.g., blindly or in response to detecting a suitable event (e.g., as discussed above with reference to Fig. 3A). In the depicted scenario, the SN change is a change to a different PSCell that is also supported by the SN 106A.

After determining 612C to configure the conditional SN change, the SN 106A assigns 620C a specific Transaction ID to the conditional SN change or, equivalently, to the C-SN configuration associated with the conditional SN change. In the depicted scenario, the assigned identifier is "Transaction ID1." The Transaction ID may be similar to the Transaction IDs discussed above with reference to Fig. 3A (e.g., the Transaction ID specified in 3GPP TS 36.331 or 38.331), for example.

In response to the determination 612C, and after assigning 620C Transaction ID1, the SN 106A transmits 637C a C-SN configuration that includes Transaction ID1 ("C-SN Configuration1") to the UE 102. The C-SN configuration may be similar to the C-SN configuration described above with reference to Fig. 6A, for example. After receiving C-SN Configuration!, the UE 102 identifies the Transaction ID and, based on its value (Transaction ID1), adds or modifies 642C a configuration (e.g., as discussed above with reference to Fig. 6A). In some scenarios, 612C through 642C may be repeated for one or more conditional SN changes, as discussed above.

In one implementation and scenario, after the UE 102 adds 642C C-SN Configuration1 or modifies 642C a C-SN configuration using C-SN Configuration1, and before the UE 102 releases C-SN Configuration1, the UE 102 determines that a condition for connecting to the candidate PSCell is satisfied, initiates and performs a random access procedure on the candidate PSCell, and communicates with the SN 106A (via the candidate PSCell) and the MN 104A in DC, in a procedure 691C. The procedure 691C may be similar to the procedure 691B of Fig. 6B, for example.

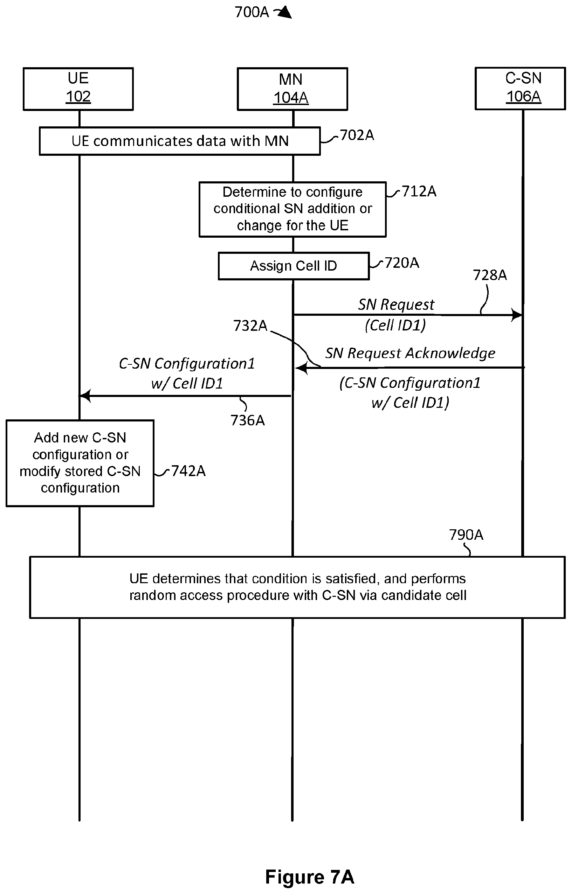

Referring next to Figs. 7A through 7C, conditional SN addition or SN change scenarios are shown in which the configuration identifier used to manage/track configurations is a Cell ID.

In Fig. 7A, in a conditional SN addition or SN change scenario 700A, the base station 104A operates as an MN for the UE 102, and the base station 106A operates as a C-SN for the UE 102. Initially, the UE 102 communicates 702A data (e.g., UL data PDUs and/or DL data PDUs) with the MN 104A, in single connectivity (SC) operation, or in dual connectivity with SN 104B not shown in the Fig. 7A. The MN 104A then at some point determines 712A to configure a conditional SN addition or SN change (e.g., to a candidate PSCell) for the UE 102, e.g., blindly or in response to detecting a suitable event (as discussed above with reference to Fig. 3A).

After the determination 712A, the MN 104A assigns 720A a Cell ID to the C-SN configuration. In the depicted scenario, the MN 104A assigns the identifier "Cell ID1" to the C-SN configuration, where Cell ID1 identifies the candidate cell (e.g., C-PSCell) for which the MN 104A is configuring the conditional SN addition or SN change. In various implementations, the Cell ID may be a physical cell ID (PCI, e.g., as specified in 3GPP TS 36.323 or 38.423), a cell global ID (CGI), or another suitable identifier of a particular cell in the wireless communication system 100. In some implementations, as discussed further below, the MN 104A does not assign 720A Cell ID1, but rather includes a cell identifier from which Cell ID1 may later be derived (e.g., by the C-SN 106A)."

In response to the determination 712A, and after assigning 720A Cell ID1, the MN 104A transmits 728A an *SN Request* message (e.g., a *SN Addition Request* or *SN Modification Request* message) that includes Cell ID1 to the C-SN 106A. In response, the C-SN 106A includes the assigned Cell ID (Cell ID1) in or with a C-SN configuration ("C-SN Configuration1"). The C-SN 106A includes C-SN Configuration1 in an *SNRequest Acknowledge* message (e.g., *SN Addition Request Acknowledge* or *SN Modification Request Acknowledge* message), and transmits 732A the *SN Request Acknowledge* message to the MN 104A in response to the *SN Request* message. In some implementations, Cell ID1 is a particular PCI value that the C-SN 106A derives from a CGI value that the MN 104A included in the *SN Request* message. In such an implementation, the "assigning" at event 720A may be considered to be the combination of (1) determining the CGI at the MN 104A, and (2) deriving the PCI from the CGI at the C-SN 106A. In other implementations, the same cell identifier (e.g., CGI or PCI) is included in both the *SN Request* message and the *SN Request Acknowledge* message. Apart from the use of Cell ID as a configuration identifier, C-SN Configuration1 may be similar to the C-SN Configuration1 discussed above with reference to Fig. 6A, and the *SN Request* and *SN Request Acknowledge* messages may be similar to the *SN Request* and *SN Request Acknowledge* messages discussed above with reference to Fig. 6A, for example.

The MN 104A then transmits 736A C-SN Configuration1 (including Cell ID1) to the UE 102. The UE 102 identifies the Cell ID and, based on its value (Cell ID1), adds or modifies 742A a configuration (e.g., in a manner similar to that discussed above with reference to Fig. 6A). In some scenarios, 712A through 742A may be repeated for one or more conditional SN additions and/or changes. For example, the MN 104A may later assign "Cell ID2" to a "C-SN Configuration2" that is received by the UE 102 (e.g., after another transmission similar to the transmission 736A). The UE 102 may then either store C-SN Configuration2 as a new configuration (if Cell ID2 is different from Cell ID1 and was not used for any other C-SN configurations already stored at the UE 102 and not yet released), or use C-SN Configuration2 to replace a portion or all of a pre-existing (i.e., already stored and not released) C-SN configuration that also includes (or is otherwise associated with) Cell ID2.

In one implementation and scenario, after the UE 102 adds 742A C-SN Configuration1 or modifies 742A a C-SN configuration using C-SN Configuration1, and before the UE 102 releases C-SN Configuration1, the UE 102 determines that a condition for accessing the candidate cell of the C-SN 106A is satisfied, and in response initiates and performs a random access procedure on the candidate cell, in a procedure 790A (e.g., similar to procedure 690A of Fig. 6A).

In one implementation, the C-SN configuration contains information specifying the condition for the conditional SN addition or change (i.e., a condition configuration for the condition). The MN 104A may generate an RRC container message including the C-SN configuration, and transmit the RRC container message (without a separate condition configuration) to the UE 102 at event 736A. Alternatively, the C-SN configuration may not contain the condition configuration, and the MN 104A includes the condition configuration along with the C-SN configuration in the *SN Request Acknowledge* message. In this implementation, the MN 104A generates an RRC container message including the C-SN configuration and the condition configuration, and transmits the RRC container message to the UE 102 at event 736A. In yet another implementation, the *SN Request Acknowledge* message and C-SN configuration do not contain the condition configuration, and the MN 104A configures the condition. In such implementations, too, the MN 104A generates an RRC container message including the C-SN configuration and the condition configuration, and transmits the RRC container message to the UE 102 at event 736A. In any of these implementations, the UE 102 may transmit an RRC container response message to the MN 104A, in response to receiving the RRC container message. Moreover, the MN 104A may transmit an *SN Reconfiguration Complete* message to the C-SN 106A, in response to receiving the RRC container message.

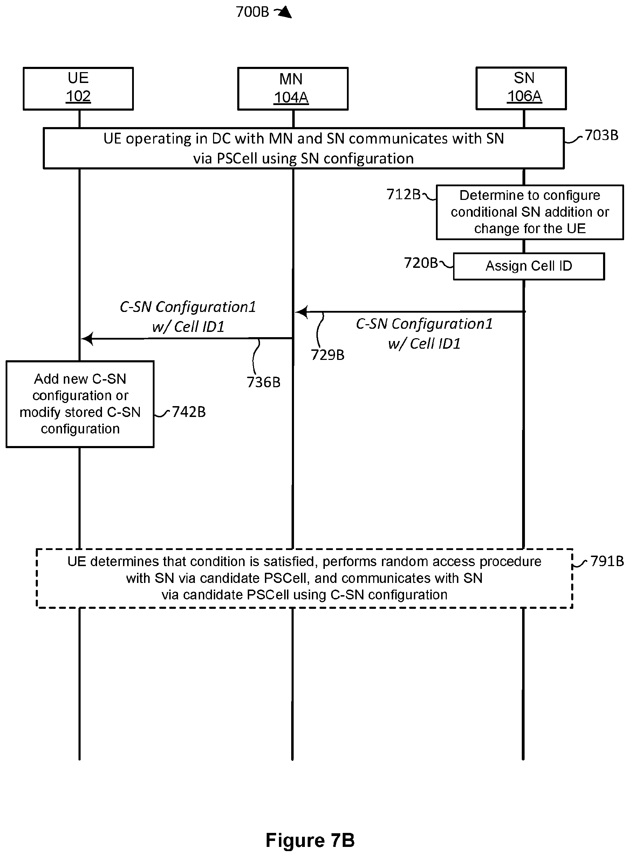

In Fig. 7B, the base station 104A serves as an MN for the UE 102 and the base station 106A serves as an SN (supporting a PSCell) for the UE 102, with the UE 102 communicating 703B with the MN 104A and SN 106A while operating in DC. The SN 106A then at some point determines 712B to configure a conditional SN change for the UE 102, e.g., blindly or in response to detecting a suitable event (e.g., as discussed above with reference to Fig. 3A). In the depicted scenario, the SN change is a change to a different PSCell that is also supported by the SN 106A.

After determining 712B to configure the conditional SN change, the SN 106A assigns 720B a specific Cell ID to the C-SN configuration associated with the conditional SN change. In the depicted scenario, the assigned identifier is "Cell ID1." The Cell ID may be similar to the Cell IDs discussed above with reference to Fig. 7A (e.g., a PCI or a CGI). After assigning 720B Cell ID1, the SN 106A transmits 729B a C-SN configuration that includes Cell ID1 ("C-SN Configuration1") to the MN 104A. After receiving C-SN Configuration1, the MN 104A transmits 736B C-SN Configuration1 (including Cell ID1) to the UE 102. The UE 102 then identifies the Cell ID and, based on its value (Cell ID1), adds or modifies 742B a configuration (e.g., as discussed above with reference to Fig. 6A). In some scenarios, 712B through 742B may be repeated for one or more conditional SN changes, as discussed above.

In one implementation and scenario, after the UE 102 adds 742B C-SN Configuration1 or modifies 742B a C-SN configuration using C-SN Configuration1, and before the UE 102 releases C-SN Configuration1, the UE 102 determines that a condition for connecting to the candidate PSCell is satisfied, initiates and performs a random access procedure on the candidate PSCell, and then communicates with the SN 106A on the candidate PSCell using C-SN Configuration1, in a procedure 791B (e.g., similar to procedure 691B).

In one implementation, the C-SN configuration generated by the SN 106A contains information specifying the condition for the conditional SN change (i.e., a condition configuration for the condition). The MN 104A may generate an RRC container message including the C-SN configuration, and transmit the RRC container message (without a separate condition configuration) to the UE 102 at event 736B. Alternatively, the C-SN configuration provided by the SN 106A may not contain the condition configuration, and the MN 104A includes the condition configuration along with the C-SN configuration in an RRC container message that the MN 104A transmits to the UE 102 at event 736B. In any of these implementations, the UE 102 may transmit an RRC container response message to the MN 104A, in response to receiving the RRC container message.

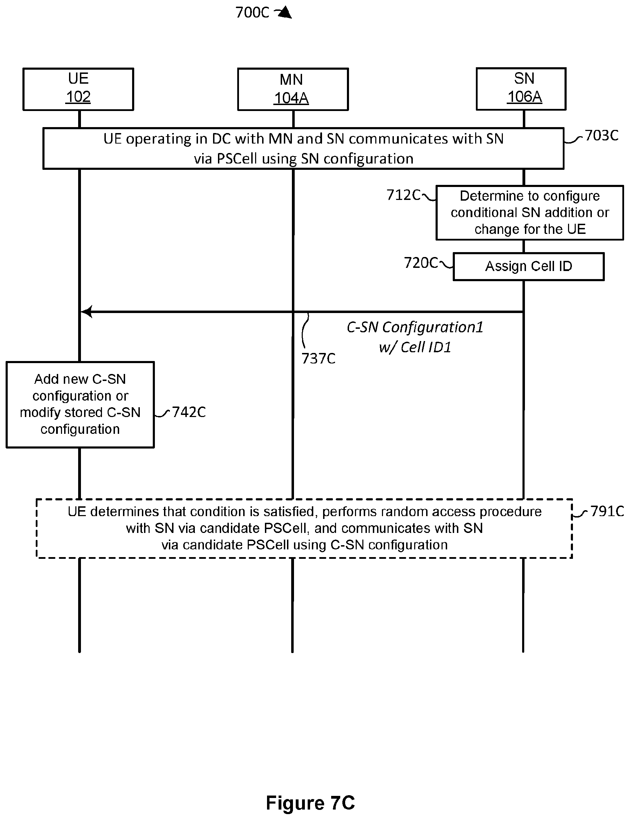

Fig. 7C depicts a conditional SN change scenario 700C similar to the scenario 700B, but in which the UE 102 is configured to an SRB with the SN, and therefore can receive the C-SN configuration directly from the SN. In the scenario 700C, the UE 102 is initially communicating in DC operation. Specifically, in Fig. 7C, the base station 104A serves as an MN for the UE 102 and the base station 106A serves as an SN (supporting a PSCell) for the UE 102, with the UE 102 communicating 703C with the MN 104A and SN 106A while operating in DC. The SN 106A then at some point determines 712C to configure a conditional SN change for the UE 102, e.g., blindly or in response to detecting a suitable event (e.g., as discussed above with reference to Fig. 3A). In the depicted scenario, the SN change is a change to a different PSCell that is also supported by the SN 106A.

After determining 712C to configure the conditional SN change, the SN 106A assigns 720C a specific Cell ID to the C-SN configuration associated with the conditional SN change. In the depicted scenario, the assigned identifier is "Cell ID1." The Cell ID may be similar to the Cell IDs discussed above with reference to Fig. 7A (e.g., PCI or CGI), for example.

After assigning 720C Cell ID1, the SN 106A transmits 737C a C-SN configuration that includes Cell ID1 ("C-SN Configuration1") to the UE 102. The C-SN configuration may be similar to the C-SN configuration described above with reference to Fig. 7A, for example. After receiving C-SN Configuration1, the UE 102 identifies the Cell ID and, based on its value (Cell ID1), adds or modifies 742C a configuration (e.g., as discussed above with reference to Fig. 6A). In some scenarios, 712C through 742C may be repeated for one or more conditional SN changes, as discussed above.

In one implementation and scenario, after the UE 102 adds 742C C-SN Configuration1 or modifies 742C a C-SN configuration using C-SN Configuration1, and before the UE 102 releases C-SN Configuration1, the UE 102 determines that a condition for connecting to the candidate PSCell is satisfied, initiates and performs a random access procedure on the candidate PSCell, and communicates with the SN 106A (via the candidate PSCell) and the MN 104A in DC, in a procedure 791C. The procedure 791C may be similar to the procedure 691B of Fig. 6B, for example.

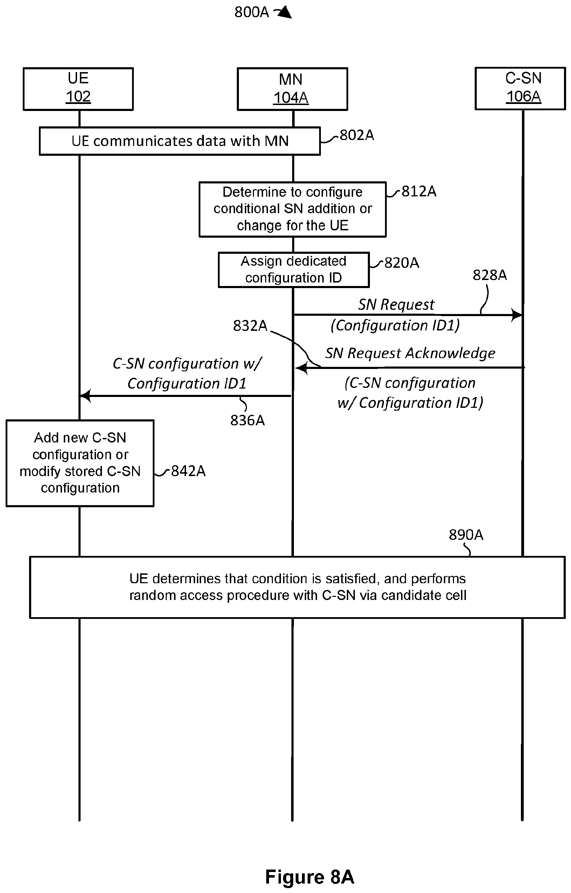

Referring next to Figs. 8A through 8F, conditional SN addition or SN change scenarios are shown in which the configuration identifier used to manage/track configurations is a dedicated configuration identifier.

In Fig. 8A, in a conditional SN addition or SN change scenario 800A, the base station 104A operates as an MN for the UE 102, and the base station 106A operates as a C-SN for the UE 102. Initially, the UE 102 communicates 802A data (e.g., UL data PDUs and/or DL data PDUs) with the MN 104A, in single connectivity (SC) operation, or in dual connectivity with SN 104B not shown in the Fig. 8A. The MN 104A then at some point determines 812A to configure a conditional SN addition or SN change for the UE 102, e.g., blindly or in response to detecting a suitable event (as discussed above with reference to Fig. 3A).

After the determination 812A, the MN 104A assigns 820A a dedicated configuration identifier to the C-SN configuration. In the depicted scenario, the MN 104A assigns the identifier "Configuration ID1" to the C-SN configuration. The dedicated configuration identifier may be similar to that described above with reference to Fig. 5A, for example.

After assigning 820A Configuration ID1, the MN 104A transmits 828A an *SN Request* message (e.g., a *SN Addition Request* or *SN Modification Request* message) that includes Configuration ID1 to the C-SN 106A. In one implementation, the MN 104A determines a candidate PSCell at event 812A. In another implementation, the C-SN 106A configures a candidate PSCell in the C-SN configuration. The candidate PSCell is associated to a cell ID (e.g., Cell ID1). In some implementations, the C-SN 106A determines the candidate PSCell based on the received (from MN 104A to C-SN 106A) RRC configuration information (e.g., *CG-ConfigInfo* as defined in TS 38.331) in the *SN Request* message 828A. In response, the C-SN 106A includes the assigned configuration ID (Configuration ID1) in or with a C-SN configuration ("C-SN Configuration!"). The C-SN 106A includes C-SN Configuration1 in an *SN Request Acknowledge* message (e.g., *SN Addition Request Acknowledge* or *SN Modification Request Acknowledge* message), and transmits 832A the *SN Request Acknowledge* message to the MN 104A in response to the *SN Request* message. Apart from the use of a dedicated configuration identifier, C-SN Configuration1 may be similar to the C-SN Configuration1 discussed above with reference to Fig. 6A, and the *SN Request* and *SN Request Acknowledge* messages may be similar to the *SN Request* and *SN Request Acknowledge* messages discussed above with reference to Fig. 6A, for example.

The MN 104A then transmits 836A C-SN Configuration1 (including Configuration ID1) to the UE 102. The UE 102 identifies the configuration identifier and, based on its value (Configuration ID1), adds or modifies 842A a configuration (e.g., in a manner similar to that discussed above with reference to Fig. 6A). In some scenarios, 812A through 842A may be repeated for one or more conditional SN additions and/or changes. For example, the MN 104A may later assign "Configuration ID2" to a "C-SN Configuration2" that is received by the UE 102 (e.g., after another transmission similar to the transmission 836A). The UE 102 may then either store C-SN Configuration2 as a new configuration (if Configuration ID2 is different from Configuration ID1 and was not used for any other CHO commands already stored at the UE 102 and not yet released), or use C-SN Configuration2 to replace a portion or all of a pre-existing (i.e., already stored and not released) C-SN configuration that also includes (or is otherwise associated with) Configuration ID2.

In one implementation and scenario, after the UE 102 adds 842A C-SN Configuration1 or modifies 842A a C-SN configuration using C-SN Configuration1, and before the UE 102 releases C-SN Configuration1, the UE 102 determines that a condition for accessing the candidate cell of the C-SN 106A is satisfied, and in response initiates and performs a random access procedure on the candidate cell, in a procedure 890A (e.g., similar to procedure 690A of Fig. 6A).

In one implementation, the C-SN configuration contains information specifying the condition for the conditional SN addition or change (i.e., a condition configuration for the condition). The MN 104A may generate an RRC container message including the C-SN configuration, and transmit the RRC container message (without a separate condition configuration) to the UE 102 at event 836A. Alternatively, the C-SN configuration may not contain the condition configuration, and the MN 104A includes the condition configuration along with the C-SN configuration in the *SN Request Acknowledge* message. In this implementation, the MN 104A generates an RRC container message including the C-SN configuration and the condition configuration, and transmits the RRC container message to the UE 102 at event 836A. In yet another implementation, the *SN Request Acknowledge* message and C-SN configuration do not contain the condition configuration, and the MN 104A configures the condition. In such implementations, too, the MN 104A generates an RRC container message including the C-SN configuration and the condition configuration, and transmits the RRC container message to the UE 102 at event 836A. In any of these implementations, the UE 102 may transmit an RRC container response message to the MN 104A, in response to receiving the RRC container message. Moreover, the MN 104A may transmit an *SN Reconfiguration Complete* message to the C-SN 106A, in response to receiving the RRC container message.

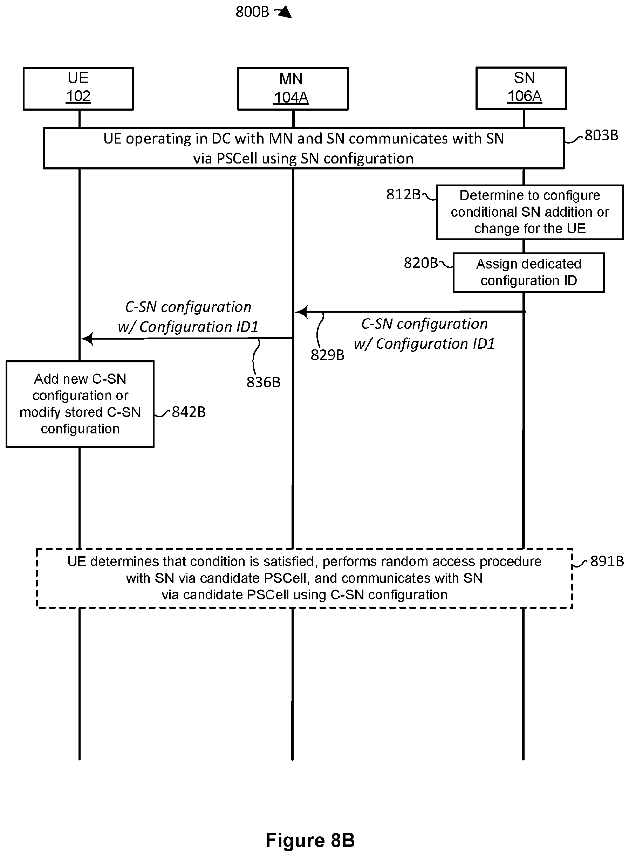

In Fig. 8B, the base station 104A serves as an MN for the UE 102 and the base station 106A serves as an SN (providing a PSCell) for the UE 102, with the UE 102 communicating 803B with the MN 104A and SN 106A while operating in DC. The SN 106A then at some point determines 812B to configure a conditional SN change for the UE 102, e.g., blindly or in response to detecting a suitable event (e.g., as discussed above with reference to Fig. 3A). In the depicted scenario, the SN change is a change to a different PSCell (i.e., a candidate PSCell) that is also supported by the SN 106A.

After determining 812B to configure the conditional SN change, the SN 106A assigns 820B a dedicated configuration identifier to the C-SN configuration associated with the conditional SN change. The SN 106A configures a candidate PSCell in the C-SN configuration. The candidate PSCell is associated to a cell ID (e.g., Cell ID1). In some implementations, the SN 106A determines the candidate PSCell based on one or more measurement results received from the UE 102 (e.g., via SRB3, MN 104A or a physical uplink control channel), or measured by the SN 106A on one or more transmissions from the UE 102. In the depicted scenario, the assigned identifier is "Configuration ID1." The dedicated configuration identifier may be similar to that described above with reference to Fig. 5A, for example.

After assigning 820B Configuration ID1, the SN 106A transmits 829B a C-SN configuration and the Configuration ID1 to the MN 104A. In some implementations, the SN 106A includes Configuration ID1 in the C-SN configuration ("C-SN Configuration1"). The SN 106A in some implementations may send an SN message including the C-SN Configuration1 to the MN 104A at event 829B. After receiving C-SN Configuration1, the MN 104A transmits 836B C-SN Configuration1 (including Configuration ID1) to the UE 102. In other implementations, the SN 106A does not include the Configuration ID1 in C-SN Configuration1. Instead, the SN 106A in some implementations sends an SN message including the C-SN Configuration1 and the Configuration ID1 to the MN 104A at event 829B. After receiving the C-SN Configuraiton1 and the Configuration ID1, the MN 104A includes the Configuration ID1 along with the C-SN Configuration1 in an RRC container message, instead of the C-SN Configuration1 alone, and transmits 836B the RRC container message to the UE 102. In some implementations, the SN message can be a *SN Modification Required* message (e.g., S-NODE MODIFICATION REQUIRED or SgNB MODIFICATION REQUIRED), *SN Modification Request Acknowledge* message (e.g., S-NODE MODIFICATION REQUEST ACKNOWLEDGE or SgNB MODIFICATION REQUEST ACKNOWLEDGE), or *SN Change Required* message (e.g., S-NODE CHANGE REQUIRED or SgNB CHANGE REQUIRED), *SN Release Required* message (e.g., S-NODE RELEASE REQUIRED or SgNB RELEASE REQUIRED) or *SN Release Request Acknowledge* message (e.g., S-NODE RELEASE REQUEST ACKNOWLEDGE or SgNB RELEASE REQUEST ACKNOWLEDGE).

The UE 102 then identifies the configuration identifier and, based on its value (Configuration ID1), adds or modifies (e.g., replaces) 842B a stored C-SN configuration (e.g., adds the C-SN Configuration1, or replaces a stored C-SN configuration with the C-SN Configuraion1, e.g., as discussed above with reference to Fig. 6A). In some scenarios, 812B through 842B may be repeated for one or more conditional SN changes, as discussed above. In one implementation and scenario, after the UE 102 adds 842B C-SN Configuration1 or modifies 842B a C-SN configuration using C-SN Configuration1, and before the UE 102 releases C-SN Configuration1, the UE 102 determines that a condition for connecting to the candidate PSCell is satisfied, initiates and performs a random access procedure on the candidate PSCell, and then communicates with the SN 106A on the candidate PSCell using C-SN Configuration1, in a procedure 891B (e.g., similar to procedure 691B of Fig. 6B).

In one implementation, the C-SN configuration generated by the SN 106A contains information specifying the condition for the conditional SN change (i.e., a condition configuration for the condition). The MN 104A may generate the RRC container message including the C-SN configuration, and transmit the RRC container message (without a separate condition configuration) to the UE 102 at event 836B. Alternatively, the C-SN configuration provided by the SN 106A may not contain the condition configuration, and the MN 104A includes the condition configuration along with the C-SN configuration in the RRC container message that the MN 104A transmits to the UE 102 at event 836B. In any of these implementations, the UE 102 may transmit an RRC container response message to the MN 104A, in response to receiving the RRC container message.

In some implementations, the SN 106A has a table (e.g., Table 1-1) for the UE 102 to select a configuration ID for a C-SN configuration configuring a candidate PSCell associated to a cell ID. The table includes entries of cell ID(s), configuration ID(s), and configuration status (e.g., whether a cell has been configured to a UE 102 for a Conditional PSCell Addition or Change (CPAC)). In some implementations, the MN 104A or SN 106A may be configured with the table by an O&M node. The O&M node may reconfigure (e.g., update) the table. For example, the O&M node may reconfigure the table by adding a new entry including a new cell ID and a new configuration ID with configuration status "Not configured." In other implementations, the SN 106A may be configured with the table by default, or manually.

In one example, the SN 106A maintains the table, and the SN 106A can initialize the table as Table 1-2 before the SN 106A generates a C-SN configuration. If a cell ID of the candidate PSCell is Cell ID1, the SN 106A sets the configuration status for the Cell ID1 to "Configured" in response to the determination 812B, as in Table 1-3. The SN 106A uses the Configuration ID1 for the C-SN Configuration1 according to the table because the C-SN Configuration1 is for the Cell ID1 and in turn the MN 104A transmits the Configuration ID1 and C-SN Configuration1 at event 836B. That is, the SN 106A uses a particular cell ID (e.g., the Cell ID1) as an index to look up the table if the SN 106A determines to configure CPAC to a cell identified by the particular cell ID.

In another example, the SN 106A has/stores the table as Table 1-3 before the SN 106A generates the C-SN configuration transmitted at event 829B. If a cell ID of the candidate PSCell is Cell ID1, the SN 106A may or may not set the configuration status for the Cell ID1 to "Configured" in response to the determination 812B, as in Table 1-3. Because the C-SN Configuration1 is for the Cell ID1, the SN 106A uses the Configuration ID1 for the C-SN Configuration1 according to the table, and transmits the Configuration ID1 and C-SN Configuration1 at event 829B. If a cell ID of the candidate PSCell is Cell ID2, the SN 106A set the configuration status for the Cell ID2 to "configured" in response to the determination 812B, as in Table 1-4. Because the C-SN Configuration2 is for the Cell ID2, the SN 106A uses the Configuration ID2 for the C-SN Configuration2 according to the table, and transmits the Configuration ID2 and C-SN Configuration2 at event 829B. That is, the SN 106A uses a particular cell ID (e.g., the Cell ID1) as an index to look up the table if the SN 106A determines to configure CPAC to the particular cell ID.

If the SN 106A determines to release a C-SN configuration for a Cell ID which has configuration status "Configured," the SN 106A looks up the table to find a configuration ID for the cell ID by using the cell ID as an index, and may transmit a CPAC release configuration including the configuration ID to the UE 102 via the MN 104A. For example, the SN 106A includes the CPAC release configuration at event 829B and in turn, the MN 104 includes the CPAC release configuration at event 836B. The UE 102 releases the C-SN configuration according to the configuration ID in the CPAC release configuration. For example, the SN 106A determines to release a C-SN configuration for the Cell ID1. In response to the determination, the SN 106A looks up the table (e.g., Table 1-3 or Table 1-4) and identifies the configuration ID for the cell ID1 is the Configuration ID1. Then the SN 106A includes the Configuration ID1 in the CPAC release configuration and transmits the CPAC release configuration to the UE 102 via the MN 104A. For example, the SN 106A includes the CPAC release configuration at event 829B and in turn, the MN 104 includes the CPAC release configuration at event 836B. The UE 102 releases the C-SN Configuration1 according to the Configuration ID1 in the CPAC release configuration. If the cell ID has configuration status "Not configured" or is not found in the table, the SN 106A may not transmit any CPAC release configuration to the UE 102 to release a C-SN configuration for the cell ID.

In other implementations, the SN 106A has/stores a table (e.g., Table 2-1) for the UE 102 to select a configuration ID for a C-SN configuration (i.e., assign a new configuration ID or identify an existing configuration ID). The table includes entries of cell ID(s) and configuration ID(s).

In one example, the SN 106A can initialize the table as Table 2-1 (i.e., empty) before the SN 106A generates a C-SN configuration (e.g., the C-SN Configuration1 transmitted at event 829B). If a cell ID of the candidate PSCell is Cell ID1 and the Cell ID1 is not in the table, the SN 106A assigns a new configuration ID (e.g., Configuration ID1) for the Cell ID1 or the C-SN configuration in response to the determination 812B, as in Table 2-2.

In another example, the SN 106A has/stores the table as Table 2-2 before the SN 106A generates the C-SN configuration transmitted at event 829B (e.g., C-SN Configuration2). If a cell ID of the candidate PSCell is Cell ID1, the SN 106A uses the Configuration ID1 for the C-SN Configuration2 according to the table and transmits the Configuration ID1 and C-SN Configuration2 at event 836B. If a cell ID of the candidate PSCell is Cell ID2 and the Cell ID2 is not in the table, the SN 106A assigns a new configuration ID (e.g., Configuration ID2) for the Cell ID2 or the C-SN Configuration2, in response to the determination 812B, as in Table 2-3, and the MN 104A transmits the Configuration ID2 and C-SN Configuration2 at event 836B. That is, the SN 106A uses a particular cell ID (e.g., the Cell ID1) as an index to look up the table if the SN 106A determines to configure CPAC to the particular cell ID.

If the SN 106A determines to release a C-SN configuration for a cell ID, the SN 106A looks up the table to find a configuration ID for the cell ID by using the cell ID as an index, and may transmit a CPAC release configuration including the configuration ID. The UE 102 releases the C-SN configuration according to the configuration ID in the CPAC release configuration. For example, the SN 106A determines to release a C-SN configuration for the Cell ID1. In response to the determination, the SN 106A looks up the table (e.g., Table 1-3 or Table 1-4) and identifies that the configuration ID for the Cell ID1 is the Configuration ID1. Then the SN 106A includes the Configuration ID1 in the CPAC release configuration and transmits the CPAC release configuration to the UE 102. The UE 102 releases the C-SN Configuration1 according to the Configuration ID1 in the CPAC release configuration. If the cell ID is not found in the table, the SN 106A may not transmit any CPAC release configuration to the UE 102 to release a C-SN configuration for the cell ID.

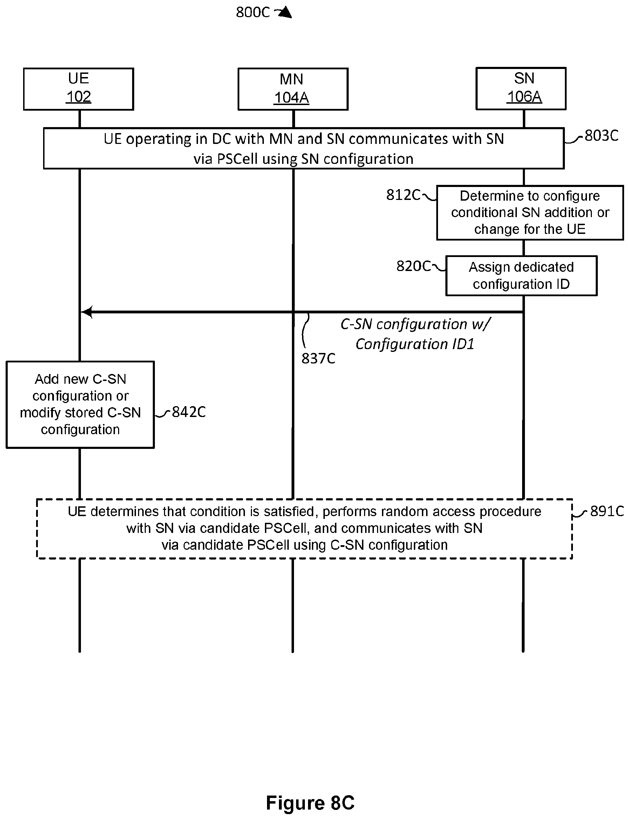

Fig. 8C depicts a conditional SN change scenario 800C similar to the scenario 800B, but in which the UE 102 is configured to an SRB with the SN, and therefore can receive the C-SN configuration directly from the SN. In the scenario 800C, the UE 102 is initially communicating in DC operation. Specifically, in Fig. 8C, the base station 104A serves as an MN for the UE 102 and the base station 106A serves as an SN (supporting a PSCell) for the UE 102, with the UE 102 communicating 803C with the MN 104A and SN 106A while operating in DC. The SN 106A then at some point determines 812C to configure a conditional SN change for the UE 102, e.g., blindly or in response to detecting a suitable event (e.g., as discussed above with reference to Fig. 3A). In the depicted scenario, the SN change is a change to a different PSCell that is also supported by the SN 106A.

After determining 812C to configure the conditional SN change, the SN 106A assigns 820C a dedicated configuration identifier to the C-SN configuration associated with the conditional SN change. In the depicted scenario, the assigned identifier is "Configuration ID1." The dedicated configuration identifier may be similar to that discussed above with reference to Fig. 5A, for example.

After assigning 820C Cell ID1, the SN 106A transmits 837C a C-SN configuration that includes Configuration ID1 ("C-SN Configuration1") to the UE 102. The C-SN configuration may be similar to the C-SN configuration described above with reference to Fig. 8A, for example. After receiving C-SN Configuration1, the UE 102 identifies the configuration identifier and, based on its value (Configuration ID1), adds or modifies 842C a configuration (e.g., as discussed above with reference to Fig. 6A). In some scenarios, 812C through 842C may be repeated for one or more conditional SN changes, as discussed above.

In one implementation and scenario, after the UE 102 adds 842C C-SN Configuration1 or modifies 842C a C-SN configuration using C-SN Configuration1, and before the UE 102 releases C-SN Configuration1, the UE 102 determines that a condition for connecting to the candidate PSCell is satisfied, initiates and performs a random access procedure on the candidate PSCell, and communicates with the SN 106A (via the candidate PSCell) and the MN 104A in DC, in a procedure 891C (e.g., similar to procedure 691B of Fig. 6B).

In some implementations, the SN 106A has/stores a table (e.g., Table 1-1) for the UE 102 to select a configuration ID for a C-SN configuration. The table includes entries of cell ID(s), configuration ID(s), and configuration status (e.g., whether a cell has been configured to a UE 102 for a CPAC). In some implementations, the SN 106A may be configured with the table by an O&M node. The O&M node may reconfigure (e.g., update) the table. For example, the O&M node may reconfigure the table by adding a new entry including a new cell ID and a new configuration ID with configuration status "Not configured." In other implementations, the SN 106A may be configured with the table by default or manually.

In one example, the SN 106A maintains the table and the SN 106A can initialize the table as Table 1-2 before the SN 106A generates a C-SN configuration. If a cell ID of the candidate PSCell is Cell ID1, the SN 106A sets the configuration status for the Cell ID1 to "Configured" in response to the determination 812C, as in Table 1-3. Because the C-SN Configuration1 is for the Cell ID1, the SN 106A uses the Configuration ID1 for the C-SN Configuration1 according to the table, and in turn transmits the Configuration ID1 and C-SN Configuration1 at event 837C. That is, the SN 106A uses a particular cell ID (e.g., the Cell ID1) as an index to look up the table if the SN 106A determines to configure CPAC to the particular cell ID using SRB3.

In another example, the SN 106A has/stores the table as Table 1-3 before the SN 106A generates the C-SN configuration transmitted at event 837C. If a cell ID of the candidate PSCell is Cell ID1, the SN 106A may or may not set the configuration status for the Cell ID1 to "Configured" in response to the determination 812C, as in Table 1-3. Because the C-SN Configuration1 is for the Cell ID1, the SN 106A uses the Configuration ID1 for the C-SN Configuration1 according to the table, and transmits the Configuration ID1 and C-SN Configuration1 at event 837C. If a cell ID of the candidate PSCell is Cell ID2, the SN 106A sets the configuration status for the Cell ID2 to "Configured" in response to the determination 812C, as in Table 1-4. Because the C-SN Configuration2 is for the Cell ID2, the SN 106A uses the Configuration ID2 for the C-SN Configuration! according to the table, and transmits the Configuration ID2 and C-SN Configuration! at event 837C. That is, the SN 106A uses a particular cell ID (e.g., the Cell ID1) as an index to look up the table if the SN 106A determines to configure CPAC to the particular cell ID.

If the SN 106A determines to release a C-SN configuration for a cell ID which has configuration status "Configured," the SN 106A looks up the table to find a configuration ID for the cell ID by using the cell ID as an index, and may transmit a CPAC release configuration including the configuration ID. The UE 102 releases the C-SN configuration according to the configuration ID in the CPAC release configuration. For example, the SN 106A determines to release a C-SN configuration for the Cell ID1. In response to the determination, the SN 106A looks up the table (e.g., Table 1-3 or Table 1-4) and identifies that the configuration ID for the Cell ID1 is the Configuration ID1. Then the SN 106A includes the Configuration ID1 in the CPAC release configuration and transmit the CPAC release configuration to the UE 102. The UE 102 releases the C-SN Configuration1 according to the Configuration ID1 in the CPAC release configuration. If the cell ID has configuration status "Not configured" or is not found in the table, the SN 106A may not transmit any CPAC release configuration to the UE 102 to release a C-SN configuration for the cell ID.

In other implementations, the SN 106A has/stores a table (e.g., Table 2-1) for the UE 102 to select a configuration ID for a C-SN configuration (i.e., assign a new configuration ID or identify an existing configuration ID). The table includes entries of cell ID(s) and configuration ID(s).

In one example, the SN 106A can initialize the table as Table 2-1 (i.e., empty) before the SN 106A generates a C-SN configuration (e.g., the C-SN Configuration1 transmitted at 837C). If a cell ID of the candidate PSCell is Cell ID1 and the Cell ID1 is not in the table, the SN 106A assigns a new configuration ID (e.g., Configuration ID1) for the Cell ID1 or the C-SN configuration in response to the determination 812C, as in Table 2-2.

In another example, the SN 106A has/stores the table as Table 2-2 before the SN 106A generates the C-SN configuration 837C (e.g., C-SN Configuration2). If a cell ID of the candidate PSCell is Cell ID1, the SN 106A uses the Configuration ID1 for the C-SN Configuration! according to the table and transmits the Configuration ID1 and C-SN Configuration! at event 837C. If a cell ID of the candidate PSCell is Cell ID2 and the Cell ID2 is not in the table, the SN 106A assigns a new configuration ID (e.g., Configuration ID2) for the Cell ID2 or the C-SN Configuration2 in response to the determination 812C, as in Table 2-3, and transmits the Configuration ID2 and C-SN Configuration2 at event 837C. That is, the SN 106A uses a particular cell ID (e.g., the Cell ID1) as an index to look up the table if the SN 106A determines to configure CPAC to the particular cell ID.

If the SN 106A determines to release a C-SN configuration for a cell ID, the SN 106A looks up the table to find a configuration ID for the cell ID by using the cell ID as an index, and may transmit a CPAC release configuration including the configuration ID. The UE 102 releases the C-SN configuration according to the configuration ID in the CPAC release configuration. For example, the SN 106A determines to release a C-SN configuration for the Cell ID1. In response to the determination, the SN 106A looks up the table (e.g., Table 1-3 or Table 1-4) and identifies that the configuration ID for the Cell ID1 is the Configuration ID1. Then the SN 106A includes the Configuration ID1 in the CPAC release configuration, and transmits the CPAC release configuration to the UE 102. The UE 102 releases the C-SN Configuration1 according to the Configuration ID1 in the CPAC release configuration. If the cell ID is not found in the table, the SN 106A may not transmit any CPAC release configuration to the UE 102 to release a C-SN configuration for the cell ID.

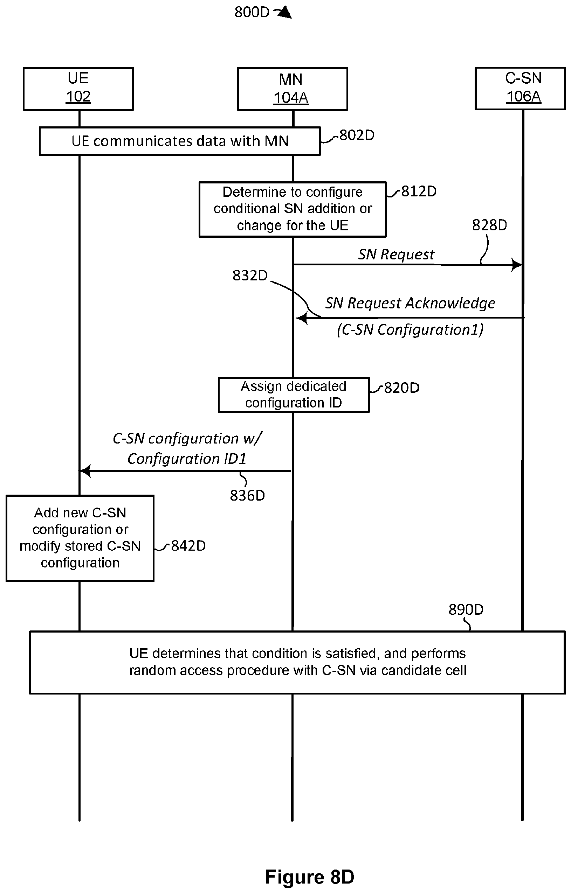

In Fig. 8D, in a conditional SN addition or SN change scenario 800D, the base station 104A operates as an MN for the UE 102, and the base station 106A operates as a C-SN for the UE 102. Initially, the UE 102 communicates 802D data (e.g., UL data PDUs and/or DL data PDUs) with the MN 104A, in single connectivity (SC) operation, or in dual connectivity with SN 104B not shown in the Fig. 8D. The MN 104A then at some point determines 812D to configure a conditional SN addition or SN change for the UE 102, e.g., blindly or in response to detecting a suitable event (as discussed above with reference to Fig. 3A).

After the determination 812D, the MN 104A transmits 828D an *SN Request* message (e.g., a *SN Addition Request* or *SN Modification Request* message), which does not include a dedicated configuration identifier, to the C-SN 106A. In one implementation, the MN 104A determines a candidate PSCell at event 812D. In another implementation, the C-SN 106A configures a candidate PSCell in the C-SN configuration. The candidate PSCell is associated to a cell ID (e.g., Cell ID1). In some implementations, the C-SN 106A determines the candidate PSCell based on the received MN-to-SN RRC configuration information (e.g., *CG-ConfigInfo* defined in TS 38.331) in the *SNRequest* message 828D. In response, the C-SN 106A transmits 832D an *SN Request Acknowledge* message (e.g., *SN Addition Request Acknowledge* or *SN Modification Request Acknowledge* message) that includes a C-SN configuration for the C-SN 106A ("C-SN Configuration1") to the MN 104A. Apart from lacking a configuration identifier, C-SN Configuration1 may be similar to the C-SN Configuration1 discussed above with reference to Fig. 6A, and the *SNRequest* and *SN Request Acknowledge* messages may be similar to the *SN Request* and *SN Request Acknowledge* messages discussed above with reference to Fig. 6A, for example. In one implementation, along with the C-SN Configuration, the *SN Request Acknowledge* message contains the cell ID.

After receiving the *SN Request Acknowledge* message, the MN 104A assigns 820D a dedicated configuration identifier to the C-SN configuration. In the depicted scenario, the MN 104A assigns the identifier "Configuration ID1" to the C-SN configuration. The dedicated configuration identifier may be similar to that described above with reference to Fig. 5A, for example.

The MN 104A then transmits 836D C-SN Configuration1 to the UE 102, but now with the C-SN Configuration1 including Configuration ID1, or with Configuration ID1 and C-SN Configuration1 both being contained in the same RRC container message. The UE 102 identifies the configuration identifier and, based on its value (Configuration ID1), adds or modifies 842D a configuration (e.g., in a manner similar to that discussed above with reference to Fig. 6A). In some scenarios, 812D through 842D may be repeated for one or more conditional SN additions and/or changes, as discussed above.

In one implementation and scenario, after the UE 102 adds 842D C-SN Configuration1 or modifies 842D a C-SN configuration using C-SN Configuration1, and before the UE 102 releases C-SN Configuration1, the UE 102 determines that a condition for accessing the candidate cell of the C-SN 106A is satisfied, and in response initiates and performs a random access procedure on the candidate cell, in a procedure 890D (e.g., similar to procedure 690A of Fig. 6A).

In one implementation, the C-SN configuration contains information specifying the condition for the conditional SN addition or change (i.e., a condition configuration for the condition). The MN 104A may generate an RRC container message including the C-SN configuration, and transmit the RRC container message (without a separate condition configuration) to the UE 102 at event 836D. Alternatively, the C-SN configuration may not contain the condition configuration, and the C-SN 106A includes the condition configuration along with the C-SN configuration in the *SN Request Acknowledge* message. In this implementation, the MN 104A generates an RRC container message including the C-SN configuration and the condition configuration, and transmits the RRC container message to the UE 102 at event 836D. In yet another implementation, the *SN Request Acknowledge* message and C-SN configuration do not contain the condition configuration, and the MN 104A configures the condition. In such implementations, too, the MN 104A generates an RRC container message including the C-SN configuration and the condition configuration, and transmits the RRC container message to the UE 102 at event 836D. In any of these implementations, the UE 102 may transmit an RRC container response message to the MN 104A, in response to receiving the RRC container message. Moreover, the MN 104A may transmit an *SN Reconfiguration Complete* message to the C-SN 106A, in response to receiving the RRC container message. If the Configuration ID1 and C-SN Configuration1 both are contained in the RRC container message (i.e., the configuration ID is not included in the C-SN configuration), the MN 104A includes the configuration ID in the RRC container message.

In some implementations, the MN 104A has/stores a table (e.g., Table 1-1) for the UE 102 to select a configuration ID for a C-SN configuration configuring a candidate PSCell associated to a cell ID. The table consists of entries of cell ID(s), configuration ID(s), and configuration status (e.g., whether a cell has been configured to a UE 102 for a CPAC). In some implementations, the MN 104A may be configured with the table by an operation and maintenance (O&M) node. The O&M node may reconfigure (e.g., update) the table. For example, the O&M node may reconfigure the table by adding a new entry including a new cell ID and a new configuration ID with configuration status "Not configured." In other implementations, the MN 104A may be configured with the table by default or manually.

In one example, the MN 104A maintains the table and the MN 104A can initialize the table as Table 1-2 before the MN 104A receives a C-SN configuration. If a cell ID of the candidate PSCell received in event 832D is Cell ID1, the MN 104A sets the configuration status for the Cell ID1 to "Configured" as in Table 1-3. Because the C-SN Configuration1 is for the Cell ID1, the MN 104A uses the Configuration ID1 for the C-SN Configuration1 according to the table, and in turn the MN 104A transmits the Configuration ID1 and C-SN Configuration1 at event 836D. That is, the MN 104A uses a particular cell ID (e.g., the Cell ID1) as an index to look up the table if the C-SN 106A to configure CPAC to the particular cell ID.

In another example, the MN 104A has the table as Table 1-3 before the MN 104A receives the C-SN configuration transmitted at event 832D. If a cell ID of the candidate PSCell is Cell ID1, the MN 104A may or may not set the configuration status for the Cell ID1 to "Configured" as in Table 1-3. Because the C-SN Configuration1 is for the Cell ID1, the MN 104A uses the Configuration ID1 for the C-SN Configuration1 according to the table, and transmits the Configuration ID1 and C-SN Configuration! at event 836D. If a cell ID of the candidate PSCell is Cell ID2, the MN 104A set the configuration status for the Cell ID2 to "Configured" as in Table 1-4. Because the C-SN Configuration2 is for the Cell ID2, the MN 104A uses the Configuration ID2 for the C-SN Configuration2 according to the table, and transmits the Configuration ID2 and C-SN Configuration2 at event 836D. That is, the MN 104A uses a particular cell ID (e.g., the Cell ID1) as an index to look up the table if the C-SN 106A determines to configure CPAC to the particular cell ID.

If the C-SN 106A determines to release a C-SN configuration for a cell ID which has configuration status "Configured," the MN 104A looks up the table to find a configuration ID for the cell ID by using the cell ID as an index, and may transmit a CPAC release configuration including the configuration ID. The UE 102 releases the C-SN configuration according to the configuration ID in the CPAC release configuration. For example, the C-SN 106A determines to release a C-SN configuration for the Cell ID1. After receiving a PSCell to release, the MN 104A looks up the table (e.g., Table 1-3 or Table 1-4) and identifies that the configuration ID for the Cell ID1 is the Configuration ID1. The MN 104A then includes the Configuration ID1 in the CPAC release configuration, and transmits the CPAC release configuration to the UE 102. The UE 102 releases the C-SN Configuration1 according to the Configuration ID1 in the CPAC release configuration. If the cell ID has configuration status "Not configured" or is not found in the table, the MN 104A may not transmit any CPAC release configuration to the UE 102 to release a C-SN configuration for the cell ID.

In other implementations, the MN 104A has a table (e.g., Table 2-1) for the UE 102 to select a configuration ID for a C-SN configuration (i.e., assign a new configuration ID or identify an existing configuration ID). The table includes entries of cell ID(s) and configuration ID(s).

In one example, the MN 104A can initialize the table as Table 2-1 (i.e., empty) before the MN 104A receives a C-SN configuration (e.g., the C-SN Configuration1 transmitted at event 832D). If a cell ID of the candidate PSCell is Cell ID1 and the Cell ID1 is not in the table, the MN 104A assigns a new configuration ID (e.g., Configuration ID1) for the Cell ID1 or the C-SN configuration, as in Table 2-2.

In another example, the MN 104A has/stores the table as Table 2-2 before the MN 104A receives the C-SN configuration transmitted at event 832D (e.g., C-SN Configuration2). If a cell ID of the candidate PSCell is Cell ID1, the MN 104A uses the Configuration ID1 for the C-SN Configuration2 according to the table and transmits the Configuration ID1 and C-SN Configuration2 at event 836D. If a cell ID of the candidate PSCell is Cell ID2 and the Cell ID2 is not in the table, the MN 104A assigns a new configuration ID (e.g., Configuration ID2) for the Cell ID2 or the C-SN Configuration2 as in Table 2-3, and the MN 104A transmits the Configuration ID2 and C-SN Configuration2 at event 836D. That is, the MN 104A uses a particular cell ID (e.g., the Cell ID1) as an index to look up the table if the MN 104A determines to configure CPAC to the particular cell ID.

If the C-SN 106A determines to release a C-SN configuration for a Cell ID, the MN 104A looks up the table to find a configuration ID for the cell ID by using the cell ID as an index, and may transmit a CPAC release configuration including the configuration ID. The UE 102 releases the C-SN configuration according to the configuration ID in the CPAC release configuration. For example, the C-SN 106A determines to release a C-SN configuration for the Cell ID1. In response to the determination, the MN 104A looks up the table (e.g., Table 1-3 or Table 1-4) and identifies that the configuration ID for the Cell ID1 is the Configuration ID1. The MN 104A then includes the Configuration ID1 in the CPAC release configuration, and transmits the CPAC release configuration to the UE 102. The UE 102 releases the C-SN Configuration1 according to the Configuration ID1 in the CPAC release configuration. If the cell ID is not found in the table, the MN 104A may not transmit any CPAC release configuration to the UE 102 to release a C-SN configuration for the cell ID.

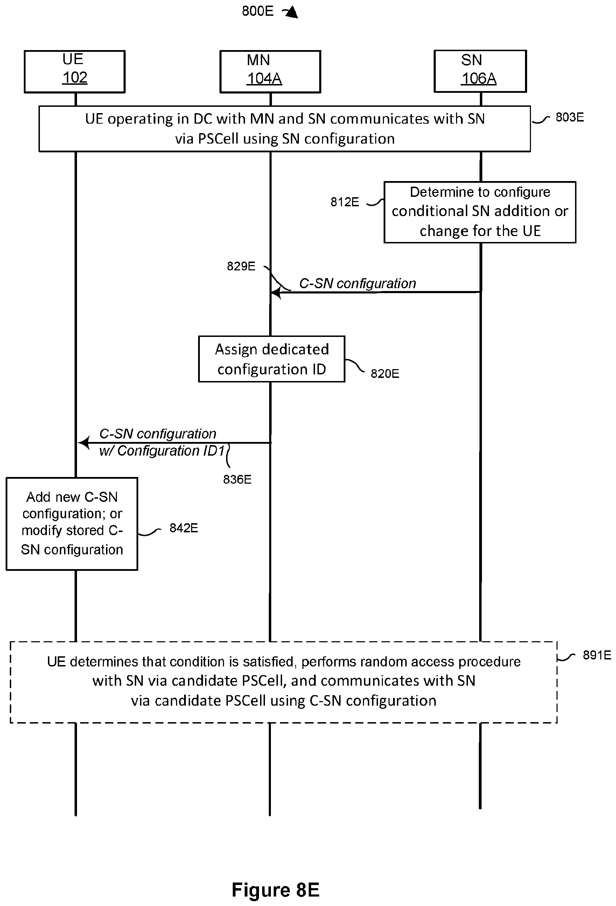

In Fig. 8E, the base station 104A serves as an MN for the UE 102 and the base station 106A serves as an SN (providing a PSCell) for the UE 102, with the UE 102 communicating 803E with the MN 104A and SN 106A while operating in DC. The SN 106A then at some point determines 812E to configure a conditional SN change for the UE 102, e.g., blindly or in response to detecting a suitable event (e.g., as discussed above with reference to Fig. 3A). In the depicted scenario, the SN change is a change to a different PSCell (i.e., a candidate PSCell) that is also supported by the SN 106A. In some implementations, the candidate PSCell can belong to the SN 106A. In other implementations, the candidate PSCell can belong to the base station 106B.

After determining 812E to configure the conditional SN change, the SN 106A generates a C-SN configuration (e.g., C-SN Configuration!) associated with the conditional SN change. The SN 106A configures a candidate PSCell in the C-SN configuration. The candidate PSCell is associated to a cell ID (e.g., Cell ID1). In some implementations, the SN 106A determines the candidate PSCell based on one or more measurement results received from the UE 102 (e.g., via SRB3, MN 104A, or a physical uplink control channel) or measured by the SN 106A on one or more transmissions from the UE 102.

After generating the C-SN Configuration1, the SN 106A transmits 829E the C-SN configuration to the MN 104A. The MN 104A then assigns 820E a dedicated configuration ID ("Configuration ID1") to the C-SN configuration. In some implementations, the SN 106A includes Configuration ID1 in the C-SN configuration ("C-SN Configuration1"). The SN 106A in some implementations may send an SN message including the C-SN Configuration1 to the MN 104A at event 829E. After receiving C-SN Configuration1, the MN 104A transmits 836E C-SN Configuration1 (including Configuration ID1) to the UE 102. In other implementations, the SN 106A does not include the Configuration ID1 in the C-SN Configuration1. Instead, the SN 106A in some implementations sends an SN message including the C-SN Configuration1 and the Configuration ID1 to the MN 104A at event 829E. After receiving the C-SN Configuration1 and the Configuration ID1, the MN 104A includes the Configuration ID1 along with the C-SN Configuration1 in an RRC container message (instead of the C-SN Configuration1 alone) and transmits 836E the RRC container message to the UE 102. In some implementations, the SN message can be *SN Modification Required* message (e.g., S-NODE MODIFICATION REQUIRED or SgNB MODIFICATION REQUIRED), *SN Modification Request Acknowledge* message (e.g., S-NODE MODIFICATION REQUEST ACKNOWLEDGE or SgNB MODIFICATION REQUEST ACKNOWLEDGE), or *SN Change Required* message (e.g., S-NODE CHANGE REQUIRED or SgNB CHANGE REQUIRED), *SN Release Required* message (e.g., S-NODE RELEASE REQUIRED or SgNB RELEASE REQUIRED) or *SN Release Request Acknowledge* message (e.g., S-NODE RELEASE REQUEST ACKNOWLEDGE or SgNB RELEASE REQUEST ACKNOWLEDGE).

The UE 102 then identifies the configuration identifier and, based on its value (Configuration ID1), adds or modifies (e.g., replaces) 842E a stored C-SN configuration (e.g., adds the C-SN Configuration! or replaces a stored C-SN configuration with the C-SN Configuraion1), e.g., as discussed above with reference to Fig. 6A. In some scenarios, 812E through 842E may be repeated for one or more conditional SN changes, as discussed above. In one implementation and scenario, after the UE 102 adds 842E C-SN Configuration1 or modifies (e.g., replaces) 842E a stored C-SN configuration with C-SN Configuration1, and before the UE 102 releases C-SN Configuration1, the UE 102 determines that a condition for connecting to the candidate PSCell is satisfied, initiates and performs a random access procedure on the candidate PSCell, and then communicates with the SN 106A on the candidate PSCell using C-SN Configuration1, in a procedure 891E (e.g., similar to procedure 691B of Fig. 6B).

In one implementation, the C-SN configuration generated by the SN 106A contains information specifying the condition for the conditional SN change (i.e., a condition configuration for the condition). The MN 104A may generate the RRC container message including the C-SN configuration, and transmit the RRC container message (without a separate condition configuration) to the UE 102 at event 836E. Alternatively, the C-SN configuration provided by the SN 106A may not contain the condition configuration, and the MN 104A includes the condition configuration along with the C-SN configuration in the RRC container message that the MN 104A transmits to the UE 102 at event 836E. In any of these implementations, the UE 102 may transmit an RRC container response message to the MN 104A, in response to receiving the RRC container message.

In some implementations, the MN 104A has/stores a table and selects a configuration ID for the UE 102 according to a received cell ID along with the C-SN configuration from the SN 106A. In one example, the MN 104A maintains the table and can initialize the table as Table 1-2 before or when the MN 104A receives a C-SN configuration. If a cell ID of the candidate PSCell received in event 829E is Cell ID1, the MN 104A sets the configuration status for the Cell ID1 to "Configured" as in Table 1-3. At event 820E, because the C-SN Configuration1 is for the Cell ID1, the MN 104A uses the Configuration ID1 for the C-SN Configuration1 according to the table, and in turn the MN 104A transmits the Configuration ID1 and C-SN Configuration1 at event 836E. That is, the MN 104A uses a particular cell ID (e.g., the Cell ID1) received in event 829E as an index to look up the table if the SN 106A configures the conditional SN change (e.g., CPAC) to the particular cell ID.

In another example, the MN 104A has/stores the table as Table 1-3 before the MN 104A receives the C-SN configuration 830B. If a cell ID of the candidate PSCell received at 829E is Cell ID1, the MN 104A may or may not set the configuration status for the Cell ID1 to "Configured" as in Table 1-3. At event 820E, because the C-SN Configuration1 is for the Cell ID1, the MN 104A uses the Configuration ID1 for the C-SN Configuration1 according to the table, and transmits the Configuration ID1 and C-SN Configuration1 at event 836E. If a cell ID of the candidate PSCell received at event 829E is Cell ID2, the MN 104A sets the configuration status for the Cell ID2 to "Configured" as in Table 1-4. At event 820E, because the C-SN Configuration2 is for the Cell ID2, the MN 104A uses the Configuration ID2 for the C-SN Configuration2 according to the table, and transmits the Configuration ID2 and C-SN Configuration2 at event 836E. That is, the MN 104A uses a particular cell ID (e.g., the Cell ID1) as an index to look up the table if the SN 106A determines to configure CPAC to the particular cell ID.

If the SN 106A determines to release a C-SN configuration for a cell ID which has configuration status "Configured," the MN 104A looks up the table to find a configuration ID for the cell ID by using the cell ID received at 829E as an index and may transmit a CPAC release configuration including the configuration ID. The UE 102 releases the C-SN configuration according to the configuration ID in the CPAC release configuration. For example, the SN 106A determines to release a C-SN configuration for the Cell ID1. After receiving a PSCell to release, the MN 104A looks up the table (e.g., Table 1-3 or Table 1-4) and identifies that the configuration ID for the Cell ID1 is the Configuration ID1 at event 820E. The MN 104A then includes the Configuration ID1 in the CPAC release configuration and transmit the CPAC release configuration to the UE 102. The UE 102 releases the C-SN Configuration 1 according to the Configuration ID1 in the CPAC release configuration. If the cell ID has configuration status "Not configured" or is not found in the table, the MN 104A may not transmit any CPAC release configuration to the UE 102 to release a C-SN configuration for the cell ID.

In other implementations, the MN 104A has a table (e.g., Table 2-1) for the UE 102 to select a configuration ID for a C-SN configuration (i.e., assign a new configuration ID or identify an existing configuration ID). The table includes entries of cell ID(s) and configuration ID(s).

In one example, the MN 104A can initialize the table as Table 2-1 (i.e., empty) before the MN 104A receives a C-SN configuration (e.g., the C-SN Configuration1 received at event 829E). If a cell ID of the candidate PSCell received in event 829E is Cell ID1 and the Cell ID1 is not in the table, the MN 104A assigns a new configuration ID (e.g., Configuration ID1) for the Cell ID1 or the C-SN configuration, as in Table 2-2.

In another example, the MN 104A has the table as Table 2-2 before the MN 104A receives the C-SN configuration at event 829E (e.g., C-SN Configuration2). If a cell ID of the candidate PSCell received in event 829E is Cell ID1, the MN 104A uses the Configuration ID1 for the C-SN Configuration2 according to the table and transmits the Configuration ID1 and C-SN Configuration2 at event 836E. If a cell ID of the candidate PSCell received in event 829E is Cell ID2 and the Cell ID2 is not in the table, the MN 104A assigns a new Configuration ID (e.g., Configuration ID2) for the Cell ID2 or the C-SN Configuration2 as in Table 2-3, and the MN 104A transmits the Configuration ID1 and C-SN Configuration2 at event 836E. That is, the MN 104A uses a particular cell ID (e.g., the Cell ID1) received in 829E as an index to look up the table if the MN 104A determines to configure CPAC to the particular cell ID.

If the SN 106A determines to release a C-SN configuration for a cell ID, the MN 104A looks up the table to find a configuration ID for the cell ID by using the cell ID as an index, and may transmit a CPAC release configuration including the configuration ID. The UE 102 releases the C-SN configuration according to the configuration ID in the CPAC release configuration. For example, the SN 106A determines to release a C-SN configuration for the Cell ID1. In response to the determination, the MN 104A looks up the table (e.g., Table 1-3 or Table 1-4) and identifies that the configuration ID for the Cell ID1 is the Configuration ID1 in event 820E. The MN 104A then includes the Configuration ID1 in the CPAC release configuration, and transmits the CPAC release configuration to the UE 102. The UE 102 releases the C-SN Configuration1 according to the Configuration ID1 in the CPAC release configuration. If the cell ID is not found in the table, the MN 104A may not transmit any CPAC release configuration to the UE 102 to release a C-SN configuration for the cell ID.

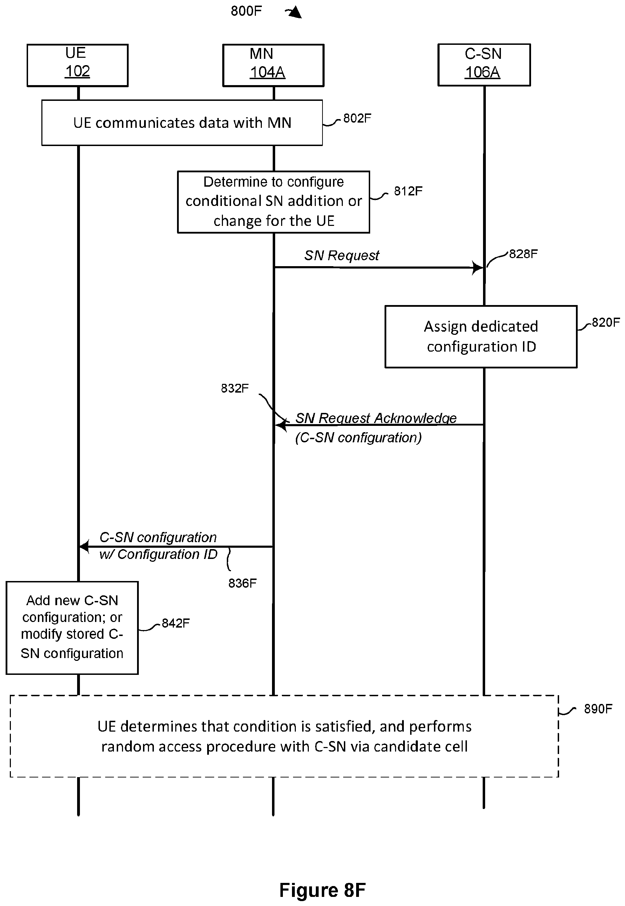

In Fig. 8F, in a conditional SN addition or SN change scenario 800F, the base station 104A operates as an MN for the UE 102, and the base station 106A operates as a C-SN for the UE 102. Initially, the UE 102 communicates 802F data (e.g., UL data PDUs and/or DL data PDUs) with the MN 104A, in single connectivity operation, or in dual connectivity with SN 104B (not shown in the Fig. 8F). The MN 104A then at some point determines 812F to configure a conditional SN addition or SN change for the UE 102, e.g., blindly or in response to detecting a suitable event (as discussed above with reference to Fig. 3A).

After the determination 812F, the MN 104A transmits 828F an *SN Request* message (e.g., a *SN Addition Request* or *SN Modification Request* message), which does not include a dedicated configuration identifier, to the C-SN 106A. The C-SN 106A configures a candidate PSCell in the C-SN configuration. The candidate PSCell is associated to a cell ID (e.g., Cell ID1). In some implementations, the C-SN 106A determines the candidate PSCell based on the received MN-to-SN RRC configuration information (e.g., *CG-ConfigInfo* defined in TS 38.331) in the *SN Request* message of transmission 828F. In response, the C-SN 106A transmits 832F an *SN Request Acknowledge* message (e.g., *SN Addition Request Acknowledge* or *SN Modification Request Acknowledge* message) that includes a C-SN configuration for the C-SN 106A ("C-SN Configuration1") to the MN 104A. The SN 106A assigns 820F a dedicated configuration identifier ("C-SN Configuration ID1") for the C-SN Configuration!, and may include the configuration identifier in the C-SN configuration or in the *SN Request Acknowledge* message. C-SN Configuration1 may be similar to the C-SN Configuration1 discussed above with reference to Fig. 6A, and the *SN Request* and *SN Request Acknowledge* messages may be similar to the *SN Request* and *SN Request Acknowledge* messages discussed above with reference to Fig. 6A, for example. In one implementation, along with the C-SN configuration, the *SN Request Acknowledge* message contains the cell ID.

The MN 104A then transmits 836F C-SN Configuration1 to the UE 102, but now with the C-SN Configuration1 including Configuration ID1, or with Configuration ID1 and C-SN Configuration1 both being contained in the same RRC container message. The UE 102 identifies the configuration identifier and, based on its value (Configuration ID1), adds or modifies (e.g., replaces) 842F a configuration (e.g., in a manner similar to that discussed above with reference to Fig. 6A). In some scenarios, 812F through 842F may be repeated for one or more conditional SN additions and/or changes, as discussed above.

In one implementation and scenario, after the UE 102 adds 842F C-SN Configuration1 or modifies (e.g., replaces) 842F a C-SN configuration using C-SN Configuration!, and before the UE 102 releases C-SN Configuration!, the UE 102 determines that a condition for accessing the candidate cell of the C-SN 106A is satisfied, and in response initiates and performs a random access procedure on the candidate cell, in a procedure 890F (e.g., similar to procedure 690A of Fig. 6A).

In one implementation, the C-SN configuration contains information specifying the condition for the conditional SN addition or change (i.e., a condition configuration for the condition). The MN 104A may generate an RRC container message including the C-SN configuration, and transmit the RRC container message (without a separate condition configuration) to the UE 102 at event 836F. Alternatively, the C-SN configuration may not contain the condition configuration, and the C-SN 106A includes the condition configuration along with the C-SN configuration in the *SN Request Acknowledge* message. In this implementation, the MN 104A generates an RRC container message including the C-SN configuration and the condition configuration, and transmits the RRC container message to the UE 102 at event 836F. In yet another implementation, the *SN Request Acknowledge* message and C-SN configuration do not contain the condition configuration, and the MN 104A configures the condition. In such implementations, too, the MN 104A generates an RRC container message including the C-SN configuration and the condition configuration, and transmits the RRC container message to the UE 102 at event 836F. In any of these implementations, the UE 102 may transmit an RRC container response message to the MN 104A, in response to receiving the RRC container message. Moreover, the MN 104A may transmit an *SN Reconfiguration Complete* message to the C-SN 106A, in response to receiving the RRC container message. If the Configuration ID1 and C-SN Configuration1 both are contained in the RRC container message (i.e., the configuration ID is not included in the C-SN configuration), the MN 104A includes the configuration ID in the RRC container message.

In some implementations, the C-SN 106A has/stores a table (e.g., Table 1-1) for the UE 102 to select a configuration ID for a C-SN configuration configuring a candidate PSCell associated to a cell ID. The table consists of entries of cell ID(s), configuration ID(s), and configuration status (e.g., whether a cell has been configured to a UE 102 for a CPAC). In some implementations, the MN 104A or C-SN 106A may be configured with the table by an O&M node. The O&M node may reconfigure (e.g., update) the table. For example, the O&M node may reconfigure the table by adding a new entry including a new cell ID and a new configuration ID with configuration status "Not configured." In other implementations, the C-SN 106A may be configured with the table by default, or manually.

In one example, the C-SN 106A maintains the table and the C-SN 106A can initialize the table as Table 1-2 before the C-SN 106A generates a C-SN configuration. If a cell ID of the candidate PSCell is Cell ID1, the C-SN 106A sets the configuration status for the Cell ID1 to "Configured" as in Table 1-3. Because the C-SN Configuration1 is for the Cell ID1, the C-SN 106A uses the Configuration ID1 for the C-SN Configuration! according to the table, and transmits the Configuration ID1 and C-SN Configuration1 to the MN 104A at event 832F. In turn, the MN 104A transmits the Configuration ID1 and C-SN Configuration1 at event 836F. That is, the C-SN 106A uses a particular cell ID (e.g., the Cell ID1) as an index to look up the table if the C-SN 106A determines to configure CPAC to a cell identified by the particular cell ID.

In another example, the C-SN 106A has/stores the table as Table 1-3 before the C-SN 106A generates the C-SN configuration transmitted at event 832F. If a cell ID of the candidate PSCell is Cell ID1, the C-SN 106A may or may not set the configuration status for the Cell ID1 to "Configured." Because the C-SN Configuration1 is for the Cell ID1, the C-SN 106A uses the Configuration ID1 for the C-SN Configuration1 according to the table, and transmits the Configuration ID1 and C-SN Configuration1 to the MN 104A at event 832F. In turn, the MN 104A transmits the Configuration ID1 and C-SN Configuration1 at event 836F. If a cell ID of the candidate PSCell is Cell ID2, the C-SN 106A set the configuration status for the Cell ID2 to "Configured" as in Table 1-4. Because the C-SN Configuration2 is for the Cell ID2, the C-SN 106A uses the Configuration ID2 for the C-SN Configuration2 according to the table, and transmits the Configuration ID2 and C-SN Configuration2 at event 832F. That is, the C-SN 106A uses a particular cell ID (e.g., the Cell ID1) as an index to look up the table if the C-SN 106A determines to configure CPAC to the particular cell ID.

If the C-SN 106A determines to release a C-SN configuration for a cell ID which has configuration status "Configured," the C-SN 106A looks up the table to find a configuration ID for the cell ID by using the cell ID as an index, and may transmit a CPAC release configuration including the configuration ID to the UE 102 via the MN 104A. For example, the C-SN 106A includes the CPAC release configuration at event 832F or in an SN message (e.g., as described for Fig. 8E), and in turn, the MN 104 includes the CPAC release configuration at event 836F or in another RRC container message. The UE 102 releases the C-SN configuration according to the configuration ID in the CPAC release configuration. For example, the C-SN 106A determines to release a C-SN configuration for the Cell ID1. In response to the determination, the C-SN 106A looks up the table (e.g., Table 1-3 or Table 1-4) and identifies that the configuration ID for the Cell ID1 is the Configuration ID1. The SC-N 106A then includes the Configuration ID1 in the CPAC release configuration and transmits the CPAC release configuration to the UE 102 via the MN 104A. The UE 102 releases the C-SN Configuration1 according to the Configuration ID1 in the CPAC release configuration. If the Cell ID has configuration status "Not configured" or is not found in the table, the SN 106A may not transmit any CPAC release configuration to the UE 102 to release a C-SN configuration for the cell ID.

In other implementations, the C-SN 106A has/stores a table (e.g., Table 2-1) for the UE 102 to select a Configuration ID for a C-SN configuration (i.e., assign a new configuration ID or identify an existing configuration ID). The table includes entries of cell ID(s) and configuration ID(s).

In one example, the C-SN 106A can initialize the table as Table 2-1 (i.e., empty) before the C-SN 106A generates a C-SN configuration (e.g., the C-SN Configuration1 transmitted at event 832F). If a cell ID of the candidate PSCell is Cell ID1 and the Cell ID1 is not in the table, the C-SN 106A assigns a new configuration ID (e.g., Configuration ID1) for the Cell ID1 or the C-SN configuration in response to the *SN Request* message 828F, as in Table 2-2.

In another example, the SN 106A has/stores the table as Table 2-2 before the C-SN 106A generates the C-SN configuration transmitted at event 832F (e.g., C-SN Configuration2). If a cell ID of the candidate PSCell is Cell ID1, the C-SN 106A uses the Configuration ID1 for the C-SN Configuration2 according to the table and transmits the Configuration ID1 and C-SN Configuration2 to the MN 104A at event 832F. In turn, the MN 104A transmits the Configuration ID1 and C-SN Configuration1 at event 836F. If a cell ID of the candidate PSCell is Cell ID2 and the Cell ID2 is not in the table, the C-SN 106A assigns a new configuration ID (e.g., Configuration ID2) for the Cell ID2 or the C-SN Configuration2 as in Table 2-3, and the MN 104A transmits the Configuration ID2 and C-SN Configuration2 at event 836F. That is, the C-SN 106A uses a particular cell ID (e.g., the Cell ID1) as an index to look up the table if the C-SN 106A determines to configure CPAC to the particular cell ID.

If the C-SN 106A determines to release a C-SN configuration for a cell ID, the C-SN 106A looks up the table to find a configuration ID for the cell ID by using the cell ID as an index, and may transmit a CPAC release configuration including the configuration ID. The UE 102 releases the C-SN configuration according to the configuration ID in the CPAC release configuration. For example, the C-SN 106A determines to release a C-SN configuration for the Cell ID1. In response to the determination, the C-SN 106A looks up the table (e.g., Table 1-3 or Table 1-4) and identifies the configuration ID for the Cell ID1 is the Configuration ID1. The C-SN 106A then includes the Configuration ID1 in the CPAC release configuration, and transmits the CPAC release configuration to the UE 102 via the MN 104A. For example, the C-SN 106A includes the CPAC release configuration in the transmission at event 832F or in an SN message (e.g., as described for Fig. 8E), and in turn, the MN 104 includes the CPAC release configuration in the transmission at event 836F or in another RRC container message. The UE 102 releases the C-SN Configuration1 according to the Configuration ID1 in the CPAC release configuration. If the cell ID is not found in the table, the C-SN 106A may not transmit any CPAC release configuration to the UE 102 to release a C-SN configuration for the cell ID.

As noted above, Figs. 9A through 9C correspond to scenarios in which the wireless communication system 100 uses a configuration identifier to release (rather than add or modify) a conditional configuration at the UE 102.

Referring first to Fig. 9A, in an example scenario 900A, the base station 104A operates as an MN for the UE 102. In the scenario 900A, the UE 102 communicates 904A with MN 104A, and the MN 104A configures a conditional configuration (e.g., by sending the UE 102 a CHO command or a C-SN configuration as described above). The MN 104 then transmits 914A to the UE 102 an RRC message including a configuration identifier of the conditional configuration, to indicate to the UE 102 that the UE 102 should release the identified conditional configuration. The configuration identifier may be any of the identifier types discussed above (e.g., Transaction ID, Cell ID, dedicated configuration identifier, or a measurement identity), for example. In other implementations, the identifier in the transmission 914A may be a sequential number identifying a sequential location of the conditional configuration in a list. For example, the sequential number may be 1 (or 0) for the CHO Command1, and 2 (or 1) for the CHO Command2, if the UE 102 receives the CHO Command1 and CHO Command2 at event 914A. In response to receiving the RRC message, and based on the identifier in the RRC message, the UE 102 releases 944A the identified CHO command or C-SN configuration.

In Fig. 9B, in an example scenario 900B, the base station 104A operates as an MN for the UE 102, and the base station 106A operates as both an SN (e.g., for a PSCell) and C-SN (e.g., for a C-PSCell) for the UE 102. In the scenario 900B, the UE 102 communicates 905B with the MN 104A and SN 106A, and the MN 104A or SN 106A configures a conditional configuration by sending the UE 102 a C-SN configuration as described above.

At some point thereafter, the SN 106A determines 916B to release a particular the C-SN configuration, associated with a C-PSCell also supported by SN 106A. In response to the determination 916B, the SN 106A transmits 931B an *SN Release*/*Modification Required* message, which includes an identifier of the C-SN configuration to be released, to the MN 104A. The MN 104A, in turn, transmits 914B to the UE 102 an RRC message that includes the identifier of the C-SN configuration to be released. The identifier may be any of the identifier types discussed above with reference to Fig. 9A, for example. In response to receiving the RRC message, and based on the identifier in the RRC message, the UE 102 releases 944B the identified C-SN configuration.

In Fig. 9C, in an example scenario 900C, the base station 104A operates as an MN for the UE 102, and the base station 106A operates as both an SN (e.g., for a PSCell) and C-SN (e.g., for a C-PSCell) for the UE 102. In the scenario 900C, the UE 102 communicates 905C with the MN 104A and SN 106A, and the MN 104A or SN 106A configures a conditional configuration by sending the UE 102 a C-SN configuration as described above.

At some point thereafter, the SN 106A determines 916C to release a particular the C-SN configuration, associated with a C-PSCell also supported by SN 106A. In the example scenario 900C, the UE 102 is configured to an SRB with the SN 106A, and therefore can receive the C-SN configuration directly from the SN 106A. Thus, in response to the determination 916C, the SN 106A transmits 915C an RRC message, which includes an identifier of the C-SN configuration to be released, to the UE 102. The identifier may be any of the identifier types discussed above with reference to Fig. 9A, for example. In response to receiving the RRC message, and based on the identifier in the RRC message, the UE 102 releases 944C the identified C-SN configuration.

As noted above, Figs. 10 and 11 correspond to an alternative implementation in which the RAN of the wireless communication system 100 provides a full set of conditional handover configurations to the UE 102 to avoid any uncertainty (at the UE 102) regarding the current, full configuration list, with Fig. 10 corresponding to a CHO scenario and Fig. 11 corresponding to a conditional SN addition or change scenario.

Referring first to Fig. 10A, in an example scenario 1000A, the base station 104A operates as an MN for the UE 102 and the base station 106A operates as a C-MN for the UE 102. Initially, the UE 102 communicates 1006A data (e.g., UL Data PDUs and/or DL Data PDUs) with the MN 104A, and the MN 104A configures the UE 102 with a CHO Command1 that configures a first candidate cell to the UE 102. In the scenario 1000A, it is assumed that the UE 102 is not configured with any other CHO commands prior to the event 1006A, or that the UE 102 has already released any such previous configurations.

Later, the MN 104A determines 1010A to configure a conditional handover for the UE 102 to a second candidate cell that is associated with the C-MN 106A. In response, the MN transmits 1026A a *Handover Request* message to the C-MN 106A, which responds by generating 1038A CHO Command2 (i.e., a configuration for the second candidate cell). The C-MN 106A then transmits 1030A to the MN 104A a *Handover Request Acknowledge* message that includes CHO Command2.

In this implementation, when the MN 104A receives the CHO Command2, the MN 104A generates a complete list or set of conditional configurations, which in this scenario 1000A includes only CHO Command1 and CHO Command2. The MN 104A transmits 1039A this complete set of conditional configurations (i.e., CHO Command1 and CHO Command2) to the UE 102. In response, the UE 102 replaces 1045A all CHO commands stored in memory at the UE 102 with the received CHO commands (i.e., CHO Command1 and CHO Command2). Because all pre-existing CHO commands are replaced with the received set, the UE 102 does not need to determine whether a received CHO command is intended to update an existing CHO command stored in the UE 102, or is instead intended to be a new CHO command.

In some implementations, the MN 104A also sends the UE 102 a condition associated to CHO Command1 and a condition associated to CHO Command2, together with the CHO Command1 and CHO Command2. In such an implementation, the UE 102 replaces all existing conditions associated with existing CHO commands with all received conditions associated to the CHO commands received in transmission 1039A. Thus, the UE 102 does not need to determine associations between pre-existing/stored conditions and received CHO commands.

Events 1060A, 1066A, 1070A and 1076A may be similar to events 360A, 366A, 370A and 376A, respectively, of Fig. 3A, but with the CHO complete message not including a Transaction ID (or, in some implementations, any other configuration identifier).

Fig. 10B depicts an example scenario 1000B in which the "winning" candidate cell for a conditional handover is supported by the same base station (104A) that supports the cell the UE 102 is currently communicating with (e.g., with the base station 104A as an MN). Initially, the UE 102 communicates 1006B data (e.g., UL Data PDUs and/or DL Data PDUs) with the MN 104A, and the MN 104A configures the UE 102 with a CHO Command1 that configures a first candidate cell to the UE 102, where the first candidate cell is another cell supported by the MN 104A. In the scenario 1000B, it is assumed that the UE 102 is not configured with any other CHO commands prior to the event 1006B, or that the UE 102 has already released any such previous configurations.

Later, the MN 104A determines 1010B to configure a conditional handover for the UE 102 to a second candidate cell, which may or may not be associated with the MN 104A. In response, the MN 104A generates 1038B CHO Command2 (i.e., a configuration for the second candidate cell). In this implementation, in response to the determination 1010B, the MN 104A generates a complete list or set of conditional configurations, which in this scenario 1000B includes only CHO Command1 and CHO Command2. The MN 104A transmits 1039B this complete set of conditional configurations (i.e., CHO Command1 and CHO Command2) to the UE 102. In response, the UE 102 replaces 1045B all CHO commands stored in memory at the UE 102 (here, only CHO Command1) with the received CHO commands (i.e., CHO Command1 and CHO Command2). Because all pre-existing CHO commands are replaced with the received set, the UE 102 does not need to determine whether a received CHO command is intended to update an existing CHO command stored in the UE 102, or is instead intended to be a new CHO command.

In some implementations, the MN 104A also sends the UE 102 a condition associated to CHO Command1 and a condition associated to CHO Command2, together with the CHO Command1 and CHO Command2. In such an implementation, the UE 102 replaces all existing conditions associated with existing CHO commands with all received conditions associated to the CHO commands received in transmission 1039B. Thus, the UE 102 does not need to determine associations between pre-existing/stored conditions and received CHO commands.

Events 1061B, 1067B, 1071B and 1077B may be similar to events 361B, 367B, 371B and 377B, respectively, of Fig. 3B, but with the CHO complete message not including a Transaction ID (or, in some implementations, any other configuration identifier).

In Fig. 11A, in an example scenario 1100A, the base station 104A operates as an MN for the UE 102, the base station 106A operates as an SN for the UE 102, and the base station 104B operates as a C-SN for the UE 102. Initially, the UE 102 communicates 1108A data (e.g., UL Data PDUs and/or DL Data PDUs) with the MN 104A and SN 106A, and the SN 106A configures, to the UE 102, a C-SN Configuration1 for a first candidate cell, via the SRB3 (i.e., a direct SRB between the SN 106A and the UE 102). In the scenario 1100A, it is assumed that the UE 102 is not configured with any other C-SN configurations prior to the event 1108A, or that the UE 102 has already released any such previous configurations.

The SN 106A later determines 1111A to configure a C-SN Configuration2, for a second candidate cell, to the UE 102. In this implementation, in response to the determination 1111A, the SN 106A generates a complete list or set of conditional configurations, which in this scenario 1100A includes only C-SN Configuration1 and C-SN Configuration2. The SN 106A transmits 1137A this complete set of conditional configurations (i.e., C-SN Configuration1 and C-SN Configuration2) to the UE 102 via the SRB3.

In response to receiving the set of conditional configurations, the UE 102 replaces 1148A all of the stored C-SN configurations (here, only C-SN Configuration1) with the received C-SN configurations (i.e., C-SN Configuration1 and C-SN Configuration2). The UE 102 does not need to determine whether a received C-SN configuration is intended to update an pre-existing C-SN configuration stored in the UE 102, or is instead intended to be a new C-SN configuration.

Later, the MN 104A determines 1113A to configure the base station 104B as a C-SN to the UE 102. In response to the determination 1113A, the MN 104A transmits 1128A an *SN Request* message (e.g., an *SN Addition Request* or *SN Modification Request* message) to the base station 104B. In response to the *SN Request* message, the base station 104B generates 1143A a C-SN configuration ("C-SN ConfigurationX"), and includes C-SN ConfigurationX in an *SN Request Acknowledge* message (e.g., an *SN Addition Request Acknowledge* or *SN Modification Request Acknowledge* message). The base station 104B transmits 1143A the *SN Request Acknowledge* message to the MN 104A. In turn, the MN 104A transmits 1149A C-SN ConfigurationX to the UE 102.

In this implementation, the UE 102 adds C-SN ConfigurationX via the SRB1, but leave the stored C-SN configurations via SRB3 (C-SN Configuration1 and C-SN Configuration2) unchanged. That is, the technique of replacing all C-SN configurations may be partitioned according to SRB, or some other suitable factor. If there is an additional C-SN ConfigurationY to be delivered via the SRB1, the MN 104A may transmit C-SN ConfigurationX and C-SN ConfigurationY to the UE 102, causing the UE 102 to replace all of the stored C-SN configurations via the SRB1 with the received C-SN configurations via the SRB1.

In some implementations, the MN 104A may also send the UE 102 a condition associated with C-SN Configuration1 and a condition associated with C-SN Configuration2 together with C-SN Configuration1 and C-SN Configuration2. In such an implementation, the UE 102 replaces all existing conditions associated with the existing C-SN configurations (at least, for the SRB3 C-SN configurations) with all of the received conditions associated to the received C-SN configurations. Thus, the UE 102 does not need to determine whether a pre-existing condition is associated with a received C-SN configuration.

In Fig. 11B, in an example scenario 1100B, the base station 104A operates as an MN for the UE 102, and the base station 106A operates as a C-SN for the UE 102. Initially, the UE 102 communicates 1107B data (e.g., UL Data PDUs and/or DL Data PDUs) with the MN 104A, and the MN 104A configures, to the UE 102, a C-SN Configuration1 for a first candidate cell. In the scenario 1100B, it is assumed that the UE 102 is not configured with any other C-SN configurations prior to the event 1107B, or that the UE 102 has already released any such previous configurations.

The MN 104A later determines 1111B to configure a C-SN Configuration2, for a second candidate cell, to the UE 102, and in response transmits 1128B an *SN Request* message to the C-SN 106A with which the second candidate cell is associated. In response to the *SNRequest* message, the C-SN 106A generates 1138B C-SN Configuration2 for the second candidate cell, and transmits 1132B an *SN Request Acknowledge* message including C-SN Configuration2 to the MN 104A.

In this implementation, in response to receiving the *SN Request Acknowledge* message, the MN 104A generates a complete list or set of conditional configurations, which in this scenario 1100B includes only C-SN Configuration1 and C-SN Configuration2. The MN 104A transmits 1141B this complete set of conditional configurations (i.e., C-SN Configuration1 and C-SN Configuration2) to the UE 102.

In response to receiving the set of conditional configurations, the UE 102 replaces 1148B all of the stored C-SN configurations (here, only C-SN Configuration1) with the received C-SN configurations (i.e., C-SN Configuration1 and C-SN Configuration2). The UE 102 does not need to determine whether a received C-SN configuration is intended to update an pre-existing C-SN configuration stored in the UE 102, or is instead intended to be a new C-SN configuration.

In some implementations, the MN 104A may also send the UE 102 a condition associated with C-SN Configuration1 and a condition associated with C-SN Configuration! together with C-SN Configuration1 and C-SN Configuration2. In such an implementation, the UE 102 replaces all existing conditions associated with the existing C-SN configurations with all of the received conditions associated to the received C-SN configurations. Thus, the UE 102 does not need to determine whether a pre-existing condition is associated with a received C-SN configuration.

Later, the UE 102 determines 1160B that the condition for accessing the second candidate cell is satisfied, and in response initiates 1166B a random access procedure on the second candidate cell. The UE 102 then performs 1154B the random access procedure with the C-SN 106A via the second candidate cell. The events 1148B, 1160B, 1166B and 1154B are collectively referred to in Fig. 11B as procedure 1192B.

In Fig. 11C, in an example scenario 1100C, the base station 104A operates as an MN for the UE 102, and the base station 106A operates as both an SN and a C-SN for the UE 102. Initially, the UE 102 communicates 1108C with the MN 104A and base station 106A, and the MN 104A or base station (as SN) 106A configures, to the UE 102, a C-SN Configuration1 for a first candidate cell. In the scenario 1100C, it is assumed that the UE 102 is not configured with any other C-SN configurations prior to the event 1108C, or that the UE 102 has already released any such previous configurations.

The base station 106A later determines 1111C to configure a C-SN Configuration2, for a second candidate cell, to the UE 102, and in response generates 1138C C-SN Configuration! for the second candidate cell. The base station 106A then transmits 1129C a message including C-SN Configuration! to the MN 104A.

In this implementation, in response to receiving the message including C-SN Configuration2, the MN 104A generates a complete list or set of conditional configurations, which in this scenario 1100C includes only C-SN Configuration1 and C-SN Configuration2. The MN 104A transmits 1141C this complete set of conditional configurations (i.e., C-SN Configuration1 and C-SN Configuration2) to the UE 102.

In some implementations, the MN 104A may also send the UE 102 a condition associated with C-SN Configuration1 and a condition associated with C-SN Configuration! together with C-SN Configuration1 and C-SN Configuration2. In such an implementation, the UE 102 replaces all existing conditions associated with the existing C-SN configurations with all of the received conditions associated to the received C-SN configurations. Thus, the UE 102 does not need to determine whether a pre-existing condition is associated with a received C-SN configuration.

In response to receiving the set of conditional configurations, the UE 102 replaces all of the stored C-SN configurations (here, only C-SN Configuration1) with the received C-SN configurations (i.e., C-SN Configuration1 and C-SN Configuration2), determines that the condition for accessing the second candidate cell is satisfied, and initiates and performs a random access procedure in a procedure 1192C (e.g., similar to 1192B).

In Fig. 11D, in an example scenario 1100D, the base station 104A operates as an MN for the UE 102, and the base station 106A operates as both an SN and a C-SN for the UE 102. Initially, the UE 102 communicates 1108D with the MN 104A and base station (as SN) 106A, and the MN 104A or base station (as SN) 106A configures, to the UE 102, a C-SN Configuration1 for a first candidate cell. In the scenario 1100D, it is assumed that the UE 102 is not configured with any other C-SN configurations prior to the event 1108D, or that the UE 102 has already released any such previous configurations.

The base station 106A later determines 1111D to configure a C-SN Configuration2, for a second candidate cell, to the UE 102, and in response generates 1138D a complete list or set of conditional configurations, which in the scenario 1100D includes only C-SN Configuration1 and C-SN Configuration2. The base station 106A transmits 1137D this complete set of conditional configurations (i.e., C-SN Configuration1 and C-SN Configuration2) to the UE 102 (e.g., via SRB3).

In some implementations, the base station 106A may also send the UE 102 a condition associated with C-SN Configuration1 and a condition associated with C-SN Configuration! together with C-SN Configuration1 and C-SN Configuration2. In such an implementation, the UE 102 replaces all existing conditions associated with the existing C-SN configurations with all of the received conditions associated to the received C-SN configurations. Thus, the UE 102 does not need to determine whether a pre-existing condition is associated with a received C-SN configuration.

In response to receiving the set of conditional configurations, the UE 102 replaces all of the stored C-SN configurations (here, only C-SN Configuration1) with the received C-SN configurations (i.e., C-SN Configuration1 and C-SN Configuration2), determines that the condition for accessing the second candidate cell is satisfied, and initiates and performs a random access procedure in a procedure 1192D (e.g., similar to 1192B).

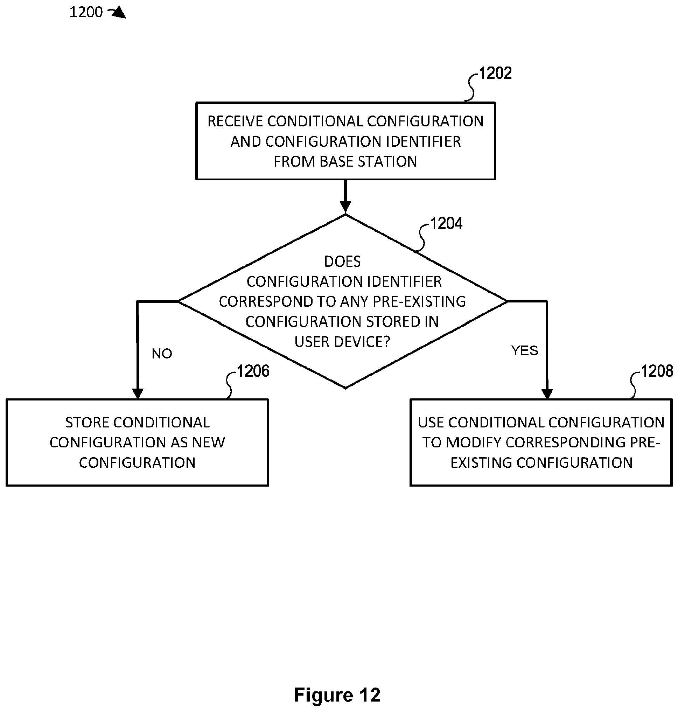

Fig. 12 is a flow diagram depicting an example method 1200, implemented in a user device (e.g., the UE 102), of using a configuration identifier to maintain a correct set of conditional configurations.

In the method 1200, at block 1202, the user device receives from a base station (e.g., in any one of transmissions 334A-C, 434A-B, 534A-C, 636A-B, 637C, 736A-B, 737C, 836A-B, 837C, 836D) a configuration and a configuration identifier. The configuration is associated with a condition to be satisfied before the user device can communicate with a candidate base station (e.g., base station 106A), or via a candidate cell (e.g., cell 126A), using the configuration. The configuration identifier may be a Transaction ID, a Cell ID, or a dedicated conditional configuration identifier, for example.

At block 1204, the user device determines whether the configuration identifier corresponds to any pre-existing configuration stored in the user device. If not, flow proceeds to block 1206, where the user device stores the configuration as a new configuration in the user device. If the configuration identifier does correspond to a pre-existing configuration, however, the user device uses the received configuration to modify that pre-existing configuration, at block 1208. Blocks 1204, 1206 and 1208 may collectively correspond to any one of events 340A-C, 440A-B, 540A-C, 642A-C, 742A-C and 842A-D, for example.

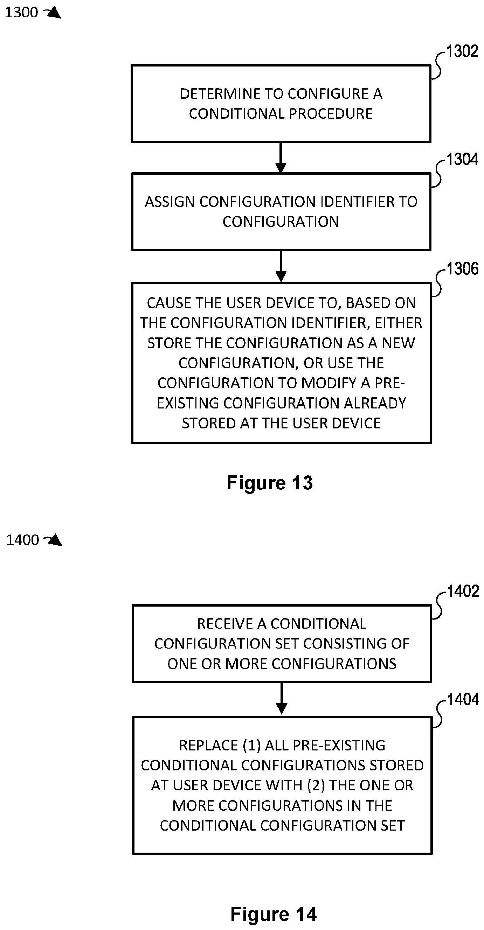

Fig. 13 is a flow diagram depicting an example method 1300, implemented in a RAN (e.g., the base station 104A and/or 106A), of using a configuration identifier to facilitate maintenance, at the user device (e.g., the UE 102), of a correct set of conditional configurations.

In the method 1300, at block 1302, the RAN (e.g., the base station 104A or 106A) determines to configure a conditional procedure (e.g., conditional handover, conditional SN addition or conditional SN change). The determination at block 1302 may correspond to any one of the determinations 310A-C, 410A-B, 510A-C, 612A-C, 712A-C and 812A-D, for example.

At block 1304, the RAN (e.g., the base station 104A and/or 106A) assigns a configuration identifier (e.g., Transaction ID, Cell ID, dedicated configuration identifier, etc.) to the configuration. The assignment at block 1304 may correspond to any one of the events 320A-C, 420A-B, 520A-C, 620A-C, 720A-C and 820A-D, for example. Alternatively, the assignment at block 1304 may correspond to the initial determination of a first identifier (e.g., a CGI), in combination with the subsequent identification of a configuration identifier that corresponds to the first identifier (e.g., a PCI), such as was described above in connection with Figs. 4A, 4B, and 7A through 7C, for example.

At block 1306, the RAN (e.g., the base station 104A or 106A) causes, based on the configuration identifier, the user device to either store the configuration as a new configuration, or use the configuration to modify a pre-existing configuration already stored at the user device. Block 1306 includes the RAN transmitting the configuration identifier to the user device (e.g., any one of the transmissions 334A-C, 434A-B, 534A-C, 636A-B, 637C, 736A-B, 737C, 836A-B, 837C, 836D).

Fig. 14 is a flow diagram depicting an alternative example method 1400, implemented in a user device (e.g., the UE 102), of maintaining a correct set of conditional configurations.

In the method 1400, at block 1402, the user device receives (e.g., in any one of the transmissions 1039A-B, 1137A, 1141B-C, 1137D) a conditional configuration set from a RAN (e.g., base station 104A). The set consists of one or more configurations that all correspond to a particular type of conditional procedure (e.g., conditional handover, conditional SN addition, conditional SN addition or SN change, conditional SN addition or SN change over SRB3, conditional SN addition or SN change over SRB1, etc.).

At block 1404, the user device replaces all pre-existing conditional configurations that correspond to the particular type of conditional procedure with the one or more configurations in the conditional configuration set. Block 1404 may correspond to any one of the events 1045A-B or 1148A-B, or to the replacing that occurs in the procedures 1192C or 1192D, for example.

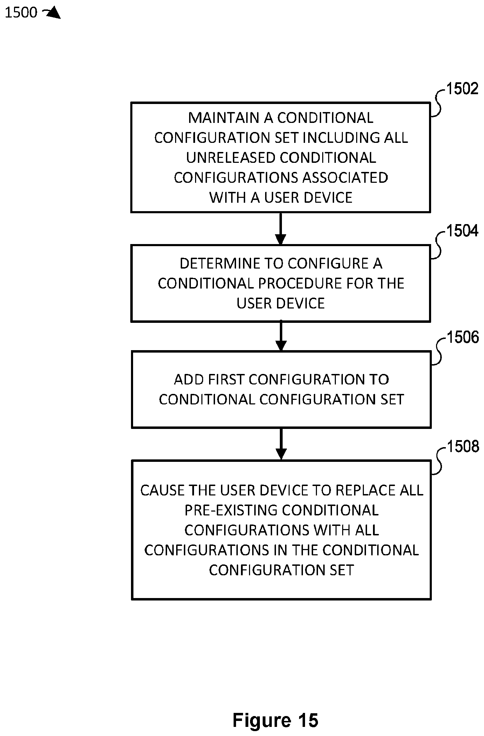

Fig. 15 is a flow diagram depicting an alternative example method 1500, implemented in a RAN (e.g., the base station 104A and/or 106A), of facilitating maintenance, at the user device (e.g., the UE 102), of a correct set of conditional configurations.

In the method 1500, at block 1502, the RAN (e.g., base station 104A) maintains a conditional configuration set that includes all unreleased conditional configurations that are associated with the particular user device and a particular type of conditional procedure (e.g., conditional handover, conditional SN addition, conditional SN addition or SN change, conditional SN addition or SN change over SRB3, conditional SN addition or SN change over SRB1, etc.).

At block 1504, the RAN (e.g., base station 104A or 106A) determines to configure a conditional procedure (of the same particular type) for the user device. Block 1504 may correspond to any one of the events 1010A-B or 1111A-D, for example.

At block 1506, the RAN (e.g., base station 104A) adds the first configuration to the conditional configuration set. For example, block 1506 may include updating a memory in a base station of the RAN to add the first configuration.

At block 1508, the RAN (e.g., base station 104A or 106A) causes the user device to replace all pre-existing conditional configurations (that correspond to the particular type of conditional procedure) with all configurations in the conditional configuration set. The block 1508 includes the RAN transmitting the conditional configuration set to the user device (e.g., any one of the transmissions 1039A-B, 1137A, 1141B-C, 1137D).

In the description above, the terms "conditional SN addition/change" and "conditional PSCell addition/change" can be used interchangeably. A conditional configuration can be a CHO command or a C-SN configuration, for example.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code, or machine-readable instructions stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC), a digital signal processor (DSP), etc.) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method performed by a user device communicating with a base station, the method comprising:
receiving, from the base station, (i) a configuration associated with a condition to be satisfied before the user device can communicate with a candidate base station, or via a candidate cell, using the configuration, and (ii) a dedicated configuration identifier that is dedicated to identifying the configuration;
storing the configuration as a new configuration in the user device, when the dedicated configuration identifier does not correspond to any pre-existing configuration stored in the user device; and
using the configuration to modify a pre-existing configuration already stored in the user device, when the dedicated configuration identifier corresponds to the pre-existing configuration stored in the user device.

2. The method of claim 1, wherein:
the condition is a condition to be satisfied before the user device can perform a handover to the candidate cell; and
receiving the configuration includes receiving the configuration in a conditional handover command; and
optionally, wherein either:
(i) receiving the dedicated configuration identifier includes receiving the dedicated configuration identifier in an information element of the conditional handover command; or
(ii) receiving the dedicated configuration identifier includes receiving the dedicated configuration identifier in a message of a radio resource control, RRC, container that separately includes the conditional handover command; or
(iii) receiving the configuration and the dedicated configuration identifier from the base station includes receiving the configuration and the dedicated configuration identifier from a first distributed unit of the base station; and the candidate cell is associated with a second distributed unit of the base station.

3. The method of claim 1, wherein:
the condition is a condition to be satisfied before the user device can add the candidate base station as a secondary node to operate in dual connectivity with the base station and the candidate base station; and
the method comprises receiving at least the configuration in a conditional secondary node configuration message from the base station; and
optionally, wherein either:
(i) receiving the dedicated configuration identifier includes receiving the dedicated configuration identifier in an information element of the conditional secondary node configuration message; or
(ii) receiving the dedicated configuration identifier includes receiving the dedicated configuration identifier in a message of a radio resource control, RRC, container that separately includes the conditional secondary node configuration message; or
(iii) the method comprises receiving the configuration and the dedicated configuration identifier from the base station while the base station is operating as a master node with which the user device operates in dual connectivity; or
(iv) the method comprises receiving the configuration and the dedicated configuration identifier from the base station while the base station is operating as a secondary node with which the user device operates in dual connectivity.

4. The method of any one of claims 1 to 3, further comprising:
when the condition is satisfied, performing a random access procedure to communicate with either the candidate base station or a base station associated with the candidate cell.

5. The method of claim 1, further comprising:
receiving, from the base station or a different base station, a configuration release message including the dedicated configuration identifier; and
in response to receiving the configuration release message including the dedicated configuration identifier, releasing the configuration.

6. The method of any of the preceding claims, wherein using the configuration to modify the pre-existing configuration comprises replacing at least a portion of the pre-existing configuration with the configuration associated with a condition to be satisfied.

7. The method of any one of the preceding claims, wherein:
storing the configuration as the new configuration in the user device occurs when the dedicated configuration identifier is different from any pre-existing configuration stored in the user device; and
using the configuration to modify the pre-existing configuration already stored in the user device occurs when the dedicated configuration identifier does not differ from the pre-existing configuration stored in the user device.

8. A user device comprising hardware and configured to perform the method of any one of claims 1 to 7.

9. A method performed by a radio access network, RAN, the method comprising:
assigning a dedicated configuration identifier to a configuration associated with (i) the candidate base station of the RAN, or a candidate cell of the RAN, in a conditional procedure that enables a user device to conditionally communicate with the candidate base station or via the candidate cell, and (ii) a condition to be satisfied before the user device can communicate with the candidate base station, or via the candidate cell, using the configuration; and
transmitting the configuration and the dedicated configuration identifier to the user device, which instructs the user device to (i) store the configuration as a new configuration, when the dedicated configuration identifier does not correspond to any pre-existing configuration stored in the user device, and (ii) use the configuration to modify a pre-existing configuration already stored at the user device, when the dedicated configuration identifier corresponds to the pre-existing configuration stored in the user device.

10. The method of claim 9, wherein the conditional procedure enables the user device to conditionally handover to the candidate cell.

11. The method of claim 10, wherein either:
(i) assigning the dedicated configuration identifier to the configuration includes assigning a value of an information element in a conditional handover command; or
(ii) assigning the dedicated configuration identifier to the configuration includes assigning a value in a message of a radio resource control, RRC, container that separately includes the conditional handover command; or
(iii) transmitting the configuration and the dedicated configuration identifier to the user device is performed by a first base station of the RAN; and the first candidate cell is associated with the first base station.

12. The method of claim 10, wherein:
transmitting the configuration and the dedicated configuration identifier to the user device is performed by a first base station of the RAN; and
the candidate cell is associated with a second base station of the RAN; and
optionally, wherein either:
(i) assigning the dedicated configuration identifier to the configuration is performed at the first base station; the method further comprises transmitting, by the first base station, a handover request including the dedicated configuration identifier to the second base station; and the method further comprises transmitting, by the second base station, a handover request acknowledgment including the configuration to the first base station; or
(ii) the method further comprises transmitting, by the first base station, a handover request to the second base station; assigning the dedicated configuration identifier to the configuration is performed at the second base station; and the method further comprises transmitting, by the second base station, a handover request acknowledgment including the configuration and the dedicated configuration identifier to the first base station.

13. The method of claim 9, wherein the conditional procedure enables the user device to conditionally add the candidate base station as a secondary node to operate in dual connectivity with a master node and the secondary node.

14. The method of claim 13, wherein assigning the dedicated configuration identifier to the configuration includes either:
(i) assigning a value of an information element of a conditional secondary node configuration message; or
(ii) assigning a value in a message of a radio resource control, RRC, container that separately includes the secondary node configuration message.

15. The method of claim 13, wherein:
transmitting the configuration and the dedicated configuration identifier to the user device is performed by a first base station of the RAN; and
optionally, wherein either:
(i) assigning the dedicated configuration identifier to the configuration is performed at the first base station; the method further comprises transmitting, by the first base station, a secondary node addition or change request including the dedicated configuration identifier to the candidate base station; and the method further comprises transmitting, by the candidate base station, a secondary node addition or change request acknowledgment including the configuration to the first base station; or
(ii) the method further comprises transmitting, by the first base station, a secondary node addition or change request to the candidate base station; assigning the dedicated configuration identifier to the configuration is performed at the candidate base station; and the method further comprises transmitting, by the candidate base station, a secondary node addition or change request acknowledgment including the configuration and the dedicated configuration identifier to the first base station.

16. The method of claim 13, wherein assigning the dedicated configuration identifier to the configuration is performed at a first base station of the RAN that is operating as a current secondary node; and
optionally, wherein either:
(i) the method further comprises transmitting, by the first base station, the configuration and the dedicated configuration identifier to a second base station of the RAN that is operating as a master node; and transmitting the configuration and the dedicated configuration identifier to the user device is performed by the second base station; or
(ii) transmitting the configuration and the dedicated configuration identifier to the user device is performed by the first base station.

17. The method of claim 16, further comprising:
transmitting, to the user device, a configuration release message that includes the dedicated configuration identifier, which instructs the user device to release the configuration.

18. The method of any one of claims 9 to 17, wherein the transmitting the configuration and the dedicated configuration identifier to the user device instructs the user device to (i) store the configuration as a new configuration, when the dedicated configuration identifier differs from any pre-existing configuration stored in the user device, and (ii) use the configuration to modify a pre-existing configuration already stored at the user device, when the dedicated configuration identifier does not differ from the pre-existing configuration stored in the user device.

19. A method, in a RAN, comprising:
maintaining a conditional configuration set, wherein the set includes all unreleased configurations associated with (i) a user device and (ii) conditions to be satisfied before the user device can communicate with a respective candidate base station, in accordance with a first type of conditional procedure;
determining to configure a first conditional procedure that enables the user device to conditionally communicate with a first candidate base station of the RAN or via a first candidate cell of the RAN;
causing the user device to replace (i) all pre-existing configurations that are stored in the user device and associated with conditions to be satisfied before the user device can communicate with particular candidate base stations, or via particular candidate cells, in accordance with the first type of conditional procedure with (ii) all configurations in the conditional configuration set.

20. A radio access network comprising hardware and configured to perform the method of any one of claims 9 to 19.

## Patentansprüche

1. Verfahren, durchgeführt durch eine Benutzervorrichtung, die mit einer Basisstation kommuniziert, wobei das Verfahren Folgendes umfasst:
Empfangen, von der Basisstation, (i) einer Konfiguration, die einer Bedingung zugeordnet ist, die zu erfüllen ist, bevor die Benutzervorrichtung unter Verwendung der Konfiguration mit einer Kandidaten-Basisstation oder über eine Kandidaten-Zelle kommunizieren kann, und (ii) einer dedizierten Konfigurationskennung, die zum Identifizieren der Konfiguration bestimmt ist;
Speichern der Konfiguration als eine neue Konfiguration in der Benutzervorrichtung, wenn die dedizierte Konfigurationskennung keiner bereits bestehenden Konfiguration entspricht, die in der Benutzervorrichtung gespeichert ist; und
Verwenden der Konfiguration, um eine bereits bestehende Konfiguration zu modifizieren, die bereits in der Benutzervorrichtung gespeichert ist, wenn die dedizierte Konfigurationskennung der bereits bestehenden Konfiguration entspricht, die in der Benutzervorrichtung gespeichert ist.

2. Verfahren nach Anspruch 1, wobei:
die Bedingung eine Bedingung ist, die zu erfüllen ist, bevor die Benutzervorrichtung eine Verbindungsübergabe an die Kandidaten-Zelle durchführen kann; und
das Empfangen der Konfiguration das Empfangen der Konfiguration in einem Befehl zur bedingten Verbindungsübergabe einschließt; und
wobei optional entweder:
(i) das Empfangen der dedizierten Konfigurationskennung das Empfangen der dedizierten Konfigurationskennung in einem Informationselement des Befehls zur bedingten Verbindungsübergabe einschließt; oder
(ii) das Empfangen der dedizierten Konfigurationskennung das Empfangen der dedizierten Konfigurationskennung in einer Nachricht eines Containers der Funkressourcensteuerung, RRC, einschließt, die den Befehl zur bedingten Verbindungsübergabe separat einschließt; oder
(iii) das Empfangen der Konfiguration und der dedizierten Konfigurationskennung von der Basisstation das Empfangen der Konfiguration und der dedizierten Konfigurationskennung von einer ersten verteilten Einheit der Basisstation einschließt; und die Kandidaten-Zelle einer zweiten verteilten Einheit der Basisstation zugeordnet ist.

3. Verfahren nach Anspruch 1, wobei:
die Bedingung eine Bedingung ist, die zu erfüllen ist, bevor die Benutzervorrichtung die Kandidaten-Basisstation als einen Sekundärknoten hinzufügen kann, um in zweifacher Konnektivität mit der Basisstation und der Kandidaten-Basisstation zu arbeiten; und
das Verfahren das Empfangen mindestens der Konfiguration in einer Nachricht zur bedingten Sekundärknotenkonfiguration von der Basisstation umfasst; und
wobei optional entweder:
(i) das Empfangen der dedizierten Konfigurationskennung das Empfangen der dedizierten Konfigurationskennung in einem Informationselement der Nachricht zur bedingten Sekundärknotenkonfiguration einschließt; oder
(ii) das Empfangen der dedizierten Konfigurationskennung das Empfangen der dedizierten Konfigurationskennung in einer Nachricht eines Containers der Funkressourcensteuerung, RRC, einschließt, die die Nachricht zur bedingten Sekundärknotenkonfiguration separat einschließt; oder
(iii) das Verfahren das Empfangen der Konfiguration und der dedizierten Konfigurationskennung von der Basisstation umfasst, während die Basisstation als ein Master-Knoten arbeitet, mit dem die Benutzervorrichtung in zweifacher Konnektivität betrieben wird; oder
(iv) das Verfahren das Empfangen der Konfiguration und der dedizierten Konfigurationskennung von der Basisstation umfasst, während die Basisstation als ein Sekundärknoten arbeitet, mit dem die Benutzervorrichtung in zweifacher Konnektivität betrieben wird.

4. Verfahren nach einem der Ansprüche 1 bis 3, ferner Folgendes umfassend:
wenn die Bedingung erfüllt ist, Durchführen einer Prozedur des wahlfreien Zugriffs, um entweder mit der Kandidaten-Basisstation oder mit einer der Kandidaten-Zelle zugeordneten Basisstation zu kommunizieren.

5. Verfahren nach Anspruch 1, ferner Folgendes umfassend:
Empfangen einer Konfigurationsfreigabenachricht, welche die dedizierte Konfigurationskennung einschließt, von der Basisstation oder einer anderen Basisstation; und
Freigeben der Konfiguration, als Antwort auf das Empfangen der Konfigurationsfreigabenachricht, welche die dedizierte Konfigurationskennung einschließt.

6. Verfahren nach einem der vorhergehenden Ansprüche, wobei das Verwenden der Konfiguration, um die bereits bestehende Konfiguration zu modifizieren, das Ersetzen mindestens eines Abschnitts der bereits bestehenden Konfiguration durch die Konfiguration, die einer zu erfüllenden Bedingung zugeordnet ist, umfasst.

7. Verfahren nach einem der vorhergehenden Ansprüche, wobei:
das Speichern der Konfiguration als die neue Konfiguration in der Benutzervorrichtung erfolgt, wenn sich die dedizierte Konfigurationskennung von einer beliebigen bereits bestehenden Konfiguration unterscheidet, die in der Benutzervorrichtung gespeichert ist; und
das Verwenden der Konfiguration, um die bereits bestehende Konfiguration zu modifizieren, die bereits in der Benutzervorrichtung gespeichert ist, erfolgt, wenn sich die dedizierte Konfigurationskennung nicht von der in der Benutzervorrichtung gespeicherten bereits bestehenden Konfiguration unterscheidet.

8. Benutzervorrichtung, Hardware umfassend und dafür konfiguriert, das Verfahren nach einem der Ansprüche 1 bis 7 durchzuführen.

9. Verfahren, durchgeführt durch ein Funkzugangsnetzwerk, RAN, wobei das Verfahren Folgendes umfasst:
Zuweisen einer dedizierten Konfigurationskennung zu einer Konfiguration, die (i) der Kandidaten-Basisstation des RAN oder einer Kandidaten-Zelle des RAN, in einer bedingten Prozedur, die es einer Benutzervorrichtung ermöglicht, bedingt mit der Kandidaten-Basisstation oder über die Kandidaten-Zelle zu kommunizieren, und (ii) einer Bedingung, die zu erfüllen ist, bevor die Benutzervorrichtung mit der Kandidaten-Basisstation oder über die Kandidaten-Zelle unter Verwendung der Konfiguration kommunizieren kann, zugeordnet ist; und
Übertragen der Konfiguration und der dedizierten Konfigurationskennung an die Benutzervorrichtung, welche die Benutzervorrichtung anweist, (i) die Konfiguration als eine neue Konfiguration zu speichern, wenn die dedizierte Konfigurationskennung keiner bereits bestehenden Konfiguration entspricht, die in der Benutzervorrichtung gespeichert ist, und (ii) die Konfiguration zu verwenden, um eine bereits bestehende Konfiguration zu modifizieren, die bereits an der Benutzervorrichtung gespeichert ist, wenn die dedizierte Konfigurationskennung der bereits bestehenden Konfiguration entspricht, die in der Benutzervorrichtung gespeichert ist.

10. Verfahren nach Anspruch 9, wobei die bedingte Prozedur der Benutzervorrichtung ermöglicht, eine bedingte Verbindungsübergabe an die Kandidaten-Zelle vorzunehmen.

11. Verfahren nach Anspruch 10, wobei entweder:
(i) das Zuweisen der dedizierten Konfigurationskennung zu der Konfiguration das Zuweisen eines Werts eines Informationselements in einem Befehl zur bedingten Verbindungsübergabe einschließt; oder
(ii) das Zuweisen der dedizierten Konfigurationskennung zu der Konfiguration das Zuweisen eines Werts in einer Nachricht eines Containers der Funkressourcensteuerung, RRC, einschließt, die den Befehl zur bedingten Verbindungsübergabe separat einschließt; oder
(iii) das Übertragen der Konfiguration und der dedizierten Konfigurationskennung an die Benutzervorrichtung durch eine erste Basisstation des RAN durchgeführt wird; und die erste Kandidaten-Zelle der ersten Basisstation zugeordnet ist.

12. Verfahren nach Anspruch 10, wobei:
das Übertragen der Konfiguration und der dedizierten Konfigurationskennung an die Benutzervorrichtung durch eine erste Basisstation des RAN durchgeführt wird; und
die Kandidaten-Zelle einer zweiten Basisstation des RAN zugeordnet wird; und
wobei optional entweder:
(i) das Zuweisen der dedizierten Konfigurationskennung zu der Konfiguration an der ersten Basisstation durchgeführt wird; das Verfahren ferner das durch die erste Basisstation erfolgende Übertragen einer Verbindungsübergabeanforderung, welche die dedizierte Konfigurationskennung einschließt, an die zweite Basisstation umfasst; und das Verfahren ferner das durch die zweite Basisstation erfolgende Übertragen einer Bestätigung der Verbindungsübergabeanforderung, welche die Konfiguration einschließt, an die erste Basisstation umfasst; oder
(ii) das Verfahren ferner das durch die erste Basisstation erfolgende Übertragen einer Verbindungsübergabeanforderung an die zweite Basisstation umfasst; das Zuweisen der dedizierten Konfigurationskennung zu der Konfiguration an der zweiten Basisstation durchgeführt wird; und das Verfahren ferner das durch die zweite Basisstation erfolgende Übertragen einer Bestätigung der Verbindungsübergabeanforderung, welche die Konfiguration und die dedizierte Konfigurationskennung einschließt, an die erste Basisstation umfasst.

13. Verfahren nach Anspruch 9, wobei die bedingte Prozedur der Benutzervorrichtung ermöglicht, die Kandidaten-Basisstation bedingt als einen Sekundärknoten hinzuzufügen, um in zweifacher Konnektivität mit einem Master-Knoten und dem Sekundärknoten zu arbeiten.

14. Verfahren nach Anspruch 13, wobei das Zuweisen der dedizierten Konfigurationskennung zu der Konfiguration entweder Folgendes einschließt:
(i) Zuweisen eines Werts eines Informationselements einer Nachricht zur bedingten Sekundärknotenkonfiguration; oder
(ii) Zuweisen eines Werts in einer Nachricht eines Containers der Funkressourcensteuerung, RRC, die die Nachricht zur Sekundärknotenkonfiguration separat einschließt.

15. Verfahren nach Anspruch 13, wobei:
das Übertragen der Konfiguration und der dedizierten Konfigurationskennung an die Benutzervorrichtung durch eine erste Basisstation des RAN durchgeführt wird; und
wobei optional entweder:
(i) das Zuweisen der dedizierten Konfigurationskennung zu der Konfiguration an der ersten Basisstation durchgeführt wird; das Verfahren ferner das durch die erste Basisstation erfolgende Übertragen einer Sekundärknoten-Hinzufügungs- oder Änderungsanforderung, welche die dedizierte Konfigurationskennung einschließt, an die Kandidaten-Basisstation umfasst; und das Verfahren ferner das durch die Kandidaten-Basisstation erfolgende Übertragen einer Sekundärknoten-Hinzufügungs- oder Änderungsanforderungsbestätigung, welche die Konfiguration einschließt, an die erste Basisstation umfasst; oder
(ii) das Verfahren ferner das durch die erste Basisstation erfolgende Übertragen einer Sekundärknoten-Hinzufügungs- oder -Änderungsanforderung an die Kandidaten-Basisstation umfasst; das Zuweisen der dedizierten Konfigurationskennung zu der Konfiguration an der Kandidaten-Basisstation durchgeführt wird; und das Verfahren ferner das durch die Kandidaten-Basisstation erfolgende Übertragen einer Sekundärknoten-Hinzufügungs- oder -Änderungsanforderungsbestätigung, welche die Konfiguration und die dedizierte Konfigurationskennung einschließt, an die erste Basisstation umfasst.

16. Verfahren nach Anspruch 13, wobei das Zuweisen der dedizierten Konfigurationskennung zu der Konfiguration an einer ersten Basisstation des RAN, die als ein aktueller Sekundärknoten arbeitet, durchgeführt wird; und
wobei optional entweder:
(i) das Verfahren ferner das durch die erste Basisstation erfolgende Übertragen der Konfiguration und der dedizierten Konfigurationskennung an eine zweite Basisstation des RAN, die als ein Master-Knoten arbeitet, umfasst; und das Übertragen der Konfiguration und der dedizierten Konfigurationskennung an die Benutzervorrichtung durch die zweite Basisstation durchgeführt wird; oder
(ii) das Übertragen der Konfiguration und der dedizierten Konfigurationskennung an die Benutzervorrichtung durch die erste Basisstation durchgeführt wird.

17. Verfahren nach Anspruch 16, ferner Folgendes umfassend:
Übertragen einer Konfigurationsfreigabenachricht, welche die dedizierte Konfigurationskennung einschließt, welche die Benutzervorrichtung anweist, die Konfiguration freizugeben, an die Benutzervorrichtung.

18. Verfahren nach einem der Ansprüche 9 bis 17, wobei das Übertragen der Konfiguration und der dedizierten Konfigurationskennung an die Benutzervorrichtung die Benutzervorrichtung anweist, (i) die Konfiguration als eine neue Konfiguration zu speichern, wenn sich die dedizierte Konfigurationskennung von einer beliebigen bereits bestehenden Konfiguration unterscheidet, die in der Benutzervorrichtung gespeichert ist, und (ii) die Konfiguration zu verwenden, um eine bereits bestehende Konfiguration zu modifizieren, die bereits an der Benutzervorrichtung gespeichert ist, wenn sich die dedizierte Konfigurationskennung nicht von der bereits bestehenden Konfiguration unterscheidet, die in der Benutzervorrichtung gespeichert ist.

19. Verfahren in einem RAN, Folgendes umfassend:
Beibehalten eines Satzes von bedingten Konfigurationen, wobei der Satz alle nicht freigegebenen Konfigurationen einschließt, die (i) einer Benutzervorrichtung und (ii) Bedingungen zugeordnet sind, die zu erfüllen sind, bevor die Benutzervorrichtung gemäß einem ersten Typ von bedingter Prozedur mit einer jeweiligen Kandidaten-Basisstation kommunizieren kann;
Bestimmen, eine erste bedingte Prozedur zu konfigurieren, die es der Benutzervorrichtung ermöglicht, bedingt mit einer ersten Kandidaten-Basisstation des RAN oder über eine erste Kandidaten-Zelle des RAN zu kommunizieren;
Veranlassen, dass die Benutzervorrichtung (i) alle bereits bestehenden Konfigurationen, die in der Benutzervorrichtung gespeichert und Bedingungen zugeordnet sind, die zu erfüllen sind, bevor die Benutzervorrichtung mit bestimmten Kandidaten-Basisstationen oder über bestimmte Kandidaten-Zellen kommunizieren kann, gemäß dem ersten Typ von bedingter Prozedur durch (ii) alle Konfigurationen in dem Satz von bedingten Konfigurationen ersetzt.

20. Funkzugangsnetzwerk, Hardware umfassend und dafür konfiguriert, das Verfahren nach einem der Ansprüche 9 bis 19 durchzuführen.

## Revendications

1. Procédé réalisé par un dispositif utilisateur qui communique avec une station de base, le procédé comprenant :
la réception, en provenance de la station de base, (i) d'une configuration associée à une condition à satisfaire avant que le dispositif utilisateur ne puisse communiquer avec une station de base candidate, ou *via* une cellule candidate, en utilisant la configuration, et (ii) d'un identifiant de configuration dédié qui est dédié à l'identification de la configuration ;
le stockage de la configuration en tant que nouvelle configuration dans le dispositif utilisateur lorsque l'identifiant de configuration dédié ne correspond pas à une quelconque configuration préexistante stockée dans le dispositif utilisateur ; et
l'utilisation de la configuration pour modifier une configuration préexistante déjà stockée dans le dispositif utilisateur lorsque l'identifiant de configuration dédié correspond à la configuration préexistante stockée dans le dispositif utilisateur.

2. Procédé selon la revendication 1, dans lequel :
la condition est une condition à satisfaire avant que le dispositif utilisateur ne puisse réaliser un transfert intercellulaire à la cellule candidate ; et
la réception de la configuration inclut la réception de la configuration dans une commande de transfert intercellulaire conditionnel ; et
optionnellement, dans lequel soit :
(i) la réception de l'identifiant de configuration dédié inclut la réception de l'identifiant de configuration dédié dans un élément d'information de la commande de transfert intercellulaire conditionnel ; soit
(ii) la réception de l'identifiant de configuration dédié inclut la réception de l'identifiant de configuration dédié dans un message d'un contenant de commande de ressources radio, RRC, qui inclut séparément la commande de transfert intercellulaire conditionnel ; soit
(iii) la réception de la configuration et de l'identifiant de configuration dédié en provenance de la station de base inclut la réception de la configuration et de l'identifiant de configuration dédié en provenance d'une première unité distribuée de la station de base ; et la cellule candidate est associée à une seconde unité distribuée de la station de base.

3. Procédé selon la revendication 1, dans lequel :
la condition est une condition à satisfaire avant que le dispositif utilisateur ne puisse ajouter la station de base candidate en tant que noeud secondaire pour fonctionner en double connectivité avec la station de base et la station de base candidate ; et
le procédé comprend la réception d'au moins la configuration dans un message de configuration de noeud secondaire conditionnelle en provenance de la station de base ; et
optionnellement, dans lequel soit :
(i) la réception de l'identifiant de configuration dédié inclut la réception de l'identifiant de configuration dédié dans un élément d'information du message de configuration de noeud secondaire conditionnelle ; soit
(ii) la réception de l'identifiant de configuration dédié inclut la réception de l'identifiant de configuration dédié dans un message d'un contenant de commande de ressources radio, RRC, qui inclut séparément le message de configuration de noeud secondaire conditionnelle ; soit
(iii) le procédé comprend la réception de la configuration et de l'identifiant de configuration dédié en provenance de la station de base tandis que la station de base fonctionne en tant que noeud maître avec lequel le dispositif utilisateur fonctionne en double connectivité ; soit
(iv) le procédé comprend la réception de la configuration et de l'identifiant de configuration dédié en provenance de la station de base tandis que la station de base fonctionne en tant que noeud secondaire avec lequel le dispositif utilisateur fonctionne en double connectivité.

4. Procédé selon l'une quelconque des revendications 1 à 3, comprenant en outre :
lorsque la condition est satisfaite, la réalisation d'une procédure d'accès aléatoire pour communiquer avec soit la station de base candidate, soit une station de base associée à la cellule candidate.

5. Procédé selon la revendication 1, comprenant en outre :
la réception, en provenance de la station de base ou d'une station de base différente, d'un message de libération de configuration qui inclut l'identifiant de configuration dédié ; et
en réponse à la réception du message de libération de configuration qui inclut l'identifiant de configuration dédié, la libération de la configuration.

6. Procédé selon l'une quelconque des revendications précédentes, dans lequel l'utilisation de la configuration pour modifier la configuration préexistante comprend le remplacement d'au moins une partie de la configuration préexistante par la configuration associée à une condition à satisfaire.

7. Procédé selon l'une quelconque des revendications précédentes, dans lequel :
le stockage de la configuration en tant que nouvelle configuration dans le dispositif utilisateur survient lorsque l'identifiant de configuration dédié est différent d'une quelconque configuration préexistante stockée dans le dispositif utilisateur ; et
l'utilisation de la configuration pour modifier la configuration préexistante déjà stockée dans le dispositif utilisateur survient lorsque l'identifiant de configuration dédié ne diffère pas de la configuration préexistante stockée dans le dispositif utilisateur.

8. Dispositif utilisateur comprenant du matériel et configuré pour réaliser le procédé selon l'une quelconque des revendications 1 à 7.

9. Procédé réalisé par un réseau d'accès radio, RAN, le procédé comprenant :
l'attribution d'un identifiant de configuration dédié à une configuration associée à (i) la station de base candidate du RAN, ou une cellule candidate du RAN, selon une procédure conditionnelle qui permet à un dispositif utilisateur de communiquer conditionnellement avec la station de base candidate, ou *via* la cellule candidate, et à (ii) une condition à satisfaire avant que le dispositif utilisateur ne puisse communiquer avec la station de base candidate, ou *via* la cellule candidate, en utilisant la configuration ; et
la transmission de la configuration et de l'identifiant de configuration dédié au dispositif utilisateur, qui donne l'ordre au dispositif utilisateur de (i) stocker la configuration en tant que nouvelle configuration, lorsque l'identifiant de configuration dédié ne correspond pas à une quelconque configuration préexistante stockée dans le dispositif utilisateur, et (ii) d'utiliser la configuration pour modifier une configuration préexistante déjà stockée au niveau du dispositif utilisateur lorsque l'identifiant de configuration dédié correspond à la configuration préexistante stockée dans le dispositif utilisateur.

10. Procédé selon la revendication 9, dans lequel la procédure conditionnelle permet au dispositif utilisateur de réaliser un transfert intercellulaire conditionnel à la cellule candidate.

11. Procédé selon la revendication 10, dans lequel soit :
(i) l'attribution de l'identifiant de configuration dédié à la configuration inclut l'attribution d'une valeur d'un élément d'information dans une commande de transfert intercellulaire conditionnel ; soit
(ii) l'attribution de l'identifiant de configuration dédié à la configuration inclut l'attribution d'une valeur dans un message d'un contenant de commande de ressources radio, RRC, qui inclut séparément la commande de transfert intercellulaire conditionnel ; soit
(iii) la transmission de la configuration et de l'identifiant de configuration dédié au dispositif utilisateur est réalisée par une première station de base du RAN ; et la première cellule candidate est associée à la première station de base.

12. Procédé selon la revendication 10, dans lequel :
la transmission de la configuration et de l'identifiant de configuration dédié au dispositif utilisateur est réalisée par une première station de base du RAN ; et
la cellule candidate est associée à une seconde station de base du RAN ; et
optionnellement, dans lequel soit :
(i) l'attribution de l'identifiant de configuration dédié à la configuration est réalisée au niveau de la première station de base ; le procédé comprend en outre la transmission, par la première station de base, d'une requête de transfert intercellulaire incluant l'identifiant de configuration dédié à la seconde station de base ; et le procédé comprend en outre la transmission, par la seconde station de base, d'un accusé de réception de requête de transfert intercellulaire incluant la configuration à la première station de base ; soit
(ii) le procédé comprend en outre la transmission, par la première station de base, d'une requête de transfert intercellulaire à la seconde station de base ; l'attribution de l'identifiant de configuration dédié à la configuration est réalisée au niveau de la seconde station de base ; et le procédé comprend en outre la transmission, par la seconde station de base, d'un accusé de réception de requête de transfert intercellulaire incluant la configuration et l'identifiant de configuration dédié à la première station de base.

13. Procédé selon la revendication 9, dans lequel la procédure conditionnelle permet au dispositif utilisateur d'ajouter conditionnellement la station de base candidate en tant que noeud secondaire pour fonctionner en double connectivité avec un noeud maître et le noeud secondaire.

14. Procédé selon la revendication 13, dans lequel l'attribution de l'identifiant de configuration dédié à la configuration inclut soit :
(i) l'attribution d'une valeur d'un élément d'information d'un message de configuration de noeud secondaire conditionnelle ; soit
(ii) l'attribution d'une valeur dans un message d'un contenant de commande de ressources radio, RRC, qui inclut séparément le message de configuration de noeud secondaire.

15. Procédé selon la revendication 13, dans lequel :
la transmission de la configuration et de l'identifiant de configuration dédié au dispositif utilisateur est réalisée par une première station de base du RAN ; et
optionnellement, dans lequel soit :
(i) l'attribution de l'identifiant de configuration dédié à la configuration est réalisée au niveau de la première station de base ; le procédé comprend en outre la transmission, par la première station de base, d'une requête d'ajout ou de modification de noeud secondaire incluant l'identifiant de configuration dédié à la station de base candidate ; et le procédé comprend en outre la transmission, par la station de base candidate, d'un accusé de réception de requête d'ajout ou de modification de noeud secondaire incluant la configuration à la première station de base ; soit
(ii) le procédé comprend en outre la transmission, par la première station de base, d'une requête d'ajout ou de modification de noeud secondaire à la station de base candidate ; l'attribution de l'identifiant de configuration dédié à la configuration est réalisée au niveau de la station de base candidate ; et le procédé comprend en outre la transmission, par la station de base candidate, d'un accusé de réception de requête d'ajout ou de modification de noeud secondaire incluant la configuration et l'identifiant de configuration dédié à la première station de base.

16. Procédé selon la revendication 13, dans lequel l'attribution de l'identifiant de configuration dédié à la configuration est réalisée au niveau d'une première station de base du RAN qui fonctionne en tant que noeud secondaire courant ; et
optionnellement, dans lequel soit :
(i) le procédé comprend en outre la transmission, par la première station de base, de la configuration et de l'identifiant de configuration dédié à une seconde station de base du RAN qui fonctionne en tant que noeud maître ; et la transmission de la configuration et de l'identifiant de configuration dédié au dispositif utilisateur est réalisée par la seconde station de base ; soit
(ii) la transmission de la configuration et de l'identifiant de configuration dédié au dispositif utilisateur est réalisée par la première station de base.

17. Procédé selon la revendication 16, comprenant en outre :
la transmission, au dispositif utilisateur, d'un message de libération de configuration qui inclut l'identifiant de configuration dédié, lequel donne l'ordre au dispositif utilisateur de libérer la configuration.

18. Procédé selon l'une quelconque des revendications 9 à 17, dans lequel la transmission de la configuration et de l'identifiant de configuration dédié au dispositif utilisateur donne l'ordre au dispositif utilisateur de (i) stocker la configuration en tant que nouvelle configuration, lorsque l'identifiant de configuration dédié diffère d'une quelconque configuration préexistante stockée dans le dispositif utilisateur, et (ii) d'utiliser la configuration pour modifier une configuration préexistante déjà stockée au niveau du dispositif utilisateur lorsque l'identifiant de configuration dédié ne diffère pas de la configuration préexistante stockée dans le dispositif utilisateur.

19. Procédé, dans un RAN, comprenant :
le maintien d'un ensemble de configurations conditionnelles, dans lequel l'ensemble inclut toutes les configurations non libérées associées à (i) un dispositif utilisateur et à (ii) des conditions à satisfaire avant que le dispositif utilisateur ne puisse communiquer avec une station de base candidate respective, conformément à un premier type de procédure conditionnelle ;
la détermination de configurer une première procédure conditionnelle qui permet au dispositif utilisateur de communiquer conditionnellement avec une première station de base candidate du RAN ou *via* une première cellule candidate du RAN ;
le fait d'amener le dispositif utilisateur à remplacer (i) toutes les configurations préexistantes qui sont stockées dans le dispositif utilisateur et qui sont associées à des conditions à satisfaire avant que le dispositif utilisateur ne puisse communiquer avec des stations de base candidates particulières, ou *via* des cellules candidates particulières, conformément au premier type de procédure conditionnelle par (ii) toutes les configurations dans l'ensemble de configurations conditionnelles.

20. Réseau d'accès radio comprenant du matériel et configuré pour réaliser le procédé selon l'une quelconque des revendications 9 à 19.
